Europäisches Patentamt

European Patent Office

Office européen des brevets

(19)

(11) Publication number: 0 492 515 A2

# EUROPEAN PATENT APPLICATION

(12)

(21) Application number: 91121976.4

(22) Date of filing: 20.12.91

(51) Int. Cl.5: G11B 7/12, G11B 7/135,
G11B 11/10

(30) Priority: 20.12.90 JP 411850/90
20.12.90 JP 411851/90
27.12.90 JP 415028/90

(43) Date of publication of application:
01.07.92 Bulletin 92/27

(84) Designated Contracting States:
AT BE CH DE DK ES FR GB GR IT LI NL SE

(71) Applicant: OMRON CORPORATION
10, Tsuchido-cho, Hanazono, Ukyo-ku,
Kyoto-shi, Kyoto 616(JP)

(72) Inventor: Hosokawa, Hayami, c/o Omron
Corporation
Intellectual Pty. Ctr., 20, Igadera,
Shimokaiinji
Nagaokakyo-shi, Kyoto 617(JP)
Inventor: Ohgaki, Tatsuo, c/o Omron
Corporation
Intellectual Pty. Ctr., 20, Igadera,
Shimokaiinji
Nagaokakyo-shi, Kyoto 617(JP)
Inventor: Horie, Noriyoshi, c/o Omron

Corporation
Intellectual Pty. Ctr., 20, Igadera,
Shimokaiinji
Nagaokakyo-shi, Kyoto 617(JP)
Inventor: Kiyomoto, Hironobu, c/o Omron
Corporation
Intellectual Pty. Ctr., 20, Igadera,
Shimokaiinji
Nagaokakyo-shi, Kyoto 617(JP)
Inventor: Tomita, Kouhei, c/o Omron
Corporation
Intellectual Pty. Ctr., 20, Igadera,
Shimokaiinji
Nagaokakyo-shi, Kyoto 617(JP)
Inventor: Kitajima, Hiroshi, c/o Omron
Corporation
Intellectual Pty. Ctr., 20, Igadera,
Shimokaiinji
Nagaokakyo-shi, Kyoto 617(JP)

(74) Representative: WILHELMS, KILIAN &
PARTNER Patentanwälte
Eduard-Schmid-Strasse 2
W-8000 München 90(DE)

(54) Optical pick-up apparatus.

(57) Glass plates (14) and (15) are provided between a semiconductor laser (11) and a condensing optical system, which comprises a collimating lens (12) and an objective lens (13), at an inclination with respect to the optic axis. The glass plates (14) and (15) are inclined in a such a direction that line segments, which are produced by intersection between a plane perpendicular to the optic axis and the transparent plates, will be substantially perpendicular to each other. The divergent light emitted by the semiconductor laser (11) is condensed upon a photomagnetic disk (30) by the condensing optical system. Reflected light from the photomagnetic disk (30) is condensed by the condensing optical system, during which time a greater quantity of mutually perpendicular polarized light components are reflected by respective ones of the glass plates (14), (15) and the light is received by respective photodetectors (21), (22) through analyzers (31), (32) which pass the mutually perpendicular polarized light components. A data read signal, a tracking error signal and a focusing error signal are produced based upon output signals from the photodetectors (21), (22).

# Fig.6

## BACKGROUND OF THE INVENTION

Field of the Invention:

This invention relates to an optical pick-up apparatus for recording/playback of information on an optical recording medium.

In the present invention, the term "optical recording medium" covers not only such media as optical disks and optical cards but also photomagnetic recording media such as photomagnetic disks and photomagnetic cards.

Further, the recording/playback of information in the present invention in intended to include the recording of information on an optical recording medium, the playback of information that has been recorded on an optical recording medium, and both the recording and playback of such information.

Description of the Prior Art:

An optical pick-up apparatus according to the prior art comprises a first optical system for collimating divergent light from a semiconductor laser, a second optical system for condensing the collimated light on an optical recording medium and collimating reflected light from the optical recording medium, a first polarization beam splitter for polarizing and separating the reflected light collimated by the second optical system, a second polarization beam splitter for further separating the polarized and separated light into a beam of light for tracking control and a beam of light for focusing control, a third optical system for further condensing the separated beams of light on the light-receiving surface of a photodetector for tracking control, a fourth optical system for condensing the separated beams of light on the light-receiving surface of a photodetector for focusing control, and a fifth optical system provided in the third or fourth optical system for introducing light to a photodetector that is for obtaining a read signal.

The conventional optical pick-up apparatus of this kind employs a large number of optical components and therefore is of great weight. A problem which results is a lengthy access time. Further, owing to use of a large number of optical components, the cost ascribable to these components is high, assembly and adjustment require time and labor, and the final cost of the apparatus is high as a result.

## SUMMARY OF THE INVENTION

The present invention seeks to achieve a large-scale reduction in the size, weight and cost of an optical pick-up apparatus.

The present invention further seeks to provide photodetectors and optical devices suited to the construction of such a novel optical pick-up apparatus.

According to a first aspect of the present invention, there is provided an optical pick-up apparatus having a light-emitting element and a condensing optical system for condensing divergent light, which is emitted by the light-emitting element, on an optical recording medium and condensing reflected light from the optical recording medium, characterized by comprising at least two transparent plates (e.g., dielectric plates), which are disposed on an optical path of the divergent light between the light-emitting element and the condensing optical system at an inclination with respect to an optic axis of the condensing optical system, for transmitting some and reflecting some of the light incident thereon, and at least two photodetectors for receiving light that has been transmitted or reflected by the transparent plates, the received light being part of the light that has been reflected by the optical recording medium and condensed by the condensing optical system.

The divergent light emitted by the light-emitting element is condensed on the optical recording medium by the condensing optical system. The reflected light from the optical recording medium is condensed by the condensing optical system, and some of this light is transmitted or reflected by the transparent plates so as to be received by at least two photodetectors. A tracking error signal and a focusing error signal are produced from output signals delivered by the at least two photodetectors. In case of playback, a read signal indicative of information is obtained based upon an output signal or signals from one or both of the at least two photodetectors. In a case where the optical recording medium is a photomagnetic recording medium, analyzers whose directions of polarization differ by 90° are disposed in front of the at least two photodetectors and the angle of rotation of the plane of polarization of the reflected light, which is due to the recorded information, is detected.

In accordance with the first aspect of the present invention, an optical pick-up apparatus having the minimum required optical components is realized by disposing at least two transparent plates between a

3

light-emitting element and a condensing optical system. As a result, the apparatus can be reduced in size and weight.

In the optical pick-up apparatus according to the first aspect of the invention, the essential optical components are the light-emitting element, the condensing optical system, the transparent plates and the photodetectors. In case of a photomagnetic recording medium, it will suffice to provide the apparatus with analyzers. By virtue of the small number of components, a large-scale reduction in price can be achieved.

According to a second aspect of the present invention, there is provided an optical pick-up apparatus having a light-emitting element and a condensing optical system for condensing divergent light, which is emitted by the light-emitting element, on a photomagnetic recording medium and condensing reflected light from the photomagnetic recording medium, characterized by comprising one set of at least two transparent plates (e.g., dielectric plates), which are disposed on an optical path of the divergent light between the light-emitting element and the condensing optical system at an inclination with respect to an optic axis of the condensing optical system, for transmitting some and reflecting some of the light incident thereon, and at least two photodetectors for receiving light that has been reflected by respective ones of the transparent plates, the received light being part of the light that has been reflected by the photomagnetic recording medium and condensed by the condensing optical system, wherein the transparent plates of the one set are inclined in a such a direction that line segments, which are produced by intersection between a plane perpendicular to the optic axis and the transparent plates, will be substantially perpendicular to each other.

Preferably, the angle of inclination of the transparent plates is set to the Brewster angle, which is that angle at which a polarized light component having a specific plane of polarization is totally transmitted by the transparent plate.

If necessary, analyzers whose directions of polarization differ by 90° are placed in front of the respective photodetectors.

The divergent light emitted by the light-emitting element is condensed on the photomagnetic recording medium by the condensing optical system. The reflected light from the photomagnetic recording medium is condensed by the condensing optical system, and some of this light is reflected by the transparent plates so as to be received by at least two photodetectors.

The reading of information that has been recorded on the photomagnetic recording medium is carried out by detecting a change (the Kerr effect) in the rotational angle of the plane of polarization of the reflected light from the photomagnetic recording medium.

When light is obliquely incident upon one surface of a transparent plate, the reflectivity and transmittance of the transparent plate possess selectivity with respect to the plane of polarization, and there is an angle of incidence (the Brewster angle) at which reflectivity is 0% and transmittance 100% with respect to a light of a specific polarization component.

By setting up two transparent plates so as to be inclined in the above-mentioned manner, it can be so arranged that the two beams of reflected light contain only polarized light components that are mutually perpendicular or many of these components.

Accordingly, without relying upon the aforementioned analyzers, or by using them in a supplemenary manner, light components having mutually perpendicular planes of polarization contained in the reflected light from the photomagnetic recording medium can be detected by the photodetectors. As a result, an information read signal can be produced based upon output signals from the two photodetectors.

A tracking error signal and a focusing error signal are obtained from the at least two photodetectors.

In accordance with the second aspect of the present invention, an optical pick-up apparatus having the minimum required optical components is realized by disposing at least two transparent plates between a light-emitting element and a condensing optical system. As a result, the apparatus can be reduced in size and weight.

In the optical pick-up apparatus according to the second aspect of the invention, the essential optical components are the light-emitting element, the condensing optical system, the transparent plates and the photodetectors. Analyzers may be provided if necessary. By virtue of the small number of components, a large-scale reduction in price can be achieved.

According to a third aspect of the present invention, there is provided an optical pick-up apparatus having a light-emitting element and a condensing optical system for condensing divergent light, which is emitted by the light-emitting element, on a photomagnetic recording medium and condensing reflected light from the photomagnetic recording medium, characterized by comprising one set of at least two transparent plates, which are disposed on an optical path of the divergent light between the light-emitting element and the condensing optical system at an inclination with respect to an optic axis of the condensing optical system, for transmitting some and reflecting some of the light incident thereon, a photodetector for receiving light that has been reflected by one of the transparent plates, and a photodetector for receiving light that has been transmitted by the other of the transparent plates, the received light being part of the light that has been reflected by the photomagnetic recording medium and condensed by the condensing optical system, wherein the transparent plates of the one set are inclined in a such a direction that line segments, which are produced by intersection between a plane perpendicular to the optic axis and the transparent plates, will be substantially parallel to each other.

The optical pick-up apparatus also in accordance with the third aspect of the present invention can be reduced in size and weight just as in the second aspect of the invention.

The optical pick-up apparatus according to the second and third aspects of the present invention is suited to recording/playback of a photomagnetic recording medium.

In the first, second and third aspects of the present invention, the transparent plates are arranged at an inclination with respect to the optic axis on the optical path along which the reflected light from the optical recording medium converges. Since the transparent plates have a finite thickness, reflection of incident light takes plates at the top and bottom surfaces of the transparent plates. The beams of reflected light from the top and bottom surfaces of the transparent plates both impinge upon the photodetectors.

Each photodetector includes photodiodes generally partitioned into a plurality of sections. A focusing error signal, tracking error signal and information read signal are produced based upon output signals from these photodiodes. Accordingly, there are instances where the above-mentioned error signals and read signal are adversely affected by positions at which the two reflected light beams are incident, the sizes of the light beams, etc.

A fourth aspect of the present invention proposes an arrangement and construction in which a correct focusing error signal, tracking error signal and read signal are obtained even when two reflected light beams impinge upon a photodetector.

The fourth aspect of the present invention is characterized in that the photodetector in the above-described first, second and third aspects of the present invention includes light-receiving elements partitioned into at least three sections by straight lines and is so arranged that a spot produced by reflected light from a top surface and a spot produced by reflected light from a bottom surface of the corresponding transparent plate will line up along the straight lines partitioning the light-receiving elements. The transparent plate has a thickness set in a range such that the spot produced by reflected light from the top surface thereof and the spot produced by reflected light from the bottom surface thereof do not overlap on the light-receiving surfaces of the light-receiving elements and the diameter of the smaller of the two spots produced by the reflected light is larger than the width of a centrally located one of the light-receiving elements.

If the thickness of the transparent plate is small, the spot of reflected light from the top surface of the transparent plate and the spot of reflected light from the bottom surface thereof will overlap on the light-receiving surface of the corresponding photodetector. Interference fringes are produced when the two beams of light overlap and they are changed by temperature and by fluctuations in wavelength. Accordingly, the aforementioned error signals and read signal become unstable.

If the thickness of the transparent plate is large, the diameter of one of the two beam spots of reflected light from the top and bottom surfaces of the transparent plate becomes very small. This spot of reflected light will impinge solely upon the central light-receiving element of those partitioned into at least three sections and will not impinge upon the other light-receiving elements. Since the aforementioned signals are produced by addition/subtraction of the output signals from the plurality of light-receiving elements, the results of the addition/subtraction operations are adversely affected when the reflected light impinges solely upon one specific light-receiving element, and correct signals cannot be obtained in such case.

In accordance with the fourth aspect of the invention, the thickness of each transparent plate is set within a range wherein the two beam spots of reflected light from the top and bottom surfaces of the transparent plate will not overlap on the light-receiving surface, and wherein the diameter of the smaller of the two beam spots will be larger than the width of the central light-receiving element. As a result, the aforementioned problems do not occur and an accurate focusing error signal, tracking error signal and read signal (but especially the focusing error signal) can be obtained at all times.

Furthermore, since the two spots of reflected light line up in the direction of the partitioning lines of the light-receiving elements, the spots contribute to all of the light-receiving elements in the same way. As a result, the aforementioned signals are obtained correctly since no error is produced.

A fifth aspect of the present invention relates to an arrangement which amplifies the rotational angle of the plane of polarization of reflected light from a photomagnetic recording medium.

The fifth aspect of the present invention is characterized in that the optical pick-up apparatus according to second or third aspect of the invention further comprises two analyzers disposed between respective ones of the transparent plates and the photodetectors corresponding thereto for transmitting beams of light having directions of polarization which are mutually perpendicular and each of which forms an angle of 45° with a direction of polarization of the light projected upon the photomagnetic recording medium, wherein the transparent plates are provided with coatings having reflectivities and transmittances decided for respective ones of the two perpendicular directions of polarization in such a manner that an angle of rotation of a plane of polarization of light, which has been reflected or transmitted by the respective transparent plate to impinge upon the respective photodetector, with respect to the light projected upon the photomagnetic recording medium becomes larger than an angle of rotation of a plane of polarization of light reflected from the photomagnetic recording medium, that intensities of the two beams of light which impinge upon the respective photodetectors are rendered substantially equal, and that angles of rotation of the planes of polarization of these two light beams are rendered substantially equal.

The reading of information that has been recorded on the photomagnetic recording medium is carried out by detecting a change (the Kerr effect) in the rotational angle of the plane of polarization of the reflected light from the photomagnetic recording medium. The change in the rotational angle of the plane of polarization developed by the photomagnetic recording medium is amplified by the coatings provided on the transparent plates, and beams of light exhibiting this amplified change in the rotational angle of the plane of polarization impinge upon the respective photodetectors. Moreover, the two beams of light that impinge upon the respective photodetectors are such that their intensities are substantially equal as well as the changes in the rotational angles of the planes of polarization.

Accordingly, by detecting the aforementioned two beams of light by photodetectors through the intermediary of analyzers which transmit only light having directions of polarization which are mutually perpendicular and form angles of 45° with respect to the direction of polarization of the light projected upon the photomagnetic recording medium, light components having mutually perpendicular planes of polarization contained in the reflected light from the photomagnetic recording medium can be detected. As a result, an information read signal can be produced based upon output signals from the two photodetectors.

In accordance with the fifth aspect of the present invention, a change in the rotational angle of a plane of polarization caused in the reflected light from the photomagnetic recording medium is amplified, and therefore a read signal having a high S/N ratio can be obtained.

The optical pick-up apparatus according to the above-described first through fifth aspects of the invention all include at least two transparent plates.

An aspect of the present invention relating to an optical pick-up apparatus having a construction in which at least one transparent plate will suffice will now be described.

According to a sixth aspect of the present invention, there is provided an optical pick-up apparatus having a light-emitting element and a condensing optical system for condensing divergent light, which is emitted by the light-emitting element, on an optical recording medium and condensing reflected light from the optical recording medium, characterized by comprising at least one transparent plate disposed on an optical path of the divergent light between the light-emitting element and the condensing optical system at an inclination with respect to an optic axis of the condensing optical system, and photodetecting means having at least two light-receiving surfaces for separately receiving respective beams of light that have been been reflected by top and bottom surfaces, respectively, of the transparent plate, the received light being part of the light that has been reflected by the optical recording medium and condensed by the condensing optical system.

The divergent light emitted by the light-emitting element is condensed on the optical recording medium by the condensing optical system. The reflected light from the optical recording medium is condensed by the condensing optical system, some of this light is reflected by the top surface of transparent plate, and some of the remaining light is reflected by the bottom surface of the transparent plate so as to be received by photodetecting means having at least two light-receiving surfaces. A tracking error signal and a focusing error signal are obtained from signals, which are produced by the photodetecting means, indicative of the light received by the at least two light-receiving surfaces. In case of playback, a read signal indicative of information is obtained based upon one or both of the output signals, which are produced by the photodetecting means, indicative of the light received by the at least two light-receiving surfaces. In a case where the optical recording medium is a photomagnetic recording medium, analyzers whose directions of polarization differ by 90° are disposed in front of the at least two light-receiving surfaces and the angle of rotation of the plane of polarization of the reflected light, which is due to the recorded information, is detected.

In accordance with the sixth aspect of the present invention, an optical pick-up apparatus having the minimum required optical components is realized by disposing at least one transparent plate between a light-emitting element and a condensing optical system. As a result, the apparatus can be reduced in size and weight.

In the optical pick-up apparatus according to the sixth aspect of the invention, the essential optical components are the light-emitting element, the condensing optical system, the transparent plate and the photodetector. In case of a photomagnetic recording medium, it will suffice to provide the apparatus with analyzers. This makes it possible to greatly reduce cost. In particular, since one transparent plate is sufficient, an even greater simplification in the apparatus is achieved.

A seventh aspect of the present invention relates to an optical pick-up apparatus having a device for magnifying the angle of rotation of polarized light.

According to the seventh aspect of the present invention, there is provided an optical pick-up apparatus having a light-emitting element and a condensing optical system for condensing divergent light, which is emitted by the light-emitting element, on an optical recording medium and condensing reflected light from the optical recording medium, characterized by comprising at least one transparent plate disposed on an optical path of the divergent light between the light-emitting element and the condensing optical system at an inclination with respect to an optic axis of the condensing optical system, photodetecting means having at least two light-receiving surfaces for separately receiving respective beams of light that have been been reflected by top and bottom surfaces, respectively, of the transparent plate, the received light being part of the light that has been reflected by the optical recording medium and condensed by the condensing optical system, and two analyzers disposed between respective ones of the light-receiving surfaces of the photodetecting means and respective ones of the top and bottom surfaces of the transparent plate for transmitting beams of light having directions of polarization which are mutually perpendicular and each of which forms an angle of 45° with a direction of polarization of the light projected upon the optical recording medium. The top and bottom surfaces of the transparent plate are provided with coatings having reflectivities and transmittances decided for respective ones of two perpendicular directions of polarization in such a manner that angles of rotation of planes of polarization of light, which has been reflected by the top and bottom surfaces of the transparent plate to impinge upon respective ones of the two light-receiving surfaces of the photodetecting means, with respect to the light projected upon the optical recording medium become larger than an angle of rotation of a plane of polarization of light reflected from the optical recording medium, that intensities of the two beams of light which impinge upon the respective ones of the light-receiving surfaces are rendered substantially equal, and that angles of rotation of the planes of polarization of these two light beams are rendered substantially equal.

The seventh aspect of the invention provides an optical pick-up apparatus is suited to a photomagnetic recording medium such as a photomagnetic disk or photomagnetic card. When the light projected upon the photomagnetic recording medium is reflected, the direction of the polarization is rotated by the information that has been recorded on the recording medium. In accordance with the seventh aspect of the present invention, the rotational angle of polarization of the light incident upon the two light-receiving surfaces of the photodetecting means is amplified by the coatings provided on the transparent plate.

In accordance with the seventh aspect of the invention, therefore, the read signal indicative of the information that has been recorded on the photomagnetic recording medium can be produced at a high S/N ratio, thus making possible highly precise, stable reading of information.

An eighth aspect of the present invention relates to a device for magnifying the angle of rotation of polarized light in an optical pick-up apparatus.

The eighth aspect of the present invention is characterized in that an optical pick-up apparatus having a light-emitting element and a condensing optical system for condensing divergent light, which is emitted by the light-emitting element, on an optical recording medium and condensing reflected light from the optical recording medium, is provided with at least one transparent plate disposed on an optical path of the divergent light between the light-emitting element and the condensing optical system at an inclination with respect to an optic axis of the condensing optical system, and one surface of the transparent plate, which is either a top surface or a bottom surface, is provided with a coating having reflectivity and transmittance decided for respective ones of two perpendicular directions of polarization in such a manner that an angle of rotation of a plane of polarization of light, which has been reflected by the one surface of the transparent plate, with respect to the light projected upon the optical recording medium becomes larger than an angle of rotation of a plane of polarization of light reflected from the optical recording medium.

The reflected light from the one surface of the transparent plate is split into two beams by a beam splitter or the like, and two components whose directions of polarization are mutually perpendicular can be extracted from these two beams of light. Alternatively, as in the seventh aspect of the invention, the top and bottom surfaces of the transparent plate may be provided with coatings having reflectivities and transmittances decided for respective ones of two perpendicular directions of polarization in such a manner that angles of rotation of planes of polarization of light, which has been reflected by the top and bottom surfaces of the transparent plate to impinge upon respective ones of two light-receiving surfaces of photodetecting means, with respect to the light projected upon the optical recording medium become larger than an angle

7

of rotation of a plane of polarization of light reflected from the optical recording medium, that intensities of the two beams of light which impinge upon the respective ones of the light-receiving surfaces are rendered substantially equal, and that angles of rotation of the planes of polarization of these two light beams are rendered substantially equal. Then, two mutually perpendicular components may be extracted from the two beams of reflected light from the top and bottom surfaces of the transparent plate.

Since the angle of rotation of polarization is amplified also in the eighth aspect of the present invention, a stable information signal can be obtained by applying the device according this aspect of the invention to an optical pick-up apparatus for a photomagnetic recording medium.

Described next will be an arrangement in which a stable focusing error signal can be obtained at all times, irrespective of any tracking error, by making effective use of light reflected from the top and bottom surfaces of a transparent plate provided in the optical system of an optical pick-up apparatus, or by specially designing the construction of photodetecting means.

According to a ninth embodiment of the present invention, there is provided an optical pick-up apparatus having a light-emitting element and a condensing optical system for condensing divergent light, which is emitted by the light-emitting element, on an optical recording medium and condensing reflected light from the optical recording medium, characterized by comprising a transparent plate disposed on an optical path of the divergent light between the light-emitting element and the condensing optical system at an inclination with respect to an optic axis of the condensing optical system, and photodetecting means for receiving light that has been been reflected by top and bottom surfaces of the transparent plate, the received light being part of the light that has been reflected by the optical recording medium and condensed by the condensing optical system, wherein the photodetecting means has first and second mutually independent light-receiving areas for receiving light reflected by respective ones of the top and bottom surfaces of the transparent plate, the first light-receiving area is partitioned into at least three mutually independent comparatively small zones by partitioning lines extending in a direction perpendicular to tracks of the optical recording medium, and the second light-receiving area is partitioned into at least two mutually independent comparatively small zones by partitioning lines extending in the direction of the tracks of the optical recording medium.

In order to detect focusing error, the apparatus is further provided with means for producing a focusing error signal by the beam-size method based upon light-reception signals obtained from at least three comparatively small zones in the first light-receiving area.

In order to detect tracking error, the apparatus is further provided with means for producing a tracking error signal as by the push-pull method based upon light-reception signals obtained from at least two comparatively small zones in the second light-receiving area.

The apparatus is further provided with means for producing a read signal based upon an output signal from the photodetecting means.

In an embodiment of the ninth aspect of the present invention, two transparent plates are disposed on the optical path of the divergent light between the light-emitting element and the condensing optical system at an inclination with respect to the optic axis of the condensing optical system, and two photodetecting means are provided to correspond to respective ones of the two transparent plates.

In order to detect focusing error by the double-beam size method, the two photodetecting means are disposed in front of and in back of the focal points of the reflected light from the transparent plates. The apparatus is further provided with means for producing the focusing error signal based upon light-reception signals obtained respectively from the first light-receiving areas of the two photodetecting means.

The apparatus is further provided with means for producing a read signal based upon output signals from the two photodetecting means.

In accordance with the ninth aspect of the present invention, the photodetecting means is provided with two mutually independent light-receiving areas, and the light-receiving areas respectively receive reflected light from the top and bottom surfaces of the transparent plates.

The first light-receiving area is used in order to produce the focusing error signal and is partitioned into at least three mutually independent comparatively small zones by partitioning lines extending in a direction perpendicular to the tracks on the optical recording medium. The focusing error is detected by the beam-size method or double-beam size method based upon light-reception signals from these comparatively small zones. Of the reflected light from the top or bottom surface of the transparent plate, the spot of the light incident upon the first light-receiving area is merely moved in the direction of the partitioning lines of the small zones on the first light-receiving area even if the condensed beam projected upon the optical recording medium by the condensing optical system wavers in the tracking direction (in the direction perpendicular to the tracks). Thus the focus error signal produced is not affected by tracking error. Accordingly, accurate and stable detection of focusing error is possible at all times.

The second light-receiving area is used in order to produce the tracking error signal and is partitioned into at least two mutually independent comparatively small zones by partitioning lines extending in the direction of the tracks of the optical recording medium. The tracking error signal is produced as by the push-pull method based upon light-reception signals obtained from these small zones. Tracking error is detected independently of focusing error.

According to a 10th aspect of the present invention, there is provided an optical pick-up apparatus having a light-emitting element and a condensing optical system for condensing divergent light, which is emitted by the light-emitting element, on an optical recording medium and condensing reflected light from the optical recording medium, characterized by comprising a transparent plate disposed on an optical path of the divergent light between the light-emitting element and the condensing optical system at an inclination with respect to an optic axis of the condensing optical system, and photodetecting means for receiving light that has been been reflected or transmitted by the transparent plate, the received light being part of the light that has been reflected by the optical recording medium and condensed by the condensing optical system, the photodetecting means having at least six mutually independent comparatively small zones partitioned by at least two partitioning lines extending in a direction perpendicular to tracks of the optical recording medium and at least one partitioning line extending in the direction of the tracks.

According to a 11th aspect of the present invention, there is provided an optical pick-up apparatus having a light-emitting element and a condensing optical system for condensing divergent light, which is emitted by the light-emitting element, on an optical recording medium and condensing reflected light from the optical recording medium, characterized by comprising a transparent plate disposed on an optical path of the divergent light between the light-emitting element and the condensing optical system at an inclination with respect to an optic axis of the condensing optical system, and photodetecting means for receiving light that has been been reflected by top and bottom surfaces of the transparent plate, the received light being part of the light that has been reflected by the optical recording medium and condensed by the condensing optical system, the photodetecting means having two mutually independent light-receiving areas for receiving light reflected by respective ones of the top and bottom surfaces of the transparent plate, each light-receiving area being partitioned into at least six mutually independent comparatively small zones by at least two partitioning lines extending in a direction perpendicular to tracks of the optical recording medium and at least one partitioning line extending in the direction of the tracks.

The 10th aspect of the invention utilizes reflected light from either the top or bottom surface of the transparent plate. On the other hand, the 11th aspect of the invention utilizes reflected light from both the top and bottom surfaces of the transparent plate.

In order to detect focusing error, the apparatus in both the 10th and 11th aspects of the present invention is provided with means for producing a focusing error signal by the beam-size method based upon a light-reception signal obtained for each group of the comparatively small zones partitioned by at least two partitioning lines extending in the direction perpendicular to the tracks of the optical recording medium.

In order to detect tracking error, the apparatus is provided with means for producing a tracking error signal as by the push-pull method based upon a light-reception signal obtained for each group of the comparatively small zones partitioned by at least one partitioning line extending in the direction of the tracks of the optical recording medium.

The apparatus is further provided with means for producing a read signal based upon output signals from the photodetecting means.

In embodiments of the 10th and 11th aspects of the present invention, two transparent plates are disposed on the optical path of the divergent light between the light-emitting element and the condensing optical system at an inclination with respect to the optic axis of the condensing optical system, and two photodetecting means are provided to correspond to respective ones of the two transparent plates.

In order to detect focusing error by the double-beam size method, the two photodetecting means are disposed in front of and in back of the focal points of the reflected light from the transparent plates. The apparatus is further provided with means for producing the focusing error signal based upon light-reception signals obtained for each group of the comparatively small zones, which are partitioned by at least two partitioning lines extending in the direction perpendicular to the tracks, in the two photodetecting means.

The apparatus is further provided with means for producing a read signal based upon output signals from the two photodetecting means.

In accordance with the 10th and 11th aspects of the present invention, the photodetecting means or each light-receiving area has at least six mutually independent comparative small areas partitioned by at least two partitioning lines extending in a direction perpendicular to the tracks of the optical recording medium and at least one partitioning line extending in the direction of the tracks.

The focusing error signal is detected by the beam-size method or the double-beam size method based upon light-reception signals obtained for each group of the comparatively small zones partitioned by at least two partitioning lines extending in the direction perpendicular to the track direction. The spot of light on the light-receiving surface or light-receiving area of the photodetecting means is merely moved in the direction of the partitioning lines extending in the direction perpendicular to the tracks even if the condensed beam projected upon the optical recording medium by the condensing optical system wavers in the tracking direction (in the direction perpendicular to the tracks). Thus the light-reception signal of every group of small zones partitioned by the partitioning lines is not influenced. In other words, the focusing error signal produced is not influenced by tracking error of the projected light beam, and accurate, stable detection of focusing error is possible at all times.

Tracking error is detected, as by the push-pull method, based upon light-reception signals obtained for each group of the small zones partitioned by at least one partitioning line extending in the track direction. Tracking error is detected independently of focusing error.

In the 11th aspect of the present invention, reflected light from both the top and bottom surfaces of the transparent plate is utilized. This means that the quantity of light received by the photodetecting means is approximately twice that in the 10th aspect of the present invention. As a result, sensitivity is raised and the signals are stabilized.

In accordance with the 9th, 10th and 11th aspects of the present invention, an optical pick-up apparatus having the minimum required optical components is realized by disposing one or two transparent plates between a light-emitting element and a condensing optical system. As a result, the apparatus can be reduced in size and weight.

Light emitted by a semiconductor laser (laser diode) has different angles of spread in two directions perpendicular to the optic axis, and the beam pattern (the pattern of the cross section perpendicular to the optic axis) is an ellipse. In a case where the divergent light emitted by such a semiconductor laser is collimated using a lens, the intensity distribution of the collimated light in a cross section perpendicular to the optic axis is non-uniform, particularly on concentric circles centered on the optic axis. Accordingly, even if the collimated light is converged by a lens, the converged spot will be elliptical and not circular. Accordingly, it is unsuitable to use such a converged spot for recording/playback of an optical recording medium.

A beam-shaping prism is used in order to shape divergent light, which has an elliptical cross section whose angle of spread differs depending upon direction, as in the manner of light emitted from a semiconductor laser, into light having a circular cross section. Since an optical pick-up apparatus for recording/playback of an optical recording medium is required to be as small in size and light in weight as possible, use of a beam-shaping prism is not always desirable.

An optical device is provided in which a suitable circular beam can be obtained without using a beam-shaping prism. The device is particularly ideal for use in an optical pick-up apparatus.

According to a 12th aspect of the present invention, there is provided an optical device characterized by comprising a light-emitting element for emitting divergent light with angles of spread that differ in two directions perpendicular to an optic axis, an optical system for collimating or condensing the divergent light emitted by the light-emitting element, and a transparent plate disposed on an optical path of the divergent light between the light-emitting element and the optical system at an inclination with respect to the optic axis of the optical system, the transparent plate having a transmittance distribution for controlling the intensity of transmitted light in such a manner that an intensity distribution in a cross section of the light collimated or condensed by the optical system is substantially uniform on concentric circles having the optic axis at the center thereof.

In accordance with the 12th aspect of the present invention, the intensity distribution of light transmitted by the transparent plate, which is disposed on the optical path of the divergent light emitted by the light-emitting element and at an inclination with respect to the optic axis, is adjusted by the transmittance distribution of the transparent plate, and the intensity distribution of the light is rendered substantially uniform on concentric circles having the optic axis at the center thereof.

Accordingly, a light beam having a circular cross section can be obtained without using a shaping prism, as in employed in the prior art.

In particular, in a case where the optical device according to the 12th aspect of the invention is applied to an optical pick-up apparatus, the beam-shaping action can be realized utilizing the requisite transparent plate in the optical system of the optical pick-up apparatus. The result is a simpler arrangement.

A transmittance distribution for controlling the intensity of the transmitted light can be superimposed upon the transmittance distribution of the aforementioned transparent plate in such a manner that the intensity distribution in the cross section of the light collimated or condensed by the condensing optical system is smaller at a central portion of the cross section, which includes the optic axis, than at the periphery thereof.

In accordance with such a transmittance distribution, it is possible to make the beam diameter of the condensed light beam very small by the super-resolution phenomenon.

In accordance with a 13th aspect of the present invention, there is provided an optical device characterized by comprising a light-emitting element for emitting divergent light, an optical system for collimating or condensing the divergent light emitted by the light-emitting element, and a transparent plate disposed on an optical path of the divergent light between the light-emitting element and the optical system at an inclination with respect to the optic axis of the optical system, the transparent plate having a transmittance distribution for controlling the intensity of transmitted light in such a manner that an intensity distribution in a cross section of the light collimated or condensed by the optical system is smaller at a central portion of the cross section, which includes the optic axis, than at the periphery thereof.

The intensity distribution of the light beam transmitted by the transparent plate is adjusted by the transmittance distribution of the transparent plate, and the intensity of the light at the central portion becomes smaller than that at the periphery. When light having such an intensity distribution is condensed, a super-resolution phenomenon is produced and it is possible to make the spot diameter of the condensed light beam a very small diameter that is less then the diffraction limit.

The same effect is obtained even if the above-mentioned transmittance distributions are provided on a lens contained in the optical system, rather than on the transparent plate.

An optical pick-up apparatus which utilizes an optical device according to the 12th aspect of the present invention has a light-emitting element for emitting divergent light with angles of spread that differ in two directions perpendicular to an optic axis and a condensing optical system for condensing divergent light, which is emitted by the light-emitting element, on an optical recording medium and condensing reflected light from the optical recording medium, characterized by comprising at least two transparent plates, which are disposed on an optical path of the divergent light between the light-emitting element and the condensing optical system at an inclination with respect to the optic axis of the condensing optical system, for transmitting some and reflecting some of the light incident thereon, and at least two photodetectors for receiving light that has been transmitted or reflected by the transparent plates, the received light being part of the light that has been reflected by the optical recording medium and condensed by the condensing optical system, at least one transparent plate having a transmittance distribution for controlling the intensity of transmitted light in such a manner that an intensity distribution in a cross section of the light condensed by the condensing optical system is substantially uniform on concentric circles having the optic axis at the center thereof.

Since the cross section of the condensed light beam projected upon the optical recording medium is made circular by the transmittance distribution formed on the transparent plate, which is an essential part of an optical pick-up apparatus, the accurate reading of information is made possible and an optical component, such as a shaping prism, can be eliminated.

The diameter of the beam spot of condensed light can be made even smaller utilizing the super-resolution phenomenon by provided at least one of the transparent plates with a transmittance distribution for controlling the intensity of transmitted light in such a manner that the intensity distribution in a cross section of the light condensed by the condensing optical system is smaller at the central portion, which includes the optic axis, than at the periphery thereof.

An optical pick-up apparatus which utilizes an optical device according to the 13th aspect of the present invention has a light-emitting element for emitting divergent light and a condensing optical system for condensing divergent light, which is emitted by the light-emitting element, on an optical recording medium and condensing reflected light from the optical recording medium, characterized by comprising at least two transparent plates, which are disposed on an optical path of the divergent light between the light-emitting element and the condensing optical system at an inclination with respect to the optic axis of the condensing optical system, for transmitting some and reflecting some of the light incident thereon, and at least two photodetectors for receiving light that has been transmitted or reflected by the transparent plates, the received light being part of the light that has been reflected by the optical recording medium and condensed by the condensing optical system, at least one transparent plate having a transmittance distribution for controlling the intensity of transmitted light in such a manner that an intensity distribution in a cross section of the light condensed by the condensing optical system will be smaller at the central portion, which includes the optic axis, than at the periphery thereof.

In this optical pick-up apparatus also, the beam spot can be made much smaller by the super-resolution phenomenon utilizing the transmittance distribution of the transparent plate, which is an essential element of the apparatus.

The same effect is obtained even if the above-mentioned transmittance distributions are provided on a lens contained in the condensing optical system, rather than on the transparent plate.

A 14th aspect of the present invention is characterized in that a half-wave plate or polarizing plate is provided between said light-emitting element and whichever of said transparent plates is located on a side near the light-emitting element.

In accordance with the 14th aspect of the invention, the direction of polarization of light emitted by the light-emitting element can be adjusted by the half-wave plate or polarizing plate provided in front of the light-emitting element. Since the adjustment of the direction of polarization of the light emitted by the light-emitting element can be performed by the half-wave plate or polarizing plate alone, it is unnecessary to change the positions of the other portions of the optical system, particularly the position of the light-emitting element and the positions of the components in the condensing optical system. This makes adjustment very easy. In addition, adjustment of the output-signal level of the photodetectors can be adjusted by the adjustment of the direction of polarization of the emitted light performed by the half-wave plate or polarizing plate.

A 15th aspect of the present invention is that an optical pick-up apparatus having an optical system equipped with two transparent plates, which apparatus is for the above-mentioned photomagnetic disk, is provided with a half-wave plate between the two transparent plates.

In accordance with the 15th embodiment of the present invention, a half-wave plate (or optical rotatory element) is disposed between two transparent plates. This enables the orientation of the two transparent plates to be set at will. Furthermore, by suitably setting the orientation of the main axis of the half-wave plate relative to the direction of polarization of the light incident thereon, it can be so arranged that the beams of reflected light from the two transparent plates will contain only polarized light components that are mutually perpendicular or many of these components.

For example, a set-up can be adopted in which the two transparent plates are made substantially parallel to each other. In such case, it will suffice to rotate the direction of polarization of the reflected light from the photomagnetic recording medium approximately 90° by the half-wave plate. As a result of setting up the transparent plates in this manner, the photodetectors can be disposed on the same side in relation to the optic axis so that the an even greater reduction in the size of the optical pick-up apparatus can be achieved.

Furthermore, a set-up can be adopted in which the two transparent plates are made substantially symmetrical with respect to a plane perpendicular to the optic axis. As a result of setting up the transparent plates in this manner, aberrations produced when light is transmitted by the transparent plates disposed at an inclination with respect to the optic axis can be substantially cancelled out by the two transparent plates. This makes it possible to reduce aberration.

The levels of the light-reception signals from the two photodetectors can be adjusted by adjusting the angular position of the half-wave plate.

A photomagnetic disk is made of a material exhibiting a complex index of refraction. Therefore, when light reflected from the disk is influenced by the characteristic of this complex index of refraction, a signal having a high S/N ratio cannot be obtained. In accordance with JIS (Japanese Industrial Standards), when the linear direction of polarization possessed by the projected light from a semiconductor laser coincides with a direction parallel or perpendicular to the tracks of the photomagnetic disk, the influence of the characteristic of the complex index of refraction possessed by the photomagnetic disk can be eliminated or reduced.

A 16th aspect of the present invention provides an arrangement in which the influence of the characteristic of the complex index of refraction possessed by the photomagnetic disk can be eliminated or reduced.

A 16th aspect of the present invention is that an optical pick-up apparatus for the above-mentioned photomagnetic disk has a half-wave plate provided in the condensing optical system.

In accordance with the 16th aspect of the present invention, a half-wave plate is disposed in the condensing optical system. Therefore, the optical rotatory angle can be adjusted by rotating the half-wave plate, and the direction of the plane of polarization of the light projected upon the photomagnetic recording medium can be adjusted with ease. In particular, the direction of polarization of the light projected upon the photomagnetic recording medium can be adjusted by the half-wave plate so as to be parallel or perpendicular to the direction of the tracks on the photomagnetic recording medium. By passing the reflected light from the photomagnetic recording medium through the half-wave plate in the opposite direction, the plane of polarization thereof is optically rotated through the same angle in the direction opposite that of the projected light. As a result, the optical rotation in the half-wave plate is cancelled.

In accordance with the 16th aspect of the present invention, the direction of polarization of the light

12

projected upon the photomagnetic recording medium can be set by adjustment of the half-wave plate so as to be parallel or perpendicular to the direction of the tracks on the photomagnetic disk. As a result, the influence of the characteristic of the complex index of refraction possessed by the photomagnetic disk can be eliminated or reduced so that it is possible to obtain various signals having a high S/N ratio.

Further arrangements so adapted as to be unaffected or almost unaffected by the characteristic of the complex index of refraction possessed by a photomagnetic disk will be described.

According to a 17th aspect of the present invention, the optical pick-up apparatus in accordance with the second or third aspect of the invention is characterized in that at least one of the two photodetectors includes a plurality of light-receiving elements partitioned by partitioning lines which form an angle of approximately 45° with either of two mutually perpendicular reference planes both of which form angles of approximately 45° with a linear direction of polarization possessed by the emitted light from the light-emitting element, and each of which contains the optic axis.

In a case where the direction of polarization of the emitted light from the light-emitting element and the direction of the tracks on the photomagnetic recording medium are made to coincide or to perpendicularly intersect each other, the image of the tracks projected upon the light-emitting surface of the photodetector can be set parallel to the direction of the partitioning lines. In other words, it is possible to make the partitioning lines of the photodetectors coincide with the track direction. This means that it is possible to produce a tracking error signal based upon an output signal from at least one photodetector.

In accordance with the 17th aspect of the present invention, a correct tracking signal can be obtained from at least one of the photodetectors when the positional relationship between the optical pick-up apparatus and the photomagnetic recording medium is decided so as to make the direction of polarization of the light projected upon the photomagnetic recording medium parallel or perpendicular to the track direction of the photomagnetic recording medium. That is, according to this aspect of the invention, it is possible to obtain a construction and arrangement unaffected or almost unaffected by the characteristic of the complex index of refraction possessed by a photomagnetic disk. As a result, various signals having a high S/N ratio can be obtained.

According to an 18th aspect of the present invention, in an optical pick-up apparatus having a light source for emitting linearly polarized projected light, an optical system for condensing the projected light from the light source on a photomagnetic recording medium, and condensing and guiding reflected light from the photomagnetic recording medium, and light-receiving means for receiving some of the reflected light from the photomagnetic recording medium guided by the optical system and outputting a light-reception signal for producing at least a focusing error signal and a tracking error signal, the direction of polarization of the projected light emitted by the light source and condensed by the optical system being inclined at an angle of 45° with respect to a track direction of the photomagnetic recording medium such a construction and arrangement are provided that the apparatus is unaffected or almost unaffected by the characteristic of the complex index of refraction possessed by the photomagnetic disk.

In a first embodiment according to the 18th aspect of the invention, the optical pick-up apparatus is arranged at an inclination of 45° with respect to the radial direction of the photomagnetic recording medium. As a result, the direction of polarization of the light projected upon the photomagnetic recording medium is made parallel or perpendicular to the track direction of the photomagnetic recording medium.

In a second embodiment according to the 18th aspect of the invention, the light source is disposed upon being rotated 45° so that the direction of polarization of the light projected upon the photomagnetic recording medium is made parallel or perpendicular to the track direction.

In a third embodiment according to the 18th aspect of the invention, the optical system is provided with a beam splitter for inclining, by 45°, the optical path of the projected light emitted by the light source. As a result, the direction of polarization of the light projected upon the photomagnetic recording medium is made parallel or perpendicular to the track direction.

Thus, in the 18th aspect of the invention, the direction of polarization of the light projected upon the photomagnetic recording medium is made parallel or perpendicular to the track direction, and therefore the apparatus is unaffected or almost unaffected by the characteristic of the complex index of refraction possessed by the photomagnetic disk.

In the arrangement described above, it goes without saying that the optical pick-up apparatus is moved in the radial direction of the photomagnetic recording medium.

In the 18th aspect of the invention, it is preferred that the optic system comprise a condensing optical system for condensing the projected light from the light source on the photomagnetic recording medium, and condensing the reflected light from the photomagnetic recording medium, and one set of at least two transparent plates, which are disposed on an optical path of the divergent light between the light source and the condensing optical system at an inclination with respect to an optic axis of the condensing optical system, for transmitting some and reflecting some of the light incident thereon.

Further, the light-receiving means has at least two photodetectors for receiving light that has been reflected or transmitted by respective ones of the transparent plates, the received light being part of the light that has been reflected by the optical photomagnetic medium and condensed by the condensing optical system.

Either of the transparent plates is used as the beam splitter in the third embodiment.

At least one of the two photodetectors includes a plurality of light-receiving elements partitioned by partitioning lines along the track direction of track images formed on a light-receiving surface of the photodetector by the reflected light from the photomagnetic recording medium. The tracking error signal is produced based upon output signals from these light-receiving elements.

In the optical pick-up apparatus described above, use is made of one or two transparent plates, and it is necessary to correctly position and affix the plates. The same is true with regard to the assembly and positioning of lenses, etc., which constitute the condensing optical system. In a case where the transparent plates and lenses are affixed to an appropriate holding member, a problem arises, namely the fact that the thin transparent plates are in danger of being flexed or deformed owing to a difference in the coefficients of thermal expansion possessed by the holding member and the plates.

An appropriate holder or holding block for the transparent plates and lenses is proposed in the optical pick-up apparatus described above.

A holder according to a 19th aspect of the present invention includes a holding block having a first through-hole through which incident light is passed. The holding block has two end faces each of which is formed to include a holding face inclined with respect to the first through-hole, and the first through-hole opens at each end to a respective one of the holding faces. Further, the holding block has second through-holes each of which opens at one end to a respective one of the holding faces and through which is passed the reflected light from a transparent plate affixed to a respective one of the holding faces.

The transparent plates are fixedly secured to the holding faces.

Light emitted by the light-emitting element or light condensed by the condensing optical system impinges upon the first through-hole of the holder as incident light. Reflected light from the transparent plates affixed to the holding faces impinged upon the photodetector directly or through the second through-holes.

The second through-holes perform a first function, which is to guide the reflected light from the transparent plates to the photodetectors, or a second function, which is to allow reflected light from the transparent plate to escape to the outside. The second function is particularly important. Specifically, of the light reflected from the transparent plates, light in a direction opposite that of the photodetectors is reflected at the inner wall surface of the holding block and returns to the transparent plates, if the second through-holes are not provided. This light is then transmitted by the transparent plates and impinges upon the photodetectors as noise. The second function mentioned above prevents this phenomenon from occurring.

Preferably, the holding block is made of a material whose coefficient of thermal expansion is substantially equal to or the same material as that of the transparent plates.

In a preferred embodiment of the 19th aspect of the present invention, the transparent plates are affixed by being bonded to the holding faces of holder at only one location (one side or a portion of one side) using a bonding agent.

In a case where the coefficients of thermal expansion of the holding block and the transparent plate differ, there is the danger that the transparent plate would be deformed by a change in ambient temperature if it were bonded to the holding block along its entire perimeter.

If the transparent plate is affixed to the holding block at only one location, the plate will be able to expand and contract thermally independently of the holding block even if the coefficients of thermal expansion of the holding block and the transparent plate differ and there is a change in ambient temperature. As a result, flexure or deformation of the transparent plate can be prevented.

There is a possibility that the bonding agent also will thermally expand and contract owing to changes in ambient temperature. If the bonding agent undergoes thermal expansion or contraction, there is a possibility that the transparent plate will shift away from the holding face of the holder. (Though the portion secured by the bonding agent will not shift, the portion of the transparent plate on the side thereof opposite the point at which it is affixed will undergo maximum displacement.) Even a slight amount of displacement of the transparent plate will cause a change in the beam spot formed on the light-receiving surface of the photodetector by the reflected light from the transparent plate.

In a preferred embodiment of the 19th aspect of the present invention, the point at which the transparent plate is affixed is decided in such a manner that the direction of movement, caused by displacement of the transparent plate resulting from thermal expansion or contraction of the bonding agent, of the beam spot formed on the light-receiving surface of the photodetector by the reflected light from the transparent plate and the direction of displacement of the beam spot caused by tracking error will perpendicularly intersect on the light-receiving surface.

As a result, even if the beam spot of reflected light shifts slightly on the light-receiving surface owing to displacement of the transparent plate caused by thermal expansion or contraction of the bonding agent, the direction of this shift perpendicularly intersects the direction of displacement of the beam spot of reflected light produced by tracking error. This means that the tracking error signal is entirely unaffected. Accordingly, a correct tracking error signal is obtained at all times.

A holder according to a 20th aspect of the present invention is characterized in that at least two elements from among at least two transparent plates and a lens used in the above-described optical pick-up apparatus are integrally formed with the holder.

In a preferred embodiment of the 20th aspect of the present invention, the holder is constituted by a frame in which the transparent plates or the lens serve as end faces or a partitioning wall.

In accordance with the 20th aspect of the present invention, the transparent plates or the lens used in the optical pick-up apparatus are formed as integral parts of the holder. As a result, assembly and adjustment are greatly facilitated and the arrangement excels in terms of withstanding the environment.

A holding block according to a 21st aspect of the present invention holds at least two transparent plates and two photodetectors used in the optical pick-up apparatus, the holding block being arranged so as to be free to move along the optic axis of the condensing optical system.

Preferably, the holding block is provided also with a photodetector for receiving the light that has been emitted by the light-emitting element and reflected by the transparent plate and outputting a signal for controlling intensity of the emitted light from the light-emitting element.

In accordance with the 21st aspect of the invention, at least two transparent plates and two photodetectors are affixed beforehand to the holding block. With regard to assembly and adjustment of the optical pick-up apparatus, therefore, the entire holding block need only be positioned by being moved along optic axis of the condensing optical system. It is unnecessary to adjust focusing by moving the two photodetectors separately in a direction perpendicular to the optic axis, and focusing adjustment of the spots formed on the photodetectors also can be achieved by finely adjusting the entirety of the holding block.

In one example of an optical pick-up apparatus, an uprighting mirror is used. A diverging light emission from a light source such as a semiconductor laser is converted into collimated light by a collimating lens or the like. The collimated light travels in a direction parallel to the surface of the optical recording medium. In order to project condensed light perpendicularly upon the surface of the optical recording medium, it is necessary that the direction in which the collimated light propagates be deflected at right angles and that the light be condensed. The uprighting mirror is employed for the purpose of deflecting the collimated light, and an objective lens is used for the purpose of condensing the collimated light. Since the uprighting mirror and the objective lens are arrayed in an optical head in a direction which perpendicularly intersects the plane of the optical recording medium, the optical head has considerable thickness in this direction.

On the other hand, the optical pick-up apparatus may be of two types for the purpose of track access. In a first type, the entirety of the optical pick-up apparatus is moved or displaced. In the second type, part of the optical pick-up apparatus, such as only the objective lens or only the objective lens and uprighting mirror, is moved or displaced.

The first type is disadvantageous in that a high-speed seeking operation is difficult since the entire optical pick-up apparatus is moved, but an advantage is that shifting of the optic axis does not readily occur and the optical system is stable as a result.

The second type makes possible a high-speed seeking operation but shifting of the optic axis tends to occur because only part of the optical system moves.

A 22nd aspect of the present invention provides an optical pick-up apparatus in which the thickness of the optical head portion can be minimized.

A 23rd aspect of the present invention provides an improved optical pick-up apparatus of the second type.

According to the 22nd aspect of the invention, there is provided an optical pick-up device having a light source, an optical system for condensing projected light from the light source to project the light upon an optical recording medium, and guiding and condensing reflected light from the optical recording medium, and light-receiving means for receiving reflected light, from the optical recording medium, guided by the optical system being provided with deflecting means for deflecting optical paths of the projected light and reflected light substantially at right angles, the deflecting means comprising a concave reflector for condensing and deflecting collimated light within the optical system to project the condensed light upon the optical recording medium, and deflecting and collimating the reflected light from the optical

EP 0 492 515 A2

recording medium.

Deflection and condensing of the light projected upon the optical recording medium can be achieved at a single stroke by the concave reflector, and so can deflection and collimation of the reflected light from the optical recording medium. More specifically, the concave reflector performs the functions of both the uprighting mirror and objective lens of the aforementioned conventional optical head.

In accordance with the 22nd aspect of the invention, the concave reflector is used in place of the uprighting mirror and objective lens of the aforementioned conventional optical head, and therefore it is possible to reduce the thickness of the optical head. A reduction in weight is also achieved.

In a preferred embodiment of the 22nd aspect of the invention, the optical system comprises a collimating lens for converting the projected light from the light source into collimated light, directing the collimated light toward the concave reflector and condensing reflected collimated light from the concave reflector, and a transparent plate disposed between the light source and the collimating lens at an inclination with respect to the optic axis for transmitting some and reflecting some of the light incident thereon. The light-receiving means receives the light reflected or transmitted by the transparent plate. A tracking error signal and a focusing error signal are produced based upon a light-reception signal outputted by the light-receiving means.

In accordance with this embodiment, a reduction in the size and weight of the optical pick-up apparatus are achieved.

The 22nd aspect of the invention can be realized as the apparatus of the aforementioned first type, in which the entirety of the optical pick-up apparatus is moved or displaced, or of the aforementioned second type, in which only the optical head is moved or displaced, in order to perform track access.

In particular, in a case where the optical pick-up apparatus realized is of the second type, the construction is as follows:

The optical pick-up apparatus of the second type comprises a stationary portion, and a movable portion, which is driven by an actuator, for performing track access, tracking control and focusing control. The stationary portion is provided with the light source, the portion of the optical system which includes the collimating lens, and the light-receiving means. The movable portion includes the concave reflector.

Since the movable portion is thus made light in weight, track access at a much higher speed is made possible.

The 23rd aspect of the invention relates to improvements in the optical pick-up apparatus of the second type.

According to the 23rd aspect of the invention, there is provided an optical pick-up device comprising an arm freely rotatably supported on a rotary shaft, a stationary portion provided on one end portion of the arm, and a movable portion provided on another end of the arm and driven by an actuator for performing track access, tracking control and focusing control. The stationary portion includes a light source, a first optical system for converting projected light from the light source into collimated light to apply the collimated light to the movable portion, and condensing reflected collimated light from the movable portion, and a photodetector for receiving reflected light condensed by the first optical system. The movable portion includes a second optical system for condensing, and for deflecting substantially at right angles, the collimated light provided by the stationary portion to project the light upon an optical recording medium, and deflecting, substantially at right angles, reflected light from the optical recording medium, converting this light into collimated light and applying the collimated light to the stationary portion. The arm is supported by the rotary shaft in the proximity of the position of the center of gravity thereof.

In accordance with the 23rd aspect of the invention, the arm is supported by a rotary shaft at or near the position of the center of gravity of the arm. As a result, it is unnecessary to provide the arm with a balance weight. Consequently, the arm is reduced in weight correspondingly so that it is possible to perform a high-speed, stable seeking operation.

In a preferred embodiment of the 23rd aspect of the invention, the second optical system is provided with the above-described concave reflector in accordance with the 22nd aspect of the invention. This makes it possible to achieve an even greater reduction in the weight of the second optical system.

In another preferred embodiment of the 23rd aspect of the invention, the first optical system includes a collimating lens for converting the projected light from the light source into collimated light, directing the collimated light toward the movable portion and condensing reflected collimated light from the movable portion, and a transparent plate disposed between the light source and the collimating lens at an inclination with respect to the optic axis for transmitting some and reflecting some of the light incident thereon. The photodetector receives the light reflected or transmitted by the transparent plate, and a tracking error signal and a focusing error signal are produced based upon a light-reception signal from the photodetector. By virtue of this arrangement, the entire optical system mounted on the arm is reduced in weight to an even

16

greater degree.

The optical pick-up apparatus basically is so adapted that light emitted from a light source is condensed and projected upon an optical recording medium, the reflected light from the optical recording medium is split into at least two light beams using a beam splitter or the like, the light beams are condensed and the condensed light beams are received by respective ones of the two photodetectors. A tracking error signal and a focusing error signal are produced based upon the output signals from the photodetectors. In case of playback, a read signal is produced based upon an output signal or signals from one or both of the two photodetectors. It is possible also to write information on (or erase it from) a photomagnetic recording medium. In this case, the light source generally is driven so as to increase the intensity of the light emission.

The beam-size method or the astigmatism method may be used in order to detect focusing error. Problems in an arrangement will be described in which the focusing error signal is produced based upon output signals from the two photodetectors, as in the double-beam size method.

It is necessary that the quantities of light incident upon the two photodetectors be balanced. When the optical system of the optical pick-up apparatus is accommodated within a case, the reflected light from the inner wall surface of the case impinges upon the photodetectors in the form of stray light. The problem that arises is an imbalance in the quantities of incident light. The intensity of the light emission from the light source is increased in the modes for writing and erasing information, as set forth above. Therefore, if the quantities of stray light which impinge upon the two photodetectors differ even slightly, the difference between the quantities of incident stray light becomes quite pronounced and the focusing error signal develops a conspicuous offset.

An object of 24th and 25th aspects of the present invention is to make it possible to minimize the offset which appears in a signal, such as the focusing error signal, produced based upon the output signals from two photodetectors, even if there is a change in the intensity of the light emission from the light source brought about when the operating mode is changed, as between modes for recording and playing back information, or even if there is a fluctuation in the quantity of the light emission from the light source due to a change in temperature.

An optical pick-up apparatus according to a 24th aspect of the invention is characterized by comprising a light-emitting element, a condensing optical system for condensing divergent light, which is emitted by the light-emitting element, on an optical recording medium and condensing reflected light from the optical recording medium, beam splitter means disposed in the condensing optical system for transmitting some and reflecting some of the light incident thereof, at least two photodetectors for receiving the light transmitted or reflected by the beam splitter means, the received light being part of the light incident upon the condensing optical system following reflection by the optical recording medium, a case for internally accommodating and holding the light-emitting element, the condensing optical system inclusive of the beam splitter means, and the photodetectors, and stray-light adjusting means formed on an inner wall surface of the case confronting at least one of the photodetectors for adjusting a quantity of stray light incident upon the photodetector upon being reflected by the inner wall surface.

Quantities of stray light incident upon the at least two photodetectors are adjusted by the stray-light adjusting means so as to become approximately equal.

In a preferred embodiment of the 24th aspect of the invention, the stray-light adjusting means is provided on an inner wall surface confronting whichever of the at least two photodetectors has a greater quantity of stray light incident thereon, the quantity of stray light incident upon this photodetector being adjusted by the stray-light adjusting means so as to be reduced.

The focusing error signal and the other signals are produced based upon output signals from the two photodetectors.

Even if the optical system of the optical pick-up apparatus is housed in the case and some stray light impinges upon the photodetectors owing to reflection at the inner wall surface of the case, the quantities of stray light incident upon the two photodetectors are adjusted by the stray-light adjusting means so as to be approximately equalized. The affects of stray light incident upon the two photodetectors are substantially cancelled out in the focusing error signal produced in dependence upon the output signals from the two photodetectors. Accordingly, the focusing error signal develops absolutely no offset or almost no offset even if the quantity of light from the light-emitting element is increased in operations such as the writing and erasing of information or even if the quantity of light emitted by the light-emitting element varies owing to a change in temperature.

An optical pick-up apparatus according to a 25th aspect of the present invention is characterized by comprising a light-emitting element, a condensing optical system for condensing divergent light, which is emitted by the light-emitting element, on an optical recording medium and condensing reflected light from the optical recording medium, beam splitter means disposed in the condensing optical system for transmitting some and reflecting some of the light incident thereof, at least two photodetectors for receiving the light transmitted or reflected by the beam splitter means, the received light being part of the light incident upon the condensing optical system following reflection by the optical recording medium, means for producing a focusing error signal based upon output signals from the two photodetectors, and offset correcting means for correcting an offset, which appears in the focusing error signal, using an output signal from at least one of the two photodetectors.

In a preferred embodiment of the 25th aspect of the present invention, the offset correcting means adds or subtracts a signal relating to the output signal from the at least one of the two photodetectors to or from the focusing error signal.

In the arrangement wherein the focusing error signal is produced based upon output signals from two photodetectors, the offset which appears in the focusing error signal is a result of the fact that there is a difference between the quantities of stray light incident upon the two photodetectors. In addition, the offset varies owing to a variation in the intensity of light emitted by the light-emitting element.

In accordance with the 25th aspect of the present invention, the offset which appears in the focusing error signal is corrected base upon all of the total quantity of light which impinges upon at least one of either of the two photodetectors. As a result, absolutely no offset or almost no offset is produced even if there is a change in the intensity of the light emission from the light-emitting element caused by a difference in the operating mode, such as the reading mode, writing mode or erasing mode, or by a change in ambient temperature.

In an optical pick-up apparatus, focusing control is required for adjusting the distance between the objective lens and the optical recording medium in such a manner that the projected light to be condensed will be focused correctly on the surface of the optical recording medium. Focusing control basically is executed based upon the focusing error signal. Since the dynamic range of the focusing error signal is comparatively narrow, it is required that the objective lens be moved forcibly in such a manner that the optical recording medium falls within this dynamic range prior to execution of focusing control based upon the focusing error signal. This operation is referred to as forcible focusing.

A 26th aspect of the present invention is directed to a device and method in which forcible focusing or "pull-in" can be achieved from two directions by a simple arrangement.

A method of forcible focusing according to the 26th aspect of the present invention is characterized by mutually comparing light-reception signals from central light-receiving elements of two photodetectors each of which has light-receiving elements in three partitioned sections, thereby determining which of the light-reception signals has the lower level and outputting this light-reception signal as a pull-in signal.

An device for forcible focusing according to the 26th aspect of the present invention is characterized by having comparing means for mutually comparing light-reception signals from central light-receiving elements of two photodetectors each of which has light-receiving elements in three partitioned sections, thereby determining which of the light-reception signals has the lower level, and switching means for selecting the signal determined by the comparing means and outputting this signal as a pull-in signal.

The pull-in method and device according to the 26th aspect of the present invention are applicable to all optical pick-up apparatus having two photodetectors each of which possesses light-receiving elements in three partitioned sections.

In accordance with the 26th aspect of the present invention, the smaller of the light-reception signals from the central light-receiving elements of the two photodetectors is selected as adopted as the pull-in signal. The level of the smaller light-reception signal becomes smaller as the location at which the light is received becomes more distant, in both directions, from the point at which focusing is properly achieved, with this point serving as a reference. In other words, the level of the smaller light-reception signal becomes larger as the location at which the light is received moves toward the aforesaid reference point from either direction. Since the signal peaks at this point at which focusing is properly achieved, focusing pull-in can be performed from both directions at points near and far from the optical recording medium.

A 27th aspect of the present invention relates to a photodetector for detecting tracking error, a device and method for detecting tracking error, a device and method for detecting focusing error, and an optical head for photomagnetic recording/playback. These are suited to an optical head, and to the structural components thereof, for recording/playback of a photomagnetic recording medium such as a photomagnetic disk or photomagnetic card having a guide track groove for tracking control.

In a tracking error detecting device which relies upon the push-pull method and uses a photodetector constituted by photodiodes in two or three sections, a problem which arises is that a DC offset appears in the tracking error signal owing to tilting of a photomagnetic disk in the radial direction and movement of the objective lens in the track direction for some unknown reason.

18

EP 0 492 515 A2

The 27th aspect of the present invention seeks to reduce the above-mentioned offset which appears when the tracking error signal is produced by the push-pull method.

A photodetector for detecting tracking error according to the 27th aspect of the invention includes five light-receiving elements arrayed in a prescribed direction.

The tracking-error detecting device according to the 27th aspect of the present invention is for detecting tracking error by the push-pull method using the above-described photodetector for tracking error detection and is characterized by comprising a photodetector disposed at a position which receives reflected light from a photomagnetic recording medium, the photodetector having at least five light-receiving elements arrayed in a direction corresponding to a track of the photomagnetic recording medium, and an arithmetic circuit, to which output signals from light-receiving elements of the photodetector other than those situated at a central portion and at outermost sides are inputted, for outputting a tracking error signal which represents a difference between an output signal from the light-receiving element on a right side of the central portion and an output signal from the light-receiving element on a left side of the central portion.

The above-described photodetector for detecting tracking error is applicable also to a device for detecting focusing error.

A device for detecting focusing error according to the 27th aspect of the present invention detects focusing error in accordance with the beam-size method using two photodetectors. This device for detecting focusing error is characterized by comprising an optical system, having a beam splitter and a condensing lens, for splitting reflected light from a photomagnetic recording medium into at least two light beams and condensing the light beams, a first photodetector, which has at least five light-receiving elements, disposed at a position nearer to the photomagnetic recording medium than a point at which one of the split light beams converges, a second photodetector, which has at least five light-receiving elements, disposed at a position farther from the photomagnetic recording medium than a point at which another one of the split light beams converges, and an arithmetic circuit for comparing the difference between an output signal from a light-receiving element at a central portion of the first photodetector and the sum of output signals from light-receiving elements other than that at the central portion of the first photodetector, with the difference between an output signal from a light-receiving element at a central portion of the second photodetector and the sum of output signals from light-receiving elements other than that at the central portion of the second photodetector, and outputting the result of the comparison as a focusing error signal.

An optical head for recording/playback of a photoelectric recording medium according to a 27th aspect of the present invention is characterized by comprising a light source for emitting linearly polarized light, a first condensing optical system for condensing the light emitted by the light source upon a photomagnetic recording medium, a second condensing optical system for condensing reflected light from the photomagnetic recording medium, a polarization beam splitter for splitting the reflected light from the photomagnetic recording medium into two polarized light components whose directions of polarization are mutually perpendicular, and two photodetectors disposed in the proximity of focal points of the two polarized light components split and condensed, a photodetector having at least five light-receiving elements arrayed in a direction corresponding to a track of the photomagnetic recording medium being used as at least one of the two photodetectors.

Preferably, the first condensing optical system is used also as the second condensing optical system.

The above-described devices for detecting tracking error and focusing error are used by this optical head.

Further, a read signal is obtained as a differential signal between output signals from the two photodetectors.

The photodetector for detecting tracking error has at least five light-receiving elements, which are arrayed in one direction. Tracking error is detected based upon the difference between output signals from at least two light-receiving elements, namely from remaining two light-receiving elements other than that at the central portion and those two on the outermost sides.

When tracking is being performed correctly because there is no tilting of the optical recording medium and no movement of the objective lens, the center of the beam spot of reflected light will coincide with the center of the centrally located light-receiving element. Accordingly, the difference between the output signals from the two remaining light-receiving elements will be zero.

When the spot of projected light deviates from the center of the track on the photomagnetic recording medium, the center of the spot of reflected light also shifts correspondingly in the direction in which the light-receiving elements of the photodetector are arrayed. As a result, the quantities of light incident upon the two remaining light-receiving elements changes, and tracking error is detected by this change.

Even if the position of the spot of reflected light on the photodetector shifts owing to tilting of the photomagnetic recording medium or movement of the objective lens, the amount of offset is small because

19

the central light-receiving element and the light-receiving elements on the outermost sides, upon which the change in the quantity of incident light is great owing to the aforementioned shift, are excluded.

Thus, in accordance with the 27th aspect of the present invention, DC offset is reduced.

Furthermore, since the detector for detecting tracking error can be used also to detect focusing error by the beam-size method, the optical can be made smaller in size and lighter in weight.

Other features and advantages of the present invention will be apparent from the following description taken in conjunction with the accompanying drawings.

BRIEF DESCRIPTION OF THE DRAWINGS

Fig. 1, which illustrates a first embodiment of the present invention, shows the construction of an optical pick-up apparatus applied to recording/playback of an optical disk;

Fig. 2, which illustrates a modification, shows the construction of an optical pick-up apparatus applied to recording/playback of a photomagnetic disk;

Fig. 3 illustrates a modification of the optical pick-up apparatus shown in Fig. 2;

Fig. 4 illustrates a modification of the optical pick-up apparatus shown in Fig. 2;

Fig. 5, which illustrates a second embodiment of an optical pick-up apparatus according to the present invention, is a plan view showing the optical arrangement of the optical pick-up apparatus;

Fig. 6, which illustrates a second embodiment of an optical pick-up apparatus according to the present invention, is a perspective view showing part of an optical system depicted in Fig. 5;

Fig. 7 is a graph showing the dependence of the reflection coefficient and transmission coefficient of a glass plate upon angle of incidence;

Fig. 8 illustrates a modification of the optical pick-up apparatus;

Fig. 9 illustrates another modification of the optical pick-up apparatus;

Fig. 10 illustrates the manner in which light reflected by the top and bottom surfaces of a glass plate impinge upon a photodetector;

Fig. 11 is a block diagram showing the construction of the photodetector as well as a circuit for producing a tracking error signal, focusing error signal and read signal;

Fig. 12 is a perspective view showing one example of the construction of the photodetector;

Fig. 13 shows the manner in which aberration produced by a glass plate disposed at an inclination is corrected by a glass plate disposed at an inclination in the exact opposite direction;

Fig. 14 is a perspective view illustrating an optical system in which aberration is corrected by a glass plate attached at an inclination to the front face of the package of a semiconductor laser;

Fig. 15 is a sectional view showing the package of the semiconductor laser;

Fig. 16 is a sectional view showing the construction of an optical pick-up apparatus held by a holder;

Fig. 17 is a block diagram showing the construction of a photomagnetic disk drive;

Fig. 18 is a block diagram showing the construction of a photomagnetic card drive;

Fig. 19 is a perspective view showing an example of the construction of a separating-type optical head;

Fig. 20 shows the manner in which light is reflected by the top and bottom surfaces of a glass plate and impinges upon a photodetector;

Figs. 21a through 21c illustrate the manner in which spots of reflected light from the top and bottom surfaces of glass plates having different thicknesses are formed on the light-receiving surface of a photodetector;

Figs. 22a and 22b are vector diagrams showing the principle of amplification of the rotational angle of a plane of polarization;

Fig. 23, which illustrates a third embodiment of the present invention, shows the construction of an optical pick-up apparatus applied to recording/playback of an optical disk;

Fig. 24, which illustrates a fourth embodiment of the present invention, shows the construction of an optical pick-up apparatus applied to recording/playback of a photomagnetic disk;

Fig. 25 illustrates a modification of the optical pick-up apparatus shown in Fig. 24;

Fig. 26 illustrates, in enlarged form, the arrangement and construction of a transparent plate and a photodetector;

Fig. 27 is a circuit diagram showing an arrangement for producing a tracking error signal, focusing error signal and read signal;

Fig. 28 is a circuit diagram showing a modification of an arrangement for producing a focusing error signal;

Fig. 29 is a graph showing the characteristic of a focusing error signal produced by the circuit of Fig. 28;

Fig. 30 is a perspective view showing an example in which a glass plate is affixed to a beam shaping prism;

Fig. 31 illustrates an arrangement for amplifying the angle of rotation of a plane of polarization;

Fig. 32, which illustrates a fifth embodiment according to the present invention, is a plan view showing the optical arrangement of an optical pick-up apparatus;

Fig. 33 is a perspective view showing part of an optical depicted in Fig. 32;

Fig. 34 is a circuit diagram showing an arrangement for producing a tracking error signal, focusing error signal and read signal;

Fig. 35, which illustrates a sixth embodiment according to the present invention, is a perspective view showing part of the optical arrangement of an optical pick-up apparatus;

Fig. 36 illustrates the construction of a photodetector as well as a circuit for producing a read signal;

Fig. 37 is a circuit diagram showing a circuit for producing a tracking error signal;

Fig. 38 is a circuit diagram showing a circuit for producing a focusing error signal;

Fig. 39, which illustrates a seventh embodiment of the present invention, shows the construction of photodetectors;

Fig. 40 is a perspective view showing the spread of light emitted by a semiconductor laser;

Fig. 41 is a graph for determining a transmittance distribution on a glass plate;

Fig. 42 is a graph showing another transmittance distribution;

Fig. 43 is a graph showing yet another transmittance distribution;

Fig. 44, which illustrates an eighth embodiment according to the present invention, is a plan view showing the optical arrangement of an optical pick-up apparatus;

Fig. 45, which illustrates an eighth embodiment according to the present invention, is a perspective view showing part of an optical system depicted in Fig. 44;

Fig. 46 illustrates a modification of the optical pick-up apparatus;

Fig. 47 illustrates another modification of the optical pick-up apparatus;

Fig. 48 illustrates still another modification of the optical pick-up apparatus;

Fig. 49, which illustrates a ninth embodiment according to the present invention, is a perspective view corresponding to the optical system depicted in Fig. 6;

Fig. 50, which illustrates a modification of the optical pick-up apparatus, is a perspective view corresponding to the optical system depicted in Fig. 49;

Fig. 51 is a plan view of an optical system shown in Fig. 50;

Fig. 52, which illustrates a tenth embodiment according to the present invention, is a plan view showing the optical arrangement of an optical pick-up apparatus;

Fig. 53 is a perspective view showing part of an optical system depicted in Fig. 52;

Fig. 54 is a block diagram illustrating a circuit for producing a tracking error signal and a focusing error signal;

Fig. 55 illustrates another example of the construction of a photodetector;

Fig. 56 illustrates yet another example of the construction of a photodetector;

Fig. 57 illustrates a modification of the optical pick-up apparatus;

Fig. 58 illustrates another modification of the optical pick-up apparatus;

Fig. 59 illustrates still another modification of the optical pick-up apparatus;

Fig. 60 illustrates still another modification of the optical pick-up apparatus;

Fig. 61, which illustrates an 11th embodiment of an optical pick-up apparatus according to the present invention, is a perspective view showing part of an optical system;

Fig. 62 is a block diagram showing a circuit for producing a tracking error signal and a focusing error signal;

Fig. 63 illustrates another example of the construction of a photodetector;

Fig. 64 illustrates yet another example of the construction of a photodetector;

Fig. 65 is a perspective view illustrating part of the optical system of an optical pick-up apparatus illustrating a 12th embodiment of the present invention;

Fig. 66 illustrates an example of the construction of a photodetector used in the optical pick-up apparatus shown in Fig. 65;

Fig. 67 is a perspective view again showing part of the optical system of the optical pick-up apparatus according to the second embodiment;

Fig. 68 is a perspective view showing a typical example of the arrangement and construction of an optical head in an optical pick-up apparatus;

Fig. 69 is a plan view showing a 13th embodiment;

Fig. 70 is a sectional view showing an example of the arrangement of an optical head within a case;

Fig. 71 is a perspective view showing a 14th embodiment;

EP 0 492 515 A2

Fig. 72 is a perspective view showing a 15th embodiment;
Fig. 73 is a perspective view showing the assembly of a holder;
Fig. 74 is a plan view of Fig. 73 as seen from arrow C;
Fig. 75 is a perspective view for describing locations at which glass plates are affixed;
Fig. 76 is a perspective view showing another example of the holder;
Fig. 77 is a perspective view showing yet another example of the holder;
Fig. 78 is a sectional view showing another example of a holding block;
Fig. 79 shows the position of the holding block of Fig. 78 in an optical system;
Fig. 80 is a sectional view showing a 16th embodiment of the invention;
Fig. 81 is a sectional view showing a modification;
Fig. 82 is a perspective view of an optical system illustrating a 17th embodiment of the invention;
Fig. 83 is a perspective view of an 18th embodiment of the invention;
Fig. 84 illustrates an optical system disposed in the interior of an arm in Fig. 83;
Fig. 85 is a horizontal sectional view showing a 19th embodiment of the invention;
Fig. 86 is a vertical sectional view of the 19th embodiment of the invention;
Fig. 87 is a sectional view showing, in enlarged form, part of the sectional view of Fig. 86;
Figs. 88a, 88b and 88c are sectional views each showing different examples of stray-light attenuating portions;
Fig. 89 is a circuit diagram showing an electric circuit for producing a focusing error signal;
Fig. 90 is a graph showing a focusing error signal;
Fig. 91 is a circuit diagram showing a 20th embodiment of the invention;
Fig. 92 is a circuit diagram showing a circuit for producing a focusing error signal;
Figs. 93a and 93b show beam spots on two photodetectors;
Fig. 94 illustrates light-reception signals from centrally located photodiodes of two photodetectors, as well as a focusing error signal;
Fig. 95 is a circuit diagram showing a circuit for producing a focusing pull-in signal according to a 21st embodiment;
Fig. 96 is a graph showing the focusing pull-in signal produced;
Figs. 97a and 97b illustrate the construction of a photodetector for detecting tracking error according to a 22nd embodiment, in which Fig. 97a represents the state of a correct beam spot and Fig. 97b represents the state of a beam spot which has developed an offset;
Fig. 98 illustrates a modification of the photodetector;
Fig. 99 illustrates an example of the construction of an optical head;
Fig. 100 illustrates a circuit for producing a focusing error signal and a read signal;
Fig. 101 illustrates the manner in which offset is produced by tilting of a photomagnetic head in a device for detecting tracking error of an optical head according to the prior art;
Fig. 102 illustrates the manner in which offset is produced by movement of an objective lens in a device for detecting tracking error of an optical head according to the prior art; and
Figs. 103a, 103b illustrate a photodetector composed of photodiodes partitioned into two sections, in which Fig. 103a represents the state of a correct beam spot and Fig. 103b represents the state of a beam spot which has developed an offset.

## DESCRIPTION OF THE PREFERRED EMBODIMENTS

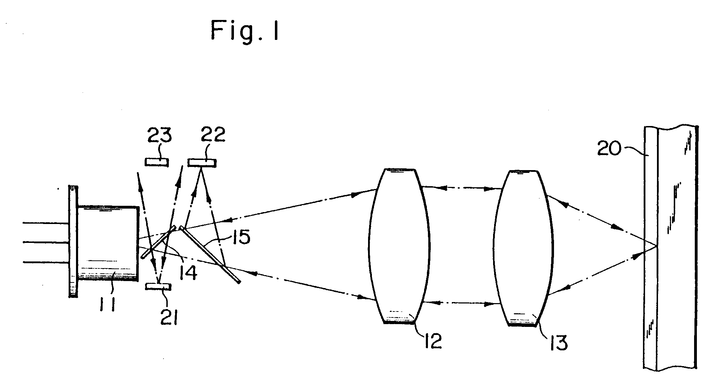

Fig. 1 illustrates the construction of a first embodiment of an optical pick-up apparatus for recording/playback of information on an optical disk.

The optical pick-up apparatus includes a semiconductor laser 11 and an optical condensing system for condensing divergent light, which is emitted by the semiconductor 11, on an optical disk 20. The condensing optical system includes a collimating lens 12 for collimating divergent light, and an objective lens 13 for condensing the collimated light.

Two glass plates 14, 15 are disposed on the optical path of the divergent light between the semiconductor laser 11 and collimating lens 12 at an inclination with respect to the optic axis of the semiconductor laser 11 and the condensing optical system.

The divergent light from the semiconductor laser 11 passes through the two glass plates 14, 15 and is condensed on the optical disk 20 by the condensing optical system. Some of the divergent light emitted by the semiconductor laser 11 is reflected by the glass plate 14 and is then received by a photodetector 23. The intensity of the emitted light from the semiconductor laser 11 is controlled based upon a received-light signal from the photodetector 23.

22

The light reflected from the optical disk 20 is condensed by the condensing optical system. Some of the reflected light to be condensed is reflected by the glass plate 15 so as to impinge upon a photodetector 22. The portion of the reflected light which passes through the glass plate 15 is further reflected by the glass plate 14 so as to impinge upon a photodetector 21.

Since the reflected light from the optical disk 20 is condensed by the condensing optical system, it is not always necessary to provide a condensing lens or the like between the glass plate 15 and photodetector 22 and between the glass plate 14 and photodetector 21.

Output signals from the photodetectors 21 and 22 are used in the formation of a focusing error signal, a tracking error signal and a read signal.

The focusing error signal is formed by a double-beam size method or by an astigmatism method, by way of example. In the double-beam size method, the photodetectors 21 and 22 are arranged respectively at positions in front and in back of the focal point of the reflected light in a case where focusing has been performed correctly. The photodetectors 21 and 22 are so designed as to obtain signals which represent the sizes of the light beams which they have received. A focusing error signal is produced by taking the difference between the output signals of the photodetectors 21 and 22. The photodetectors 21 and 22 each include photodiodes in three sections, by way of example. The difference between the output signal of the centrally located photodiode and the sum of the outputs signals from the photodiodes on either side becomes the output signal of the photodetector.

The light reflected from the glass plates arranged at an inclination with respect to the optic axis develops aberration which includes astigmatism. A focusing error signal based upon the astigmatism method is obtained by utilizing this astigmatism. For example, either the photodetector 21 or 22 is composed of photodiodes in four sections, and the focusing error signal is obtained by applying addition/subtraction operations to the output signals from these four diodes.

In order to produce the tracking error signal, a push-pull method is employed, by way of example. Specifically, the photodetector 21 or 22 is so adapted as to contain photodiodes, in two or three sections, that are divided in the direction perpendicular to the track direction of the optical disk 20. A signal representing the difference between the output signals from the photodiodes on both sides constitutes the tracking error signal.

The read signal indicative of the information recorded on the optical disk 20 can be formed by adding the output signals from the photodetectors 21 and 22. Of course, the output signal from either the photodetector 21 or 22 may serve as the read signal.

If necessary, an arrangement may be adopted in which three or more glass plates are furnished and a photodetector corresponding to each glass plate is provided.

The reflectivity and transmittance of the glass plates are adjusted appropriately beforehand as necessary. In making the adjustment, it is beneficial if at least one surface of the glass plates is provided with a coating such as a non-reflective (anti-reflection) coating or half-mirror coating. The non-reflective coating is useful in a case where it is necessary to obtain reflected light from only one of the two surfaces of the glass plate.

Furthermore, when necessary the thickness of each glass plate is reduced (to less than 100 $\mu$m, for example) to such an extent that the effects of wavefront aberration on the optical disk 20 are negligible. Alternatively, it is beneficial if the shape of the collimating lens 12, etc., is made such that the light spot formed on the optical disk 20 will be almost unaffected by wavefront aberration. For example, the collimating lens can be made an aspherical lens or an asymmetrical lens.

A light-beam shaping optical system for correcting light having an elliptical cross section as emitted by the semiconductor laser 11 into light having a circular cross section can also be provided between the semiconductor laser 11 and the collimating lens 12 of the condensing optical system. Furthermore, an isolator optical system which transmits the emitted light from the semiconductor laser 11 but blocks the reflected light from the optical disk 20 to prevent this light from impinging upon the semiconductor laser 11 may be provided between the semiconductor laser 11 and the glass plate 14. If necessary, a condensing optical system can also be provided between the glass plates and the photodetectors.

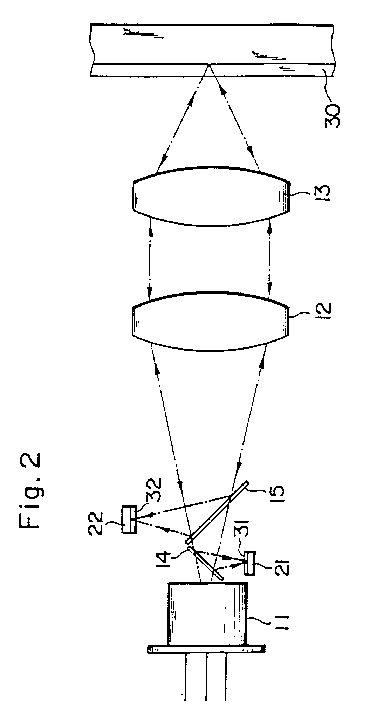

Fig. 2 illustrates the construction of an optical pick-up apparatus suitable for recording/playback of a photomagnetic disk. Components identical to those shown in Fig. 1 are designated by like reference numerals and need not be described again.

Here analyzers 31 and 32 are provided in front of the light-receiving surfaces of the respective photodetectors 21 and 22. The analyzers 31 and 32 are arranged in such a manner that the polarizing directions of the light passing through them are mutually perpendicular. Further, the polarizing direction of the linearly polarized light emitted by the semiconductor laser 11 forms an angle of 45° with both polarizing directions of the light which passes through the analyzers 31, 32.

By virtue of the foregoing arrangement, a change in the angle of rotation of the plane of polarization caused by the information recorded on the photomagnetic disk 30 is detected in the form of the difference between the output signals from the two photodetectors 21 and 22.

It goes without saying that a polarizer may also be provided in front of the semiconductor laser 11.

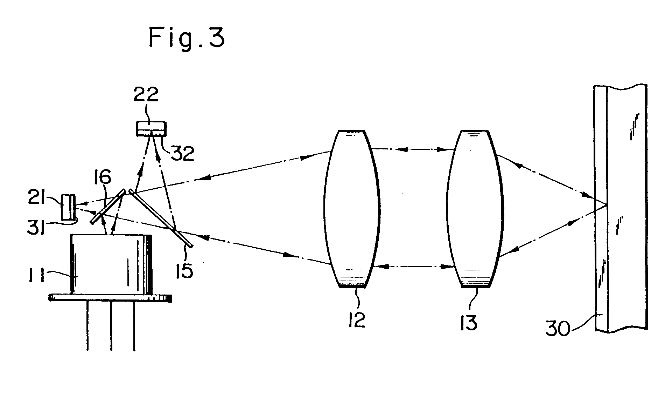

Fig. 3 illustrates a modification.

In comparison with the arrangement of Fig. 2, it is seen that a half-mirror 16 having a comparatively high reflectivity and a comparatively low transmittance is provided instead of the glass plate 14. In addition, the positions of the semiconductor laser 11 and photodetector 21 are interchanged.

The light emitted by the semiconductor laser 11 is introduced to the condensing optical system upon being reflected by the half-mirror 16, and this light is condensed so as to be focused on the photomagnetic disk 30. A portion of the reflected light from the photomagnetic disk 30 that has passed through the glass plate 15 is transmitted by the half-mirror 16 and impinges upon the photodetector 21. Other components are the same as those shown in Fig. 2.

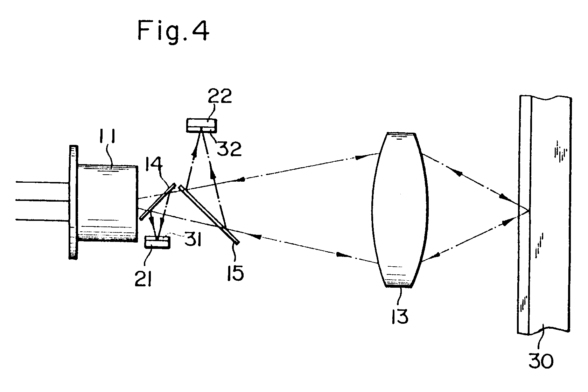

Fig. 4 illustrates another modification.

Here the collimating lens 12 is removed from the condensing optical system with a view to achieving a major simplification. The objective lens 13 condenses the divergent light emitted from the semiconductor laser 11 on the photomagnetic disk 30. Reflected light from the photomagnetic disk 30 is condensed by the objective lens 13. Other components are the same as those shown in Fig. 2.

In the optical pick-up apparatus shown in Fig. 1, it goes without saying that the positions of the semiconductor laser 11 and photodetector 21 can be interchanged, as depicted in Fig. 3, and that the collimating lens 12 can be removed from the condensing optical system, as illustrated in Fig. 4.

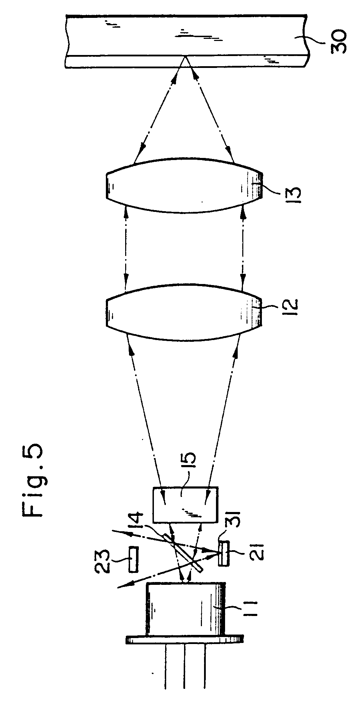

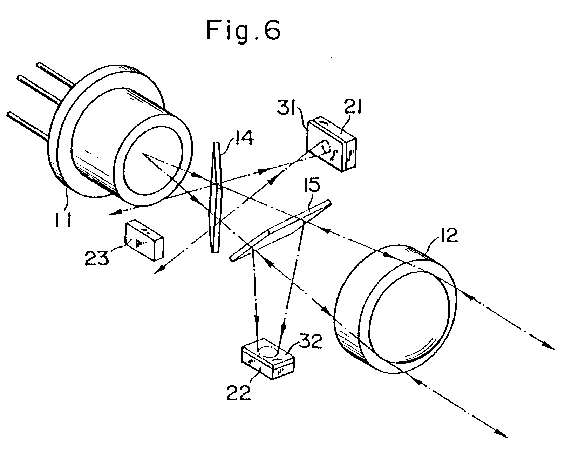

Figs. 5 and 6 illustrate a second embodiment of the present invention, which is used in recording/playback of a photomagnetic disk.

The optical pick-up apparatus includes the semiconductor laser 11 and the optical condensing system for condensing divergent light, which is emitted by the semiconductor 11, on the photomagnetic disk 30. The condensing optical system includes the collimating lens 12 for collimating divergent light, and the objective lens 13 for condensing the collimated light.

The two glass plates 14, 15 are disposed on the optical path of the divergent light between the semiconductor laser 11 and collimating lens 12 at an inclination with respect to the optic axis of the semiconductor laser 11 and the condensing optical system.

The divergent light from the semiconductor laser 11 passes through the two glass plates 14, 15 and is condensed on the photomagnetic disk 30 by the condensing optical system. Some of the divergent light emitted by the semiconductor laser 11 is reflected by the glass plate 14 and then received by the photodetector 23. The intensity of the emitted light from the semiconductor laser 11 is controlled based upon a received-light signal from the photodetector 23.

The light reflected from the photomagnetic disk 30 is condensed by the condensing optical system. Some of the reflected light to be condensed is reflected by the glass plate 15 so as to impinge upon the photodetector 22. The portion of the reflected light which passes through the glass plate 15 is further reflected by the glass plate 14 so as to impinge upon the photodetector 21.

Since the reflected light from the photomagnetic disk 30 is condensed by the condensing optical system, it is not always necessary to provide a condensing lens or the like between the glass plate 15 and photodetector 22 and between the glass plate 14 and photodetector 21.

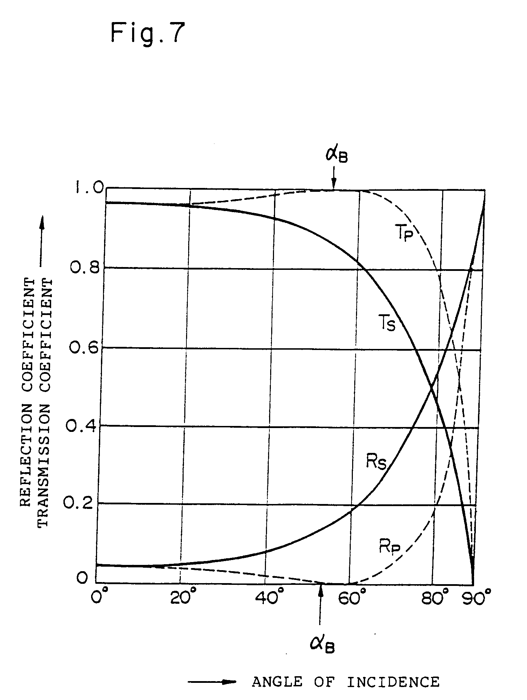

Fig. 7 illustrates the dependence of a reflection coefficient and transmission coefficient of light upon angle of incidence in a case where light is obliquely incident upon the surface of a glass plate (refractive index = 1.5).

Let $T_P$ represent the transmission coefficient of a P-polarized light component, $T_S$ the transmission coefficient of an S-polarized light component, $R_P$ the reflection coefficient of a P-polarized light component, and $R_S$ the reflection coefficient of an S-polarized light component. The component parallel to the surface of the glass plate is the S-polarized light component, and the component perpendicular to the surface of the glass plate is the P-polarized light component.

As will be understood from Fig. 7, $R_P$ is 0% and $T_P$ 100% at a certain angle $\alpha_B$ (referred to as the Brewster angle). In this case $R_S$ and $T_S$ take on values other than 0 or 100%.

Accordingly, if the glass plate is tilted at the Brewster angle $\alpha_B$ relative to the incident light, the light reflected from the glass plate will be solely the S-polarized light component. Even if the angle of inclination of the glass plate is other than the Brewster angle, the reflected light from the glass plate will contain more of the S-polarized light component than the P-polarized light component.

If the glass plates 14 and 15 are so arranged as to render mutually perpendicular the line segments formed by intersection between a plane perpendicular to the optic axis of the condensing optical system and these glass plates 14 and 15, and if the glass plates 14 and 15 are inclined in such a manner that the incident angle of the reflected light condensed by the condensing optical system is rendered equal to the Brewster angle, then the light reflected from the glass plates 14 and 15 will contain only mutually perpendicular polarized light components. Only these light components will be detected by the photodetectors 21, 22, respectively.

Even if the angle of inclination of light incident upon the glass plates 14 and 15 is other than the Brewster angle, the reflected light from the glass plates 14 and 15 will come to contain more mutually perpendicular polarized light components. By providing the analyzers 31 and 32, which are so arranged that their polarizing directions are mutually perpendicular, in front of the respective photodetectors 21 and 22 in such a manner that only the aforementioned mutually perpendicular polarized light components will pass through them, only the mutually perpendicular polarized light components will be detected by the respective ones of the photodetectors 21 and 22.

The polarizing direction of the linearly polarized light emitted by the semiconductor laser 11 forms an angle of 45° with both of these mutually perpendicular polarizing directions (i.e., the polarizing directions of the light passing through the analyzers 31, 32).

By virtue of the foregoing arrangement, a change in the angle of rotation of the plane of polarization caused by the information recorded on the photomagnetic disk 30 is detected in the form of the difference between the output signals from the two photodetectors 21 and 22.

It goes without saying that a polarizer may also be provided in front of the semiconductor laser 11.

As described above, output signals from the photodetectors 21 and 22 are used in the formation of a focusing error signal, a tracking error signal and a read signal.

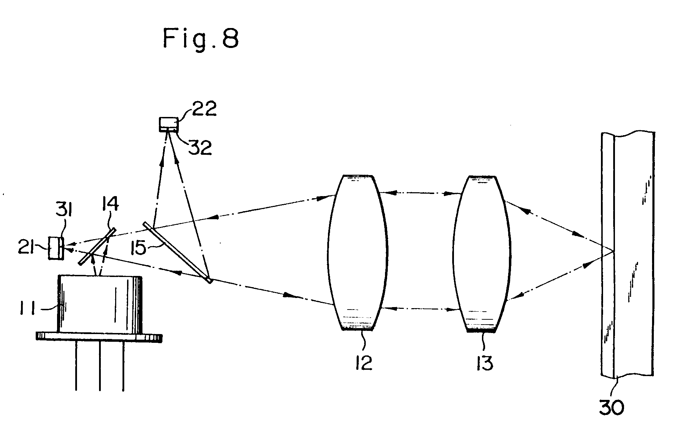

Fig. 8 illustrates a modification.

In comparison with the arrangements of Figs. 5 and 6, it is seen that the half-mirror 14 having a comparatively high reflectivity and a comparatively low transmittance is provided instead of the glass plate. In addition, the positions of the semiconductor laser 11 and photodetector 21 are interchanged.

The light emitted by the semiconductor laser 11 is introduced to the condensing optical system upon being reflected by the half-mirror 14, and this light is condensed so as to be focused on the photomagnetic disk 30. A portion of the reflected light from the photomagnetic disk 30 that has passed through the glass plate 15 is transmitted by the half-mirror 14 and impinges upon the photodetector 21.

Furthermore, the half-mirror 14 and glass plate 15 are so arranged as to render mutually parallel the line segments formed by intersection between the half-mirror 14 and glass plate 15 and a plane perpendicular to the optic axis. In accordance with this arrangement also, light containing many mutually perpendicular polarized line components is reflected by the glass plate 15 and transmitted through the half-mirror 14. This light passes through the analyzers 31 and 32, which permit transmission of the mutually perpendicular polarized light components, and impinges upon the photodetectors 21 and 22, respectively. The optical system of this modification is the same as that shown in Fig. 3.

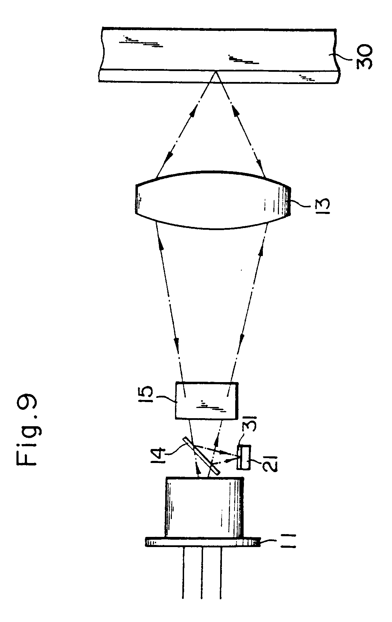

Fig. 9 illustrates yet another modification.

Here the collimating lens 12 is removed from the condensing optical system with a view to achieving a major simplification. The objective lens 13 condenses the divergent light emission from the semiconductor laser 11 on the photomagnetic disk 30. Reflected light from the photomagnetic disk 30 is condensed by the objective lens 13. Other components are the same as those shown in Figs. 5 and 6.

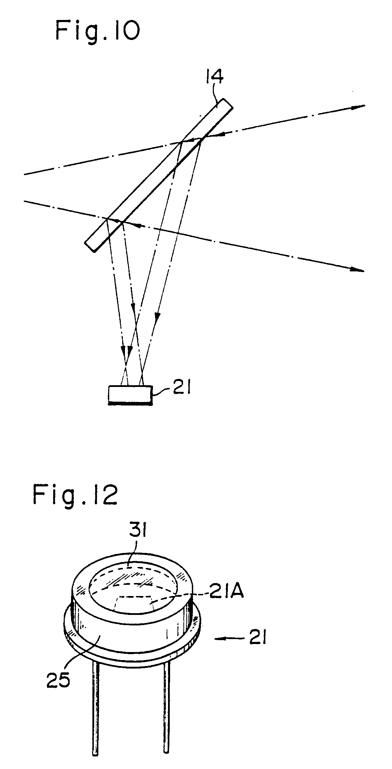

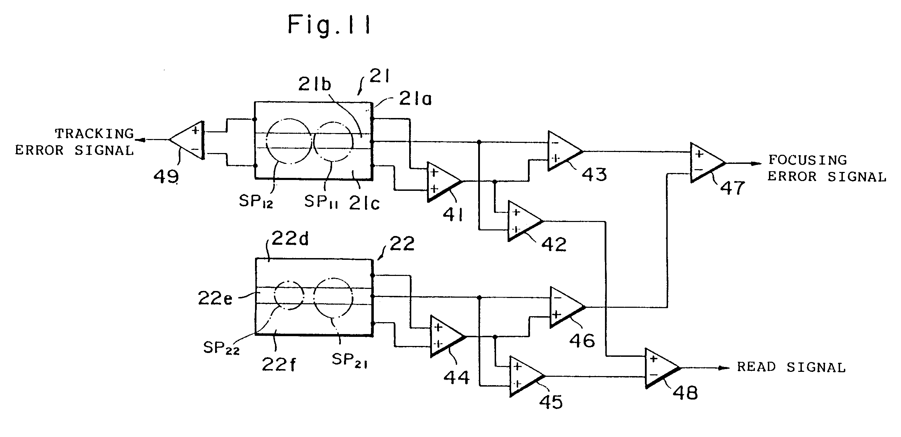

Figs. 10 and 11 illustrate and example of an arrangement in which a problem does not arise even when reflected light from the top (front) and bottom (back) sides of a glass plate impinges upon a photodetector. This discussion is premised upon the embodiments shown in Fig. 1 or 2 or in Figs. 5 and 6.

Fig. 10 illustrates the glass plate 14 and photodetector 21 as typifying a glass plate and photodetector in general. The analyzer 31 is deleted from the drawing. Reflected light from an optical disk or photomagnetic disk impinges upon the photodetector 21 upon being reflected by the top surface of the glass plate 14 and also by the bottom surface of the glass plate 14. Similarly, reflected light from both the top and bottom surfaces of the glass plate 15 is incident upon the photodetector 22.

Fig. 11 illustrates an example of the construction of the photodetectors 21 and 22. Each of the photodetectors 21 and 22 is composed of photodiodes in three sections. More specifically, the photodetector 21 comprises photodiodes 21a, 21b and 21c that are electrically isolated from one another, with the width of the central diode 21b being designed to be the smallest. The straight lines partitioning the photodiodes 21a, 21b and 21c extend in the direction of the tracks on the optical disk. The photodetector 21 is so disposed that spots $SP_{11}$ and $SP_{12}$, which are formed on the photodiodes 21a - 21c by the light reflected from the top and bottom surfaces of the glass plate 14 also are arrayed along the straight lines partitioning the photodiodes 21a - 21c.

Similarly, the photodetector 22 also comprises photodiodes 22d, 22e and 22f that are electrically isolated from one another, with the width of the central diode 22e being designed to be the smallest. The straight lines partitioning the photodiodes 22d, 22e and 22f extend in a direction perpendicular to the direction of the tracks on the optical disk. The photodetector 22 is so disposed that spots $SP_{21}$ and $SP_{22}$, which are formed on the photodiodes 22d - 22f by the light reflected from the top and bottom surfaces of the glass plate 15 also are arrayed along the straight lines partitioning the photodiodes 22d - 22f.

The push-pull method is used in detecting tracking error, and the double-beam size method is used in detecting focusing error. In a case where focusing is being carried out correctly, the photodetector 21 is disposed in back of (see Fig. 10) the focal point of the reflected light from the glass plate 14 and the photodetector 22 is disposed in front of the focal point of the reflected light from the glass plate 15 for the double-beam size method.

The tracking error signal is produced by a subtractor 49, which takes the difference between the output signals from the photodiodes 21a and 21c of photodetector 21. The tracking error signal can also be produced by taking the difference between the output signals from the photodiodes 22d and 22f of photodetector 22.

The output signals from the photodiodes 21a, 21b, 21c, 22d, 22e, 22f are represented by a, b, c, d, e and f, respectively. The focusing error signal is produced by adders 41, 44 and subtractors 43, 46, 47 cooperating to perform the operation $(a + c + e) - (b + d + f)$.

The read signal is produced by adders 41, 42, 44, 45 and a subtractor 48 cooperating to perform the operation $(a + b + c) - (d + e + f)$.

Even though reflected light from the top and bottom surfaces of the glass plate 14 or 15 is incident upon the photodetector 21 or 22, the spots $SP_{11}$ and $SP_{12}$ or $SP_{21}$ and $SP_{22}$ produced by this reflected light line up in the direction of the straight lines partitioning the photodiodes 21a - 21c or 22d - 22f. As a consequence, the spots of this reflected light are made to contribute to the output signal of each photodiode in the same way, and the tracking error signal, focusing error signal and read signal can be produced without any hindrances whatsoever (i.e., without error being produced).

An arrangement of this kind is applicable in the same fashion to the modifications shown in Figs. 3, 4, 8 and 9.

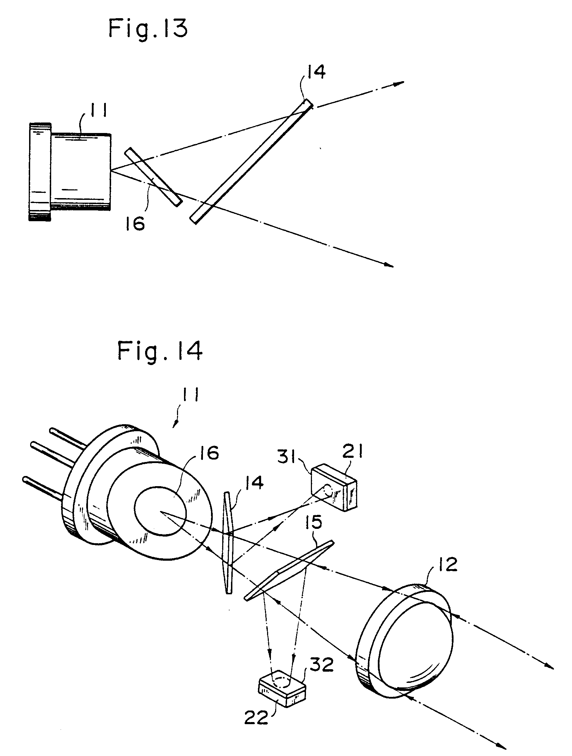

Fig. 12 illustrates an example of a photodetector favorable for use in an optical pick-up apparatus of a photomagnetic disk of the kind described above. The photodetector 21 is illustrated as typifying this photodetector.

The photodetector 21 comprises a can 25 having a window in its upper side, a photodiode 21A (divided into a number of sections, as described earlier) arranged within the can 25, and an analyzer 31 provided so as to cover the window of the can 25. By incorporating the analyzer 31 in the photodetector 21, the number of parts constituting the optical pick-up apparatus can be reduced.

In the optical pick-up apparatus described above, a glass plate is disposed on the optical path of the divergent light in a state inclined with respect to the optic axis. In an optical system of this kind, aberration is produced by the inclined glass plate.

Fig. 13 illustrates the manner in which aberration, which is produced in the divergent light by the glass plate 14 disposed at an incline with respect to the optic axis of this light, is corrected by disposing one more glass plate 16A on the aforementioned optic axis but at an inclination opposite that of the glass plate 14.

Fig. 14 illustrates application of this aberration-correcting principle in the optical system shown in Figs. 5 and 6.

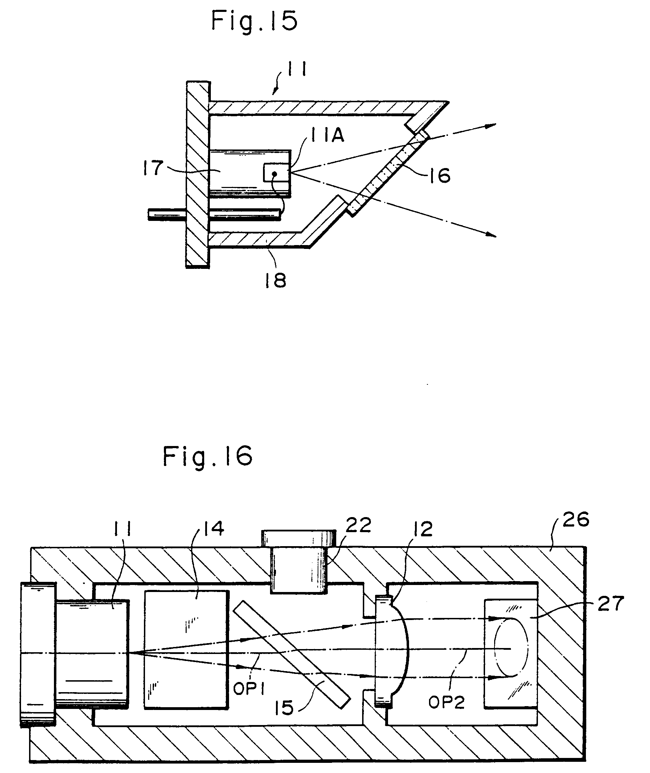

The semiconductor laser 11 has a package 18 the front end face of which is inclined with respect to the optic axis, as depicted in Fig. 15. The front end face is provided with an emission window for the exiting laser light. The glass plate 16A is attached so as to cover this window. A laser diode 11A is attached to a stem 17 in the interior of the package 18. The laser beam generated by the laser diode 11A is emitted to the exterior of the package 18 upon passing through the glass plate 16A.

By using the semiconductor laser 11 of this kind, aberration caused by the glass plate 14 or 15 or aberration caused by the glass plates 14 and 15 can be corrected for in the manner described below.

In a case where solely the aberration produced by the glass plate 14 is corrected, the semiconductor laser 11 is disposed in such a manner that the glass plate 16A will be inclined with respect to the optic axis in a manner exactly opposite that of the glass plate 15 as shown in Fig. 13.

In a case where the aberration caused by both the glass plates 14 and 15 is corrected, the package of the semiconductor laser 11 is adjusted by being rotated about the optic axis so as to minimize this aberration.

Since aberration caused by the glass plate 14 and/or the glass plate 15 can be corrected by thus utilizing the glass plate 16A provided in the window of the package 18 of the semiconductor laser 11, the optical system of the image pick-up apparatus can be simplified and both assembly and adjustment are facilitated. In addition, by optimizing the thickness of the glass plate 16A, it is possible also to correct the astigmatism of the laser diode.

Fig. 16 illustrates a structure in which the optical system shown in Figs.5 and 6 is accommodated within a holder.

The semiconductor laser 11, the glass plates 14, 15, the collimating lens 12, the photodetectors 21, 22 (photodetector 21 is not shown), and an uprighting mirror 27 disposed at an incline with respect to the optic axis are accommodated in and retained by a holder 26. Light rendered parallel by the collimating lens 12 has its optical path deflected at right angles by the mirror 27 before being emitted in the upward direction (the direction rising at right angles from the page).

The glass plates 14 and 15 are arranged between the semiconductor laser 11 and collimating lens 12. Since the light is refracted by these glass plates 14, 15, the optic axis OP1 of the semiconductor laser 11 and the optic axis OP2 of the collimating lens 12 do not coincide. Though the displacement between the two optic axes OP1 and OP2 due to the glass plate 15 is illustrated in Fig. 16, the optic axes are displaced in the same manner also by the glass plate 14. The semiconductor laser 11 and collimating lens 12 are positioned and secured within the holder 26 in such a manner that their optic axes will be shifted by a distance corresponding to the displacement of the above-mentioned optic axes.

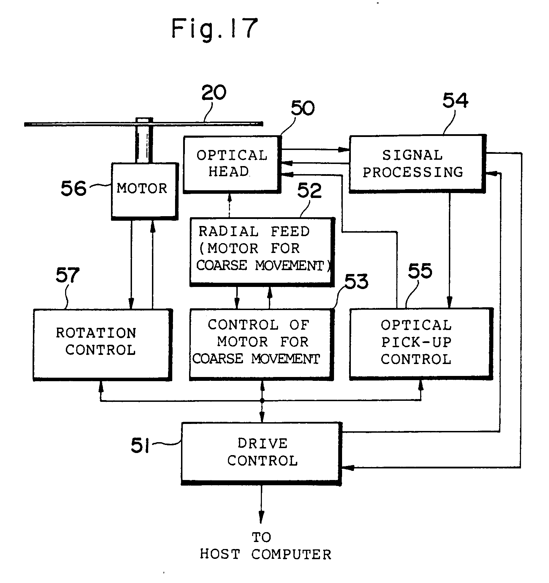

Fig. 17 illustrates an arrangement in which the optical pick-up apparatus according to the present invention is applied to the drive of an optical disk or photomagnetic disk.

The drive includes a drive control unit 51 which controls the overall operation of the drive by commands from a host computer. A coarse-movement motor controller 53, an optical pick-up controller 55 and a rotation controller 57 are controlled by the drive control unit 51.

The optical disk 20 or photomagnetic disk 30 are driven rotatively by a motor 56, which is controlled by the rotation controller 57.

The above-described optical pick-up apparatus, which has the structure of the kind shown in Fig. 16, by way of example, is included in an optical head 50. The latter is moved radially of the optical disk 20 or photomagnetic disk 30 by a radial feed mechanism 52 which includes a coarse-movement motor. The feed mechanism 52 is controlled by the coarse-movement motor controller 53.

Fine track-access control, tracking control and focusing control in the optical head 50 are carried out by the optical pick-up controller 55. A signal to be written on the photomagnetic disk 30 is applied to a signal processing circuit 54 from the drive control unit 51. A signal read from the optical disk 20 or photomagnetic disk 30 is applied to the drive control unit 51 from the signal processing circuit 54. The signal processing circuit 54 controls the drive of the semiconductor laser 11 in the optical pick-up apparatus and processing the detection signals from the photodetectors 21 - 23. The signal processing circuit 54 applies the tracking error signal and the focusing error signal to the optical pick-up controller 55.

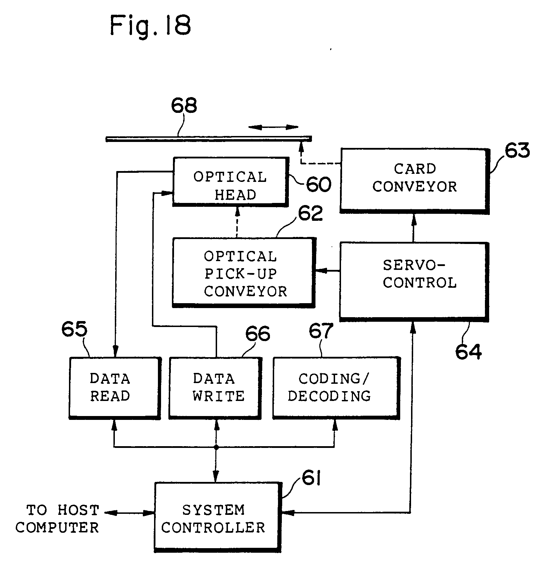

Fig. 18 illustrates an arrangement in which the optical pick-up apparatus according to the present invention is applied to drive of an optical card or photomagnetic card.

The drive includes a system control unit 61 for controlling the overall operation operation of the drive in response to commands from a host computer. A servo-controller 64, a data reader 65, a data writer 66 and a coder/decoder 67 are controlled by the system control unit 61.

An optical card or photomagnetic card 68 is transported longitudinally by a card conveyor 63. An optical head 60 which includes the above-described optical pick-up apparatus is moved by an optical pick-up conveyor 62 in a direction perpendicular to the direction in which the optical or photomagnetic card 68 is conveyed. A number of tracks extending in the longitudinal of the card 68 are arrayed in the transverse direction thereof. A prescribed track on the optical or photomagnetic card 68 is accessed by moving the optical head 60. Data written on or read from the optical or photomagnetic card 68 by the optical head 60 is carried out in the process of conveying the card 68 in the longitudinal direction thereof. The card conveyor 63 and the optical pick-up conveyor 62 are controlled by a servo-controller 64.

The data reader 65 controls the semiconductor laser 11 of the optical pick-up apparatus and processes the output signals from the photodetectors 21, 22. The data writer 66 controls the semiconductor laser 11 when data is written. The coder/decoder 67 codes the data to be written on the optical or photomagnetic card 68 and applies the coded data to the data writer 66. It also decodes read data provided by the data reader 65 and sends the decoded data to the system control unit 61.

By thus applying the optical pick-up apparatus of the present invention to the drive of an optical disk, photomagnetic disk, optical card or photomagnetic card, etc., the construction of the drive is simplified.

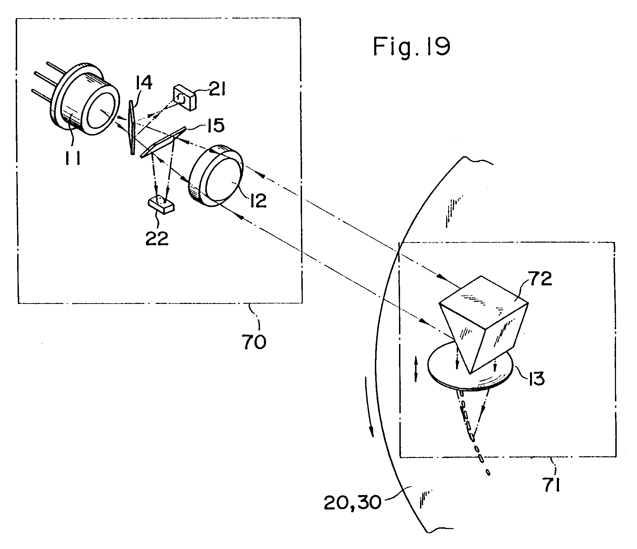

Fig. 19 illustrates an example of the construction of the optical head 50 in the drive of the photomagnetic disk shown in Fig. 17.

The head comprises a stationary portion 70 and a moving portion 71. The stationary portion 70 is secured to a prescribed location of the drive. The moving portion 71 is moved or displaced by the radial feed mechanism 52 and the optical pick-up controller 55.

The stationary portion 70 is equipped with the semiconductor laser 11, glass plates 14, 15, photodetectors 21, 22 (which include the analyzers 31, 32 as necessary), and the collimating lens 12 of the condensing optical system.

The moving portion 71 is equipped with a mirror 72 and the objective lens 12 of the condensing optical system. Light rendered parallel by the collimating lens 12 of the stationary portion 70 is projected upon the mirror 72 of the moving portion, the light is deflected by the mirror 72, and the deflected light impinges upon the objective lens 13. This light is condensed on the optical disk 20 or or photomagnetic disk 30 by the objective lens 13. Reflected light from the disk 20 or 30 is rendered parallel by the objective lens 13, this light is reflected by the mirror 72, and the reflected light is directed toward the collimating lens 12 of the stationary portion 70. The direction connecting the collimating lens 12 and mirror 72 is the radial direction of the disk 20 or 30, namely the direction in which the moving portion 71 is moved by the feed mechanism 52. The objective lens 13 is displaced by an actuator (not shown) for the sake of fine track access, tracking control and focusing control.

Since the construction of the moving portion 71 moved or displayed is thus simplified, quicker track access is achieved.

It goes without saying that the construction of the head shown in Fig. 19 is applicable also to an optical system for recording/playing back an optical disk of the kind shown in Fig. 1.

In each of the embodiment described above, a glass plate is arranged on the optical path on which the reflected light from an optical disk or photomagnetic disk converges, and the glass plate is inclined with respect to the optic axis. Since the glass plate has a finite thickness, reflection of incident light occurs at both the top and bottom surfaces of the plate. The reflected light beam from the top surface of the glass plate and the reflected light beam from the bottom surface of the glass plate both impinge upon photodetectors.

As set forth above, each photodetector includes photodiodes partitioned into several sections, and a focusing error signal, a tracking error signal and a read signal indicative of information are formed based upon output signals from these photodiodes. Accordingly, these signals may be adversely affected by the positions at which these two reflected light beams impinge, or the sizes of these reflected light beams.

An arrangement will now be described in which a correct focusing error signal, tracking error signal and read signal are obtained even if two reflected light beams from the top and bottom surfaces of a glass plate impinge upon a photodetector.

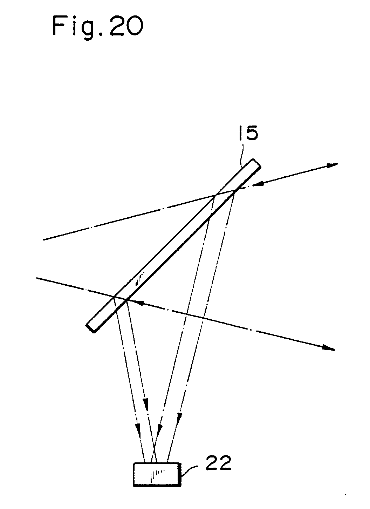

Fig. 20 illustrates only the glass plate 15 and photodetector 22 extracted from the above-described optical look-up apparatus. The analyzer 32 is deleted from the drawing. Reflected light from the optical disk 20 or photomagnetic disk 30 impinges upon the photodetector 22 upon being reflected by the top surface of the glass plate 15 and also by the bottom surface of the glass plate 15. Similarly, reflected light from both the top and bottom surfaces of the glass plate 14 is incident upon the photodetector 21 (refer again to Fig. 10).

As set forth earlier, the push-pull method is used in detecting tracking error, and the double-beam size method is used in detecting focusing error. In a case where focusing is being carried out correctly, the photodetector 21 is disposed in back of (see Fig. 6, for example) the focal point of the reflected light from the glass plate 14 and the photodetector 22 is disposed in front of the focal point of the reflected light from the glass plate 15 for the double-beam size method.

Since the photodetector 22 is placed in front of the focal point of the reflected light from the glass plate 15, the spot $SP_{21}$ produced by the reflected light from the top surface of the glass plate 15 is larger than the spot $SP_{22}$ produced by the reflected light from the bottom surface, as illustrated in Fig. 11. Since the photodetector 21 is placed in back of the focal point of the reflected light from the glass plate 14, the spot $SP_{11}$ produced by the reflected light from the top surface of the glass plate 14 is smaller than the spot $SP_{12}$ produced by the reflected light from the bottom surface.

However, even though reflected light from the top and bottom surfaces of the glass plate 14 or 15 is incident upon the photodetector 21 or 22, the spots $SP_{11}$ and $SP_{12}$ or $SP_{21}$ and $SP_{22}$ produced by this reflected light line up in the direction of the straight lines partitioning the photodiodes 21a - 21c or 22d - 22f. As a consequence, the spots of this reflected light are made to contribute to the output signal of each photodiode in the same way, as mentioned earlier, and the tracking error signal, focusing error signal and read signal can be produced without any hindrances whatsoever (i.e., without error being produced).

The relationship between glass-plate thickness and the spot of reflected light will be considered with reference to Figs. 21a - 21c taking the glass plate 15 and photodetector 22 as an example.

Fig. 21a illustrates a case in which the glass plate 15 is thin. The spots $SP_{21}$ and $SP_{22}$ produced by

reflected light from the top and bottom surfaces of the glass plate 15 overlap upon the light-receiving surfaces of the photodiodes 22d - 22f of photodetector 22. When two beam spots overlap in this manner, interference fringes are produced. These interference fringes vary depending upon a fluctuation in temperature and wavelength. Owing to manufacturing errors which arise when fabricating a variety of optical elements, there are occasions where the fringes are inclined with respect to the straight lines partitioning the photodiodes 22d - 22f. Under such conditions, there is a possibility that the focusing error signal, tracking error signal and read signal will become unstable. On the other hand, when the glass plate 15 employed is thin, as mentioned here, aberration on an optical disk or photomagnetic disk becomes small. For this reason, a thick glass plate is desirable.

Fig. 21c illustrates a case in which the glass plate 15 is thick. Though the two spots $SP_{21}$ and $SP_{22}$ are spaced apart, one spot, namely $SP_{22}$, is extremely small. When the diameter of the spot $SP_{22}$ is made smaller than the width of the central photodiode 22e, the light from spot $SP_{22}$ contributes solely to the output signal of photodiode 22e; it has no effect at all upon the output signals of the other photodiodes 22d, 22f. As a result, detection of focusing error by the above-mentioned double-beam size method is rendered inaccurate. In accordance with the general definition, the diameter of a spot refers to the range of light having an intensity which is $1/e^2$ (on the order of 13%) of the maximum value of light intensity. If the glass plate were to be made large in thickness, aberration would increase and it would be difficult to form a correct beam spot on an optical disk or photomagnetic disk.

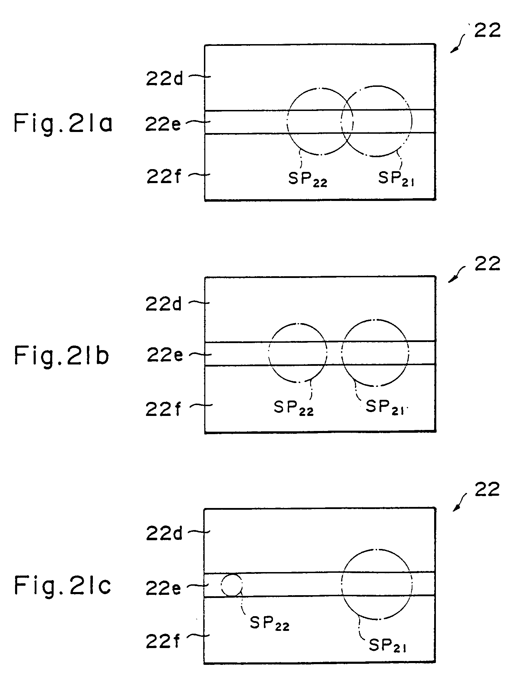

Fig. 21b illustrates a case in which the glass plate 15 is designed to have an appropriate thickness. The two beam spots $SP_{21}$ and $SP_{22}$ are spaced apart from each other and both beam spots illuminate all of the photodiodes 22d - 22f. The optimum thickness of the glass plate can be said to be the smallest of those thicknesses for which the reflected-light spots $SP_{21}$ and $SP_{22}$ will not overlap. In actuality, one yardstick for such a thickness is on the order of 500 $\mu$m. Of course, since optimum thickness varies depending upon the nature of the condensing optical system, this figure is not necessarily the correct one under all circumstances.

By thus designing the thickness of the glass plate to be such that the spots of the reflected light from the top and bottom surfaces of the glass plate do not overlap and, moreover, the size of the smaller of the two reflected-light spots is larger than the width of the central photodiode, a correct focusing error signal, etc., can be obtained at all times. This fact applies also to the combination of the glass plate 14 and photodetector 21.

Described next will be an arrangement for amplifying the rotational angle of the plane of polarization of reflected light from a photomagnetic recording medium in an optical pick-up apparatus suitable for recording/playback of information or data on a photomagnetic recording medium such as a photomagnetic disk or photomagnetic card, etc.

This discussion is premised on the optical system shown in Figs. 5 and 6.

A coating film is formed on the reflective surfaces of the glass plates 14 and 15, and the rotational angle of the plane of polarization of reflected light is amplified by this coating film.

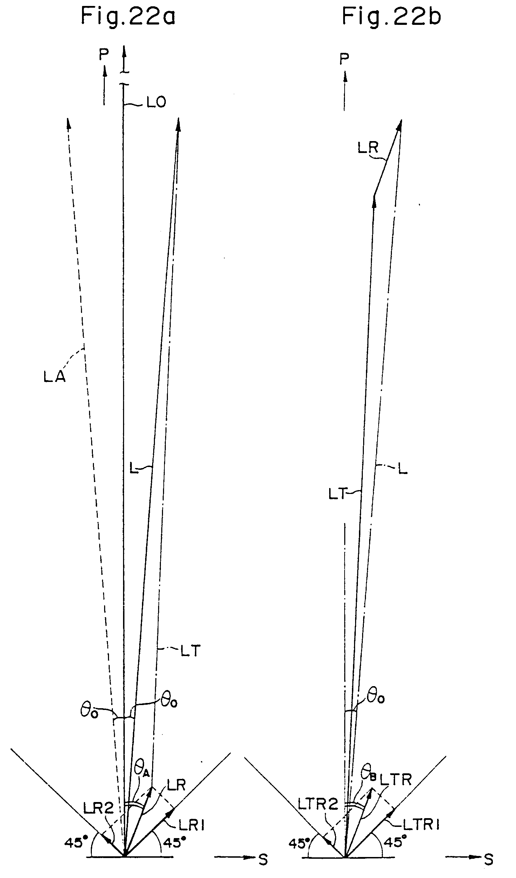

Figs. 22a and 22b are vector diagrams illustrating the principle according to which the rotational angle of the plane of polarization is amplified.

In Fig. 22a, LO represents the vector of emergent light from the semiconductor laser 11. The direction of polarization of the emergent light LO is made to coincide with P-polarized light on the glass plate 15. The beams of reflected light from the photomagnetic disk 30 are represented by vectors L and LA. Reflected light L indicated by the solid line is reflected light which prevails in a case where data has been recorded on the photomagnetic disk 30. The plane of polarization of this light is rotated (the Kerr effect) through an angle $\theta_0$ in a certain direction with the plane of polarization of the emergent light serving as a reference. In a case where data has not been recorded on the photomagnetic disk 30, the plane of polarization is rotated through an angle of $\theta_0$ in the opposite direction (i.e., $-\theta_0$ rotation), as in the manner of the reflected light LA indicated by the dashed line.

The polarized-light components parallel and perpendicular to the plane of the glass plate are referred to as the S-polarized light component and P-polarized light component, respectively, as mentioned earlier. It is known that by forming a multilayered film having suitable refractive indices on the surface of the glass plate and changing the angle at which light is incident upon the surface of the glass plate, the reflectivities (transmittances) of the S- and P-polarized light components can be changed over a certain range. That is, it is possible to make the reflectivities of the S- and P-polarized light take on desired values by suitably deciding the refractive index and film thickness of each of the films in the multilayered film.

Coating films having the properties set forth below are formed on the surface of the glass plate 15.

S-polarized light:    transmittance = 50%
                      reflectivity = 50%

P-polarized light:  transmittance = 90%
reflectivity = 10%

Of the reflected light L from the photomagnetic disk 30, the vector of the light reflected by the glass plate 15 is indicated by LR, and the vector of the light which is transmitted by the glass plate 15 is indicated by LT. The angle of rotation of the plane of polarization of the reflected light LR with respect to the projected light LO is $\theta_A$. The rotational angle $\theta_A$ is greater than the rotational angle $\theta_0$ of the reflected light L. It will be understood that the rotational angle of the plane of polarization is amplified.

Let $L_P$ and $L_S$ respectively represent the P- and S-polarized light components of the reflected light L from the photomagnetic disk 30 (the glass plate 15 serving as a reference). The relationship between these vectors is represented by the following equation:

$$L = L_P + L_S \qquad \text{Eq. 1}$$

Reflected light LR from the glass plate 15 is expressed as follows:

$$LR = 0.1L_P + 0.5L_S \qquad \text{Eq. 2}$$

The reflected light LR is incident upon the photodetector 22. The analyzer 32 provided on the front side of the photodetector 22 is so adapted as to transmit light whose direction of polarization forms an angle of 45° with both the P- and S-polarized light components. Further, the analyzer 32 is set in such a manner that the direction of polarization of light transmitted by the analyzer 31 on the front side of the photodetector 21 is perpendicular to the direction of polarization of the light transmitted by the analyzer 32 and forms an angle of 45° with respect to the direction of polarization of the projected light LO. Let LR1, LR2 represent the components of reflected light LR in the directions of polarization of the analyzers 32, 31. The polarized-light component LR1 is received by the photodetector 22.

As shown in Fig. 22b, the light LT transmitting through the glass plate 15 is indicated by the solid line, and the reflected light beams LR and L are also illustrated. Some of the transmitted light LT is reflected by the glass plate 14. The transmittances and reflectivities of the films formed on the glass plate 14 are set as follows (with the glass plate 14 serving as a reference):

S-polarized light:  transmittance = 90%
reflectivity = 10%
P-polarized light:  transmittance = 0%
reflectivity = 100%

The transmitted light LT is represented by the following:

$$LT = 0.9L_P + 0.5L_S \qquad \text{Eq. 3}$$

and the S- and P-polarized light components in the glass plate 14 correspond to the P- and S-polarized light components in the glass plate 15, respectively. Therefore, the reflected light LTR of the glass plate 14 is expressed by the following equation:

$$LTR = 0.09L_P + 0.5L_S \qquad \text{Eq. 4}$$

It will be understood that the reflected light LTR (Eq. 4) from the glass plate 14 is approximately equal to the reflected light LR (Eq. 2) from the glass plate 15. The rotational angle $\theta_B$ of the plane of polarization of LTR also is amplified and is approximately equal to the rotational angle $\theta_A$ of the plane of polarization of the reflected light LR. (The S- and P-polarized light components of Figs. 22a, 22b are drawn using the glass plate 15 as a reference.)

The reflected light LTR is incident upon the photodetector 21 via the analyzer 31. The reflected light LTR also can be divided into polarized-light components LTR1, LTR2, and the polarized-light component LTR2 of these two components is received by the photodetector 21.

Thus, the two reflected light beams LR, LTR are of substantially the same magnitude in terms of vectors and the rotational angles of their planes of polarization are amplified. The two perpendicular components (both of which form an angle of 45° with respect to the direction of polarization of the projected light) LR1, LTR2 of the reflected light beams LR, LTR are received by the photodetectors 22, 21, respectively.

By virtue of the foregoing arrangement, a change in the angle of rotation of a plane of polarization, which is produced by the information recorded on the photomagnetic disk 30, and which is amplified in the manner described above, is detected based upon the difference between the output signals from the photodetectors 21 and 22.

It goes without saying that a polarizer may be provided on the front side of the semiconductor laser 11.

Further, it goes without saying that the output signals from the photodetectors 21 and 22 are used in producing the focusing error signal and tracking error signal, as mentioned earlier.

The above-described arrangement is applicable to the optical systems shown in Figs. 2, 3, 4, 8 and 9.

An arrangement will now be described in which the light reflected from both the top and bottom surfaces of a glass plate is utilized in positive fashion so that it will suffice to provide the optical system with only a single glass plate. In the following embodiment also, components identical to those in the foregoing embodiments are designated by like reference characters as long as it is believed that confusion will not result.

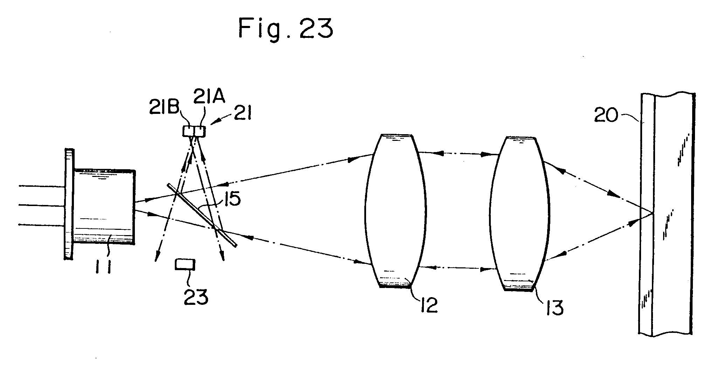

Fig. 23 illustrates the construction of an optical pick-up apparatus for recording/playback of information on an optical disk.

The optical pick-up apparatus includes the semiconductor laser 11 and the optical condensing system for condensing divergent light, which is emitted by the semiconductor 11, on the optical disk 20. The condensing optical system includes the collimating lens 12 for collimating divergent light, and the objective lens 13 for condensing the collimated light.

The single glass plates 15 is disposed on the optical path of the divergent light between the semiconductor laser 11 and collimating lens 12 at an inclination with respect to the optic axis of the semiconductor laser 11 and the condensing optical system.

The divergent light from the semiconductor laser 11 passes through the glass plate 15 and is condensed on the optical disk 20 by the condensing optical system. Some of the divergent light emitted by the semiconductor laser 11 is reflected by the glass plate 15 and then received by the photodetector 23. The intensity of the emitted light from the semiconductor laser 11 is controlled based upon a received-light signal from the photodetector 23.

The light reflected from the optical disk 20 is condensed by the condensing optical system. Some of the reflected light to be condensed is reflected by the top surface (the surface on the side of the lens 12) of the glass plate 15 so as to impinge upon a photodetector 21A. The portion of the reflected light which passes through the glass plate 15 is further reflected by the bottom surface (the surface on the side of the semiconductor laser 11) of the glass plate 15 so as to impinge upon a photodetector 21B. Only one photodetector is provided, as indicated at numeral 21. Though it is permissible to split the light-receiving element of the photodetector 21 into a plurality of such elements, it will be assumed here, in order to facilitate the description, that the reflected light beams from the top and bottom surfaces of the glass plate 15 are received by the separate photodetectors 21A, 21B.

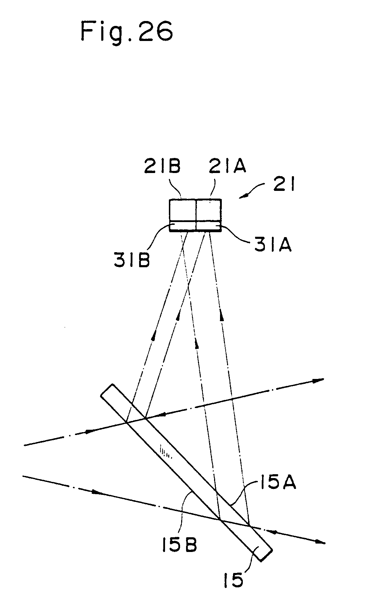

The photodetector 21A is disposed in front of the focal point of the reflected light from the top surface of glass plate 15, and the photodetector 21B is disposed in back of the focal point of the reflected light from the bottom surface of glass plate 15, in a case where focusing is being carried out correctly (see Fig. 26).

Since the reflected light from the optical disk 20 is condensed by the condensing optical system, it is not always necessary to provide condensing lenses or the like between the top and bottom surfaces of the glass plate 15 and the photodetectors 21A, 21B.

Output signals from the photodetectors 21A and 21B are used in the formation of a focusing error signal, a tracking error signal and a read signal.

The focusing error signal is formed by a double-beam size method or by an astigmatism method, by way of example. In the double-beam size method, the photodetectors 21A and 21B are arranged respectively at positions in front and in back of the focal point of the reflected light in a case where focusing has been performed correctly, as set forth earlier. The photodetectors 21A and 21B are so designed as to obtain signals which represent the sizes of the light beams which they have received. The focusing error signal is produced by taking the difference between the output signals of the photodetectors 21A and 21B. The photodetectors 21A and 21B each include photodiodes in three sections, by way of example. The difference between the output signal of the centrally located photodiode and the sum of the outputs signals from the photodiodes on either side becomes the output signal of the photodetector.

The light reflected from the glass plate arranged at an inclination with respect to the optic axis develops aberration which includes astigmatism. A focusing error signal based upon the astigmatism method is obtained by utilizing this astigmatism. For example, either the photodetector 21A or 21B is composed of photodiodes in four sections, and the focusing error signal is obtained by applying addition/subtraction operations to the output signals from these four diodes.

In order to produce the tracking error signal, the push-pull method is employed, by way of example. Specifically, the photodetector 21A or 21B is so adapted as to contain photodiodes, in two or three sections, that are arranged perpendicular to the track direction of the optical disk 20. A signal representing the difference between the output signals from the photodiodes on both sides constitutes the tracking error signal.

The read signal indicative of the information recorded on the optical disk 20 can be formed by adding the output signals from the photodetectors 21A and 21B. Of course, the output signal from either the photodetector 21 or 22 may serve as the read signal.

If necessary, the reflectivity and transmittance of the glass plate are adjusted appropriately beforehand as by a coating in order that light of same intensity will impinge upon both of the photodetectors 21A, 21B.

A light-beam shaping optical system for correcting light having an elliptical cross section as emitted by the semiconductor laser 11 into light having a circular cross section can also be provided between the semiconductor laser 11 and the collimating lens 12 of the condensing optical system. Furthermore, an isolator optical system which transmits the emitted light from the semiconductor laser 11 but blocks the reflected light from the optical disk 20 to prevent this light from impinging upon the semiconductor laser 11 may be provided between the semiconductor laser 11 and the glass plate 15. If necessary, a condensing optical system can also be provided between the glass plate and the photodetectors.

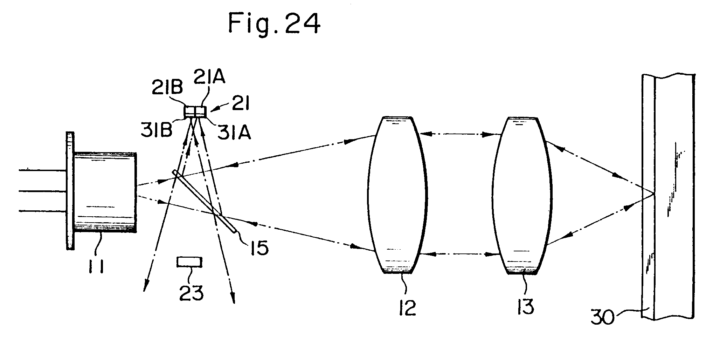

Fig. 24 illustrates the construction of an optical pick-up apparatus suitable for recording/playback of a photomagnetic disk according to a fourth embodiment of the present invention. Components identical to those shown in Fig. 23 are designated by like reference numerals and need not be described again.

Here analyzers 31A and 31B are provided in front of the light-receiving surfaces of the respective photodetectors 21A and 21B. The analyzers 31A and 31B are arranged in such a manner that the polarizing directions of the light passing through them are mutually perpendicular. Further, the polarizing direction of the linearly polarized light emitted by the semiconductor laser 11 forms an angle of 45° with both polarizing directions of the light which passes through the analyzers 31A, 31B.

By virtue of the foregoing arrangement, a change in the angle of rotation of the plane of polarization caused by the information recorded on the photomagnetic disk 30 is detected in the form of the difference between the output signals from the two photodetectors 21A and 21B.

It goes without saying that an analyzer may also be provided in front of the semiconductor laser 11.

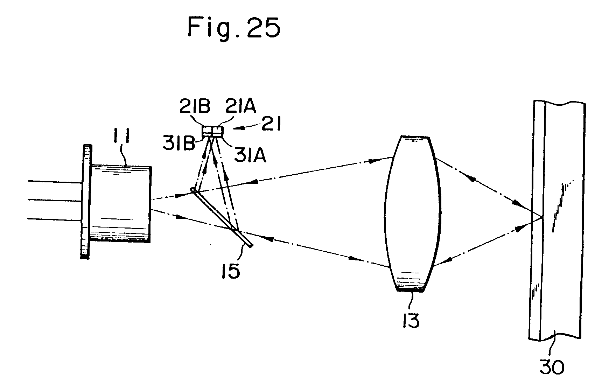

Fig. 25 illustrates a modification.

Here the collimating lens 12 is removed from the condensing optical system with a view to achieving a major simplification. The objective lens 13 condenses the divergent light emission from the semiconductor laser 11 on the photomagnetic disk 30. Reflected light from the photomagnetic disk 30 is condensed by the objective lens 13. Other components are the same as those shown in Fig. 24.

In the optical pick-up apparatus shown also in Fig. 23, it goes without saying that the collimating lens 12 can be removed from the condensing optical system in the manner illustrated in Fig. 25.

Fig. 26 illustrates, in enlarged form, the arrangement of the photodetectors 21A, 21B, analyzers 31A, 31B and glass plate 15.

Fig. 26 will be referred to in order to describe an example of the reflectivities and transmittances of coating films formed on a top surface 15A and bottom surface 15B of the glass plate 15.

The polarized-light components parallel and perpendicular to the plane of the glass plate are referred to as the S-polarized light component and P-polarized light component, respectively, as mentioned earlier. As set forth above, it is known that by forming a multilayered film having suitable refractive indices on the surface of the glass plate and changing the angle at which light is incident upon the surface of the glass plate, the reflectivities (transmittances) of the S- and P-polarized light components can be changed over a certain range. That is, it is possible to make the reflectivities of the S- and P-polarized light take on desired values by suitably deciding the refractive index and film thickness of each of the films in the multilayered film.

Coating films having the properties set forth below are formed on the top surface 15A of the glass plate 15.

S-polarized light:　　transmittance = 80%
　　　　　　　　　　　　reflectivity = 20%
P-polarized light:　　transmittance = 100%
　　　　　　　　　　　　reflectivity = 0%

The light reflected by the top surface 15A of the glass plate 15 impinges upon the photodetector 21A. Since the reflectivity of the P-polarized light at the top surface 15A of glass plate 15 is 0%, only the S-polarized line is reflected at this surface and impinges upon the photodetector 21A. As a consequence, the analyzer 31A need not necessarily be provided.

Coating films having the properties set forth below are formed on the bottom surface 15B of the glass plate 15.

S-polarized light:    transmittance = 80%
                      reflectivity = 20%
P-polarized light:    transmittance = 80%
                      reflectivity = 20%

Some of the light transmitted by the glass plate 15 is reflected at the aforesaid reflectivity and impinges upon the photodetector 21B upon passing through the analyzer 31B. By making the direction of polarization of the light which passes through the analyzer 31B coincide with the P-polarized light, the light having the P polarization will be detected by the photodetector 21B.

Thus, the S-polarized light is received by the photodetector 21A, and the P-polarized light is received by the photodetector 21B. The directions of polarization of the S- and P-polarized light are orthogonal. The direction of polarization of the light emitted from the semiconductor laser 11 is set so as to form an angle of 45° with the directions of polarization of the S- and P-polarized light.

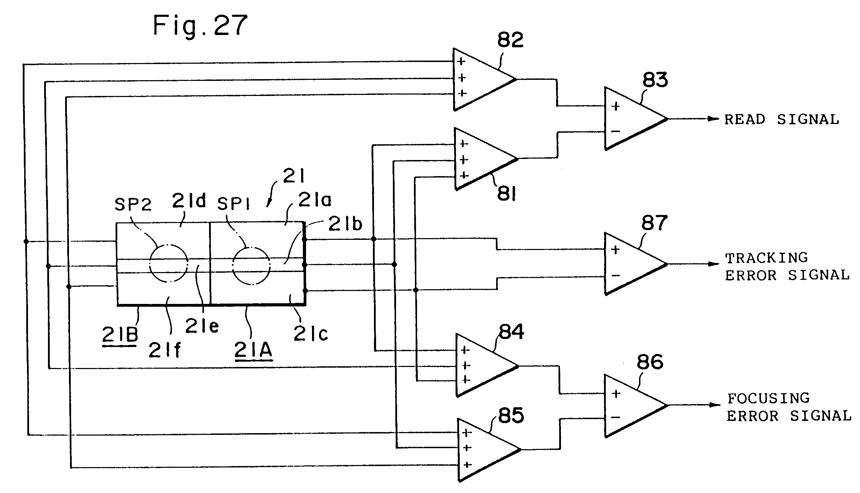

Fig. 27 illustrates a concrete example of the construction of the photodetector 21 (or of photodetectors 21A and 21B) and of a circuit for producing the tracking error signal, focusing error signal and read signal based upon the output signal from this photodetector.

Each of the photodetectors 21A and 21B is composed of photodiodes in three sections. It goes without saying, therefore, that the photodetector 21 comprises photodiodes in six sections.

The photodetector 21A comprises three photodiodes 21a, 21b and 21c that are electrically isolated from one another, with the width of the central diode 21b being designed to be the smallest. The straight lines partitioning the photodiodes 21a, 21b and 21c extend in the direction of the tracks on the optical disk or photomagnetic disk in the optical system shown in Figs. 23 through 25.

Similarly, the photodetector 21B comprises three photodiodes 21d, 21e and 21f that are electrically isolated from one another, with the width of the central diode 21e being designed to be the smallest. The straight lines partitioning the photodiodes 21d, 21e and 21f extend in the direction of the tracks on the optical disk or photomagnetic disk in the optical system shown in Figs. 23 through 25.

The photodetectors 21A and 21B are so disposed that spots $SP_1$ and $SP_2$, which are formed on the photodiodes 21a - 21f by the light reflected from the top and bottom surfaces 15A, 15B of the glass plate 15 are arrayed along the straight lines partitioning the photodiodes 21a - 21f.

The push-pull method is used in detecting tracking error, and the double-beam size method is used in detecting focusing error. In a case where focusing is being carried out correctly owing to the double-beam size method, the photodetector 21A is disposed in front of the focal point of the reflected light from the top surface 15A of the glass plate 15, and the photodetector 21B is disposed in back of the focal point of the reflected light from bottom surface 15B of the glass plate 15 (see Fig. 26).

The tracking error signal is produced by a subtractor 87, which takes the difference between the output signals from the photodiodes 21a and 21c of photodetector 21A. The tracking error signal can also be produced by taking the difference between the output signals from the photodiodes 21d and 21f of photodetector 21B.

The output signals from the photodiodes 21a, 21b, 21c, 21d, 21e, 21f are represented by a, b, c, d, e and f, respectively. The focusing error signal is produced by adders 84, 85 and a subtractor 86 cooperating to perform the operation $(a+c+e) - (b+d+f)$.

The read signal is produced by adders 81, 82 and a subtractor 83 cooperating to perform the operation $(a+b+c) - (d+e+f)$.

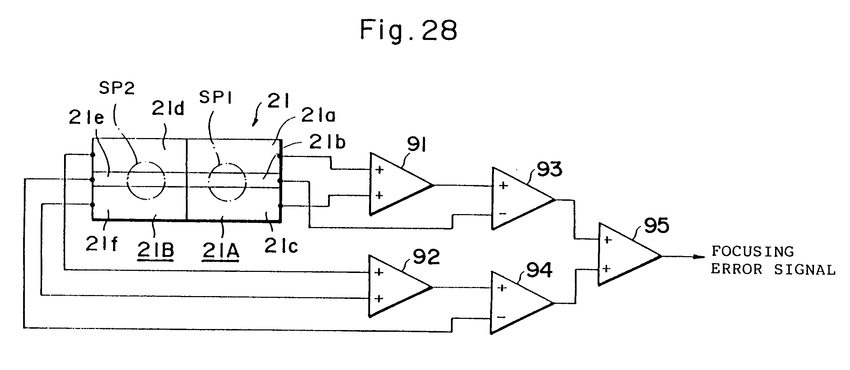

Fig. 28 illustrates another example of an arrangement for producing the focusing error signal.

In this example, the photodetectors 21A and 21B are both placed in front (or in back) of the focal points of the reflected light from the top and bottom surfaces of the glass plate 15, respectively.

The focusing error signal is produced by calculating $(a+c-b) + (d+f-e)$, which is performed by adders 91, 92 and subtractors 93, 94, 95. It is also possible to produce the focusing error signal by performing the arithmetic operation $a+c-b$ or $d+f-e$ using the output signal from either the photodetector 21A or 21B.

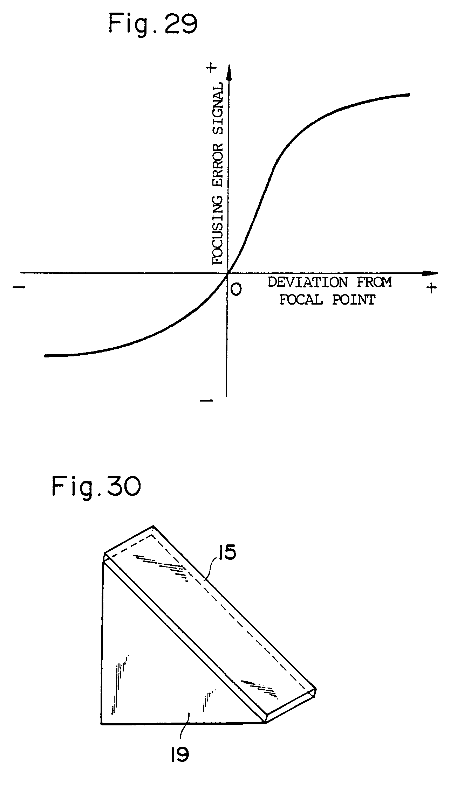

By virtue of this arrangement, the focusing error signal is rendered asymmetrical with respect to the point at which a shift from the focal point is zero as shown in Fig. 29. As a result, it is necessary to correct this asymmetrical characteristic in the focusing control mechanism.

The tracking error signal and the read signal can be produced by arithmetic operations performed by the circuit shown in Fig. 27.

In general, the cross section of the light emitted from a semiconductor laser is elliptical. A prism is used in order to shape the light into light having a circular cross section. As shown in Fig. 30, it is desirable to adopt an arrangement in which the glass plate 15 is affixed (as by bonding) to one surface of a prism 19 for shaping the beam of the light emitted by the semiconductor laser. Such an arrangement makes it possible to reduce the number of component parts. It goes without saying that the glass plate 15 may be affixed not only to the inclined surface of the prism 19 but also to another surface. In either case, it will suffice if the glass plate 15 is disposed obliquely with respect to the optic axis of the shaped light which exits from the prism 19.

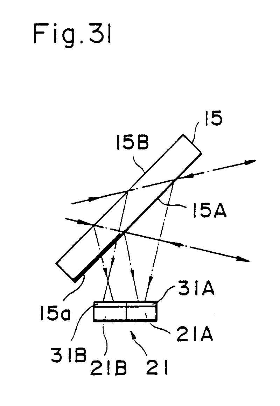

Fig. 31 illustrates the arrangement of the glass plate 15 provided with a function for amplifying the angle of rotation of polarization in the optical pick-up apparatus shown in Fig. 24 or 25. Though the direction in which glass plate 15 is inclined in Fig. 31 differs from that shown in Figs. 24 and 25, it is permissible for the glass plate to be inclined in either direction.

The thickness and inclination of the glass plate 15, as well as the angle of convergence of the reflected light from the photomagnetic disk 30, are decided in such a manner that a portion (indicated at numeral 15A) at which the reflected light from the photomagnetic disk 30 is reflected by the top surface of the glass plate 15, and a portion (indicated by the bold line, assigned numeral 15a) of the top surface through which the reflected light from the photomagnetic disk 30 is transmitted upon being reflected by the bottom surface 15B, do not overlap on the top surface of the glass plate 15. It is assumed that 100% of both the S- and P-polarized light components are transmitted at portion 15a.

Reference will now be had to the vector diagrams of Figs. 22a, 22b illustrating the principle according to which the rotational angle of the plane of polarization is amplified.

In Fig. 22a, LO represents the vector of emergent light from the semiconductor laser 11. The direction of polarization of the emergent light LO shall be P-polarized light. The direction perpendicular to the P-polarized light is S-polarized light. The beams of reflected light from the photomagnetic disk 30 are represented by vectors L and LA. Reflected light L indicated by the solid line is reflected light which prevails in a case where data has been recorded on the photomagnetic disk 30. The plane of polarization of this light is rotated (the Kerr effect) through an angle $\theta_0$ in a certain direction. In a case where data has not been recorded on the photomagnetic disk 30, the plane of polarization is rotated through an angle of $\theta_0$ in the opposite direction (i.e., $-\theta_0$ rotation), as in the manner of the reflected light LA indicated by the dashed line.

Coating films having the properties set forth below are formed on the portion 15A on top surface of the glass plate 15.

| | | |
|---|---|---|
| S-polarized light: | transmittance = 50% | |
| | reflectivity = 50% | |
| P-polarized light: | transmittance = 90% | |
| | reflectivity = 10% | |

Of the reflected light L from the photomagnetic disk 30, the vector of the light reflected by the portion 15A of the top surface of glass plate 15 is indicated by LR, and the vector of the light which is transmitted by this portion 15A is indicated by LT. The angle of rotation of the plane of polarization of the reflected light LR with respect to the projected light LO is $\theta_A$. The rotational angle $\theta_A$ is greater than the rotational angle $\theta_0$ of the reflected light L. It will be understood that the rotational angle of the plane of polarization is amplified.

Let $L_P$ and $L_S$ respectively represent the P- and S-polarized light components of the reflected light L from the photomagnetic disk 30. The relationship between these vectors is represented by the aforementioned Eq. (1).

Reflected light LR from the portion 15A on the top surface of glass plate 15 is expressed by the aforementioned Eq. (2).

The reflected light LR is incident upon the photodetector 21A. The analyzer 31A provided on the front side of the photodetector 21A is so adapted as to transmit light whose direction of polarization forms an angle of 45° with both the P- and S-polarized light components. Further, the analyzer 31B is set in such a manner that the direction of polarization of light transmitted by the analyzer 31B on the front side of the photodetector 21B is perpendicular to the direction of polarization of the light transmitted by the analyzer 31A and forms an angle of 45° with respect to the direction of polarization of the P-polarized light. Let LR1, LR2 represent the components of reflected light LR in the directions of polarization of the analyzers 31A, 31B. The polarized-light component LR1 is received by the photodetector 21A.

As shown in Fig. 22b, the light LT transmitted by the surface portion 15A of glass plate 15 is indicated by the solid line, and the reflected light beams LR and L are also illustrated. Some of the transmitted light LT is reflected by the bottom surface 15B of glass plate 15. The transmittances and reflectivities of the films formed on the bottom surface 15B of the glass plate 15 are ser as follows: -

| | | |
|---|---|---|
| S-polarized light: | transmittance = 0% | |
| | reflectivity = 100% | |
| P-polarized light: | transmittance = 90% | |
| | reflectivity = 10% | |

The transmitted light LT is represented by the aforementioned Eq. (3). Therefore, the reflected light LTR from the bottom surface 15B is expressed by the aforementioned Eq. (4).

It will be understood that the reflected light LTR (Eq. 4) from the bottom surface 15B is approximately equal to the reflected light LR (Eq. 2) from the top surface 15A. The rotational angle $\theta_B$ of the plane of polarization of LTR also is amplified and is approximately equal to the rotational angle $\theta_A$ of the plane of polarization of the reflected light LR.

The reflected light LTR passes through the surface portion 15a of the glass plate 15 as is and is incident upon the photodetector 21B via the analyzer 31B. Though the reflected light LTR also can be divided into polarized-light components LTR1, LTR2, the polarized-light component LTR2 of these two components is received by the photodetector 21B.

Thus, the two reflected light beams LR, LTR are of substantially the same magnitude in terms of vectors and the rotational angles of their planes of polarization are amplified. The two perpendicular components (both of which form an angle of 45° with respect to the P-polarized light) LR1, LTR2 of the reflected light beams LR, LTR are received by the photodetectors 21A, 21B, respectively.

The tracking error signal, focusing error signal and read signal can be produced by the arrangement shown in Fig. 27 or Fig. 28.

The reflected light form the surface portion 15A of the glass plate 15 can be split into two portions by a polarization light beam splitter to extract the components LR1, LR2, or the aforementioned reflected light can be split into two portions by a beam splitter and then passed through an analyzer to extract the components LR1, LR2. The read signal can be produced from signals obtained by receiving these two components LR1, LR2 thus extracted.

In the above-described optical pick-up apparatus, the glass plate 15 is disposed on the optical path of the divergent light and is arranged obliquely with respect to the optic axis. In an optical system of this kind, aberration is produced by the glass plate 15 thus inclined. This aberration can be corrected by providing one more glass plate 16A, as illustrated in Fig. 13 (the glass plate 14 shown in Fig. 13 is replaced by the glass plate 15 of this embodiment). Preferably, a semiconductor laser having the structure shown in Fig. 15 is used.

An arrangement for obtaining a more stable read signal, focusing error signal and tracking error signal, especially the arrangement of a photodetector, will now be described.

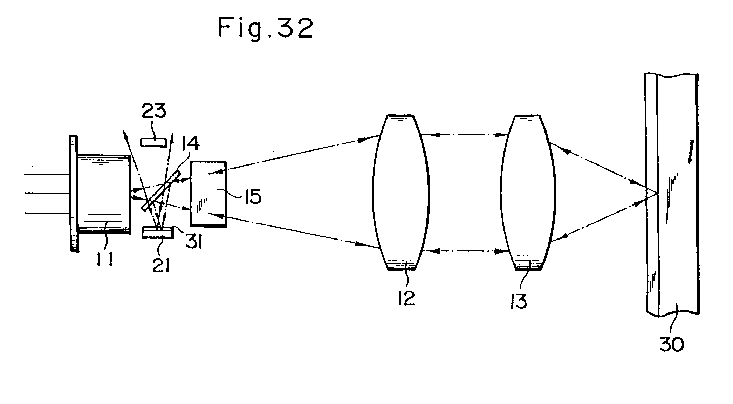

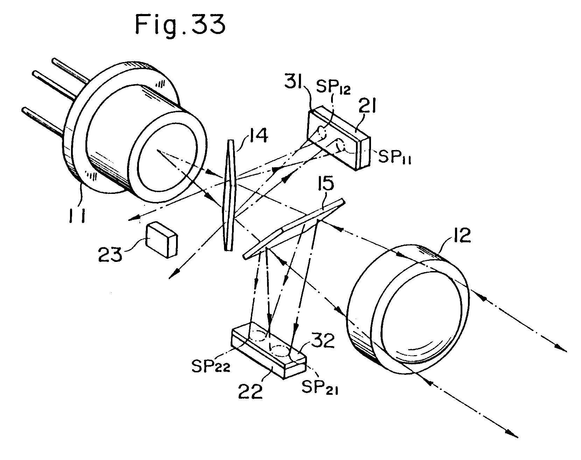

Figs. 32 through 34 illustrate a fifth embodiment of the present invention. Figs. 32 and 33 are almost the same as Figs. 5 and 6, respectively. Here light reflected from both the top and bottom surfaces of a glass plate is utilized in a positive manner.

The light reflected from the photomagnetic disk 30 is condensed by the condensing optical system. Some of the reflected light to be condensed is reflected by the top surface (the surface on the side of the photomagnetic disk 30) of the glass plate 15, and some of the remainder is reflected by the bottom surface (the surface on the side of the semiconductor laser 11) of the glass plate 15, so as to impinge upon the photodetector 22. Let $SP_{21}$ represent the beam spot formed on the light-receiving surface of the photodetector 22 by the reflected light from the top surface of the glass plate 15, and let $SP_{22}$ represent the beam spot formed on the light-receiving surface of the photodetector 22 by the reflected light from the bottom surface of the glass plate 15. Of the reflected light from the photomagnetic disk 30, some of the light which has been transmitted by the glass plate 15 is reflected by the top surface of the glass plate 14, and some of the remainder of the light is reflected by the bottom surface of the glass plate 14. These reflected light beams each impinge upon the photodetector 21. Let $SP_{11}$ represent the beam spot formed on the light-receiving surface of the photodetector 21 by the reflected light from the top surface of the glass plate 14, and let $SP_{12}$ represent the beam spot formed on the light-receiving surface of the photodetector 21 by the reflected light from the bottom surface of the glass plate 14.

If the glass plates 14 and 15 are so arranged as to render mutually perpendicular the line segments formed by intersection between a plane perpendicular to the optic axis of the condensing optical system and these glass plates 14 and 15, and if the glass plates 14 and 15 are inclined in such a manner that the incident angle of the reflected light condensed by the condensing optical system is rendered equal to the Brewster angle, then the light reflected from the glass plates 14 and 15 will contain only mutually perpendicular polarized light components. Only these light components will be detected by the photodetectors 21, 22, respectively. This is already described with reference to Fig. 7.

Even if the angle of inclination of light incident upon the glass plates 14 and 15 is other than the Brewster angle, the reflected light from the glass plates 14 and 15 will come to contain more mutually perpendicular polarized light components. By providing the analyzers 31 and 32, which are so arranged that their polarizing directions are mutually perpendicular, in front of the respective photodetectors 21 and 22 in such a manner that only the aforementioned mutually perpendicular polarized light components will pass through them, only the mutually perpendicular polarized light components will be detected by the respective ones of the photodetectors 21 and 22. This also is as already described.

Most preferably, the top and bottom surfaces of the glass plates 14 and 15 are provided with coating films having a suitable transmittance or reflectivity, and the light intensities of the spots $SP_{11}$, $SP_{12}$, $SP_{21}$, $SP_{22}$ on the photodetectors 21, 22 are made approximately equal values. It is preferred that at least the light intensities of the spots $SP_{11}$, $SP_{21}$ used in detecting the focusing error be equal.

As best illustrated in Fig. 33, the photodetector 21 is so arranged that its light-receiving surface is situated slightly in back of the focal points of the light reflected from the top and bottom surfaces of the glass plate 14 when correct focusing is being carried out. The photodetector 22 is so arranged that its light-receiving surface is situated slightly in front of the focal points of the light reflected from the top and bottom surfaces of the glass plate 15 when correct focusing is being carried out.

The direction of polarization of the linearly polarized light emitted by the semiconductor laser 11 forms an angle of 45° with both of these mutually perpendicular directions of polarization (the directions of polarization of the light passing through the analyzers 31 and 32).

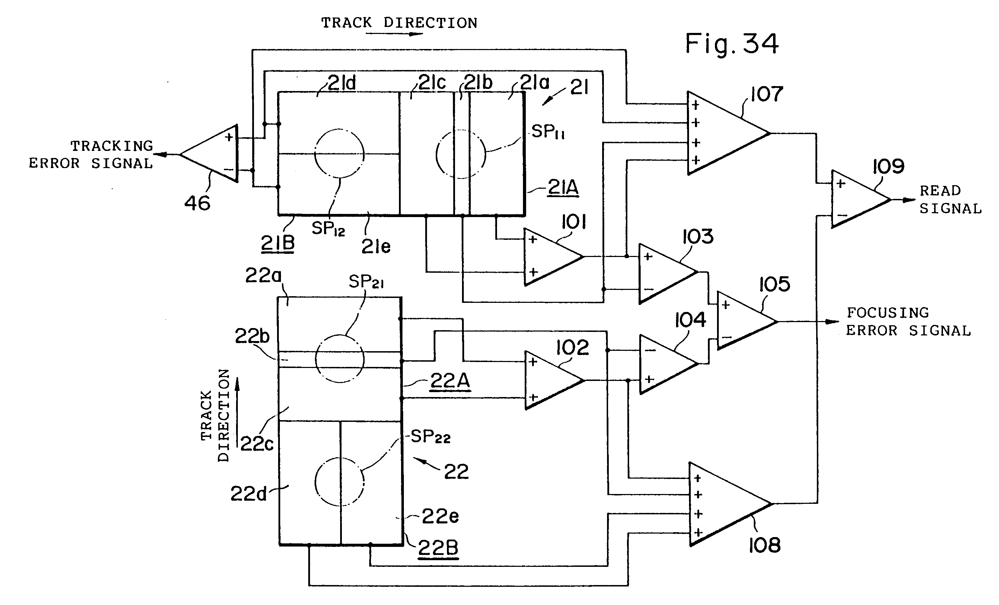

Fig. 34 illustrates an example of the construction of circuitry for producing the focusing error signal, tracking error signal and read signal in the above-described arrangement.

The photodetector 21 can be divided into two light-receiving areas 21A and 21B. The light-receiving area 21A comprises photodiodes in three sections. More specifically, three photodiodes 21a, 21b and 21c that are electrically isolated from one another are partitioned by two partitioning lines extending in a direction perpendicular to that of the tracks on the disk. The width of the centrally located photodiode 21b is small, and the widths of the photodiodes 21a, 21c on either side are comparatively large. When tracking is being performed correctly, the reflected light from the top surface of the glass plate 14 forms the spot $SP_{11}$ on the middle of the light-receiving area 21A, and the spot $SP_{11}$ spreads until it covers the full width of part of the central photodiode 21b and partially overlaps the photodiodes 21a, 21c on either side. The light-receiving area 21B is composed of photodiodes in two sections. Specifically, two photodiodes 21d and 21e that are electrically isolated from one another are partitioned by one partitioning line extending in the direction of the tracks on the disk. This partitioning line passes through the center of the light-receiving area 21B. When tracking is being performed correctly, the reflected light from the bottom surface of the glass plate 14 forms the spot $SP_{12}$ on the middle of the light-receiving area 21B, and the spot $SP_{12}$ spreads equally on the photodiodes 21d, 21e on either side. The photodiodes of the light-receiving area 21A naturally are electrically isolated from the photodiodes of the light-receiving area 21B. Here track direction refers to the direction of the tracks of the photomagnetic disk 30. This signifies the direction of the tracks projected upon the photodetector 21 by the reflected light from the photomagnetic disk 30.

The photodetector 22 has exactly the same construction as that of the photodetector 21 and possesses two light-receiving areas 22A and 22B. The light-receiving area 22A comprises photodiodes 22a, 22b, 22c in three sections, and the light-receiving area 22B comprises photodiodes 22d, 22e in two sections. The reflected light from the top surface of the glass plate 15 forms the spot $SP_{21}$ on the light-receiving area 22A, and the reflected light from the bottom surface of the glass plate 15 forms the spot $SP_{22}$ on the light-receiving area 22B.

An arrangement may be adopted in which the spot $SP_{11}$ of reflected light from the top surface of the glass plate 14 is formed on the light-receiving area 21B of the photodetector 21 and the the spot $SP_{12}$ of reflected light from the bottom surface of the glass plate 14 is formed on the light-receiving area 21A of the photodetector 21. Similarly, an arrangement may be adopted in which the spot $SP_{21}$ of reflected light from the top surface of the glass plate 15 is formed on the light-receiving area 22B of the photodetector 22 and the the spot $SP_{22}$ of reflected light from the bottom surface of the glass plate 15 is formed on the light-receiving area 22A of the photodetector 22.

The light-receiving areas 21A and 21B can each be constituted by separate photodetector. Similarly, the light-receiving areas 22A and 22B can each be constituted by separate photodetector.

The output signals from the photodiodes 21a, 21b, 21c, 21d and 21e are represented by the same characters 21a, 21b, 21c, 21d and 21e, respectively. Similarly, the output signals from the photodiodes 22a, 22b, 22c, 22d and 22e are represented by the same characters 22a, 22b, 22c, 22d and 22e, respectively.

The focusing error signal is produced by the double-beam size method using the output signals from the photodiodes of light-receiving areas 21A, 22A in photodetectors 21, 22. That is, by using adders 101, 102 and subtractors 103, 104 and 105, the following arithmetic operation is performed and the result serves as the focusing error signal:

(21a + 21c-21b) - (22a + 22c-22b)     Eq. 5

The focusing error signal can be calculated by the beam size method as well. In such case, the output

36

signals from the photodiodes of light-receiving area 21A or 22A are used. Specifically, the focusing error signal is represented by the following equation:

21a + 21c-21b or 22a + 22c-22b     Eq. 6

The tracking error signal is produced by the push-pull method using the output signals from the photodiodes of the light-receiving area 21B in photodetector 21. That is, by using a subtractor 106, the following arithmetic operation is performed and the result serves as the tracking error signal:

21d - 21e     Eq. 7

The tracking error signal can be calculated using the output signals from the photodiodes of light-receiving area 22B as well. In such case, the tracking error signal is represented by the following equation:

22d-22e     Eq. 8

The output signals from all of the photodiodes in photodetector 21 are added by adders 101 and 107, the output signals from all of the photodiodes in photodetector 22 are added by adders 102 and 108, and the difference between these two sums is calculated by subtractor 109, whereby a read signal indicative of the data stored on the photomagnetic disk 30 is obtained. The read signal is expressed by the following equation:

(21a + 21b + 21c + 21d + 21e) - (22a + 22b + 22c + 22d + 22e)     Eq. 9

Various modifications are possible. For example, the light-receiving areas 21A, 22A can each be constructed of photodiodes in five sections, and the light-receiving areas 21B, 22B can each be constructed of photodiodes in three sections.

According to this embodiment, the light-receiving areas 21A and 22A which output the signals for producing the focusing error signal are each constituted by photodiodes partitioned by partitioning lines that are perpendicular to the track direction. Even if the convergent light beam projected upon the photomagnetic disk 30 should happen to fluctuate in the tracking direction (the direction perpendicular to the track direction), the spots $SP_{11}$, $SP_{21}$ formed on these light-receiving areas 21A, 22A will merely move along the partitioning lines perpendicular to the track direction, no variation will be produced in the output signals from the photodiodes 21a - 21c and 22a - 22c. In other words, the focusing error signal is in no way influenced by the absence or presence or size of tracking error, and the signal exhibits a stable, precise focusing error at all times.

The tracking error signal is produced using the output signals from the light-receiving areas 21B, 22B, which are independent of the light-receiving areas 21A, 22A for producing the focusing error signal. Accordingly, the tracking error signal is produced separately and independently of the focusing error signal.

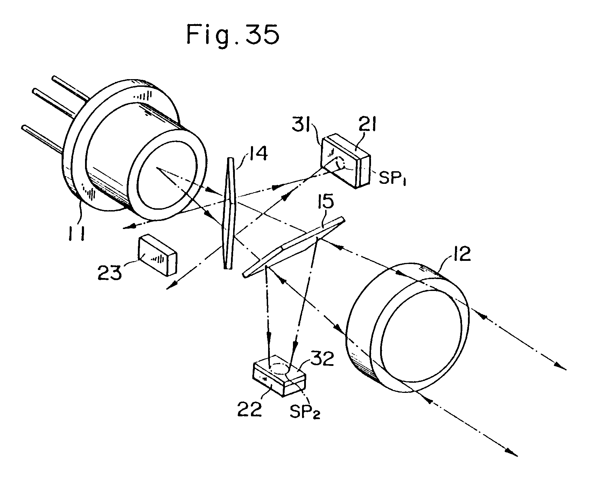

Figs. 35 through 38 illustrate a sixth embodiment of the present invention.

The construction of the optical system in the optical pick-up apparatus shown in Fig. 35 is exactly the same as that shown in Fig. 6. Fig. 35 is drawn only to show the light spots $SP_1$, $SP_2$ on the photodetectors 21, 22.

In Fig. 35, a non-reflective coating is applied to the bottom surface of each of the glass plates 14 and 15 so that there will be no reflection from the surface. Some of the reflected light from the photomagnetic disk 30 is reflected at the top surface of glass plate 15 and then impinges upon the photodetector 22. Some of the light which has passed through the glass plate 15 is reflected at the top surface of the glass plate 14 and then impinges upon the photodetector 21. The reflected-light spots formed on the photodetectors 21, 22 are represented by $SP_1$, $SP_2$, respectively.

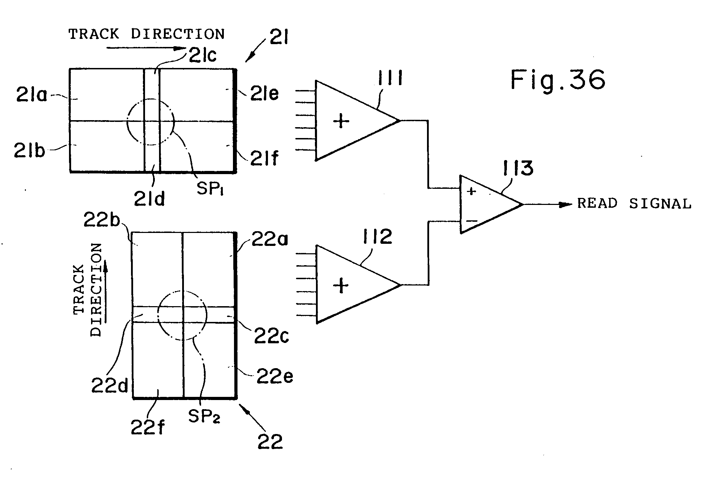

Fig. 36 illustrates an example of the construction of the photodetectors 21 and 22 and of a circuit which produces the read signal.

The photodetector 21 is partitioned into six sections by two first partitioning lines extending in a direction perpendicular to the track direction, and one second partitioning line extending in the track direction. The photodetector 21 comprises photodiodes 21a, 21b, 21c, 21d, 21e and 21f that are electrically isolated from one another. The widths of the centrally located photodiodes 21c and 21d bounded by the two first partitioning lines is comparatively small. The second partitioning line passes through the center of the photodetector 21. The spot $SP_1$ resulting from reflection at the glass plate 14 is situated at the center of these photodiodes when tracking is being performed correctly.

The photodetector 22 has exactly the same construction as the photodetector 21 and is constituted by photodiodes 22a, 22b, 22c, 22d, 22e and 22f in six sections.

Though reference characters 21a - 21e, 22a - 22e the same as those shown in Fig. 34 are used to identify the photodiodes in Fig. 36, these are mutually unrelated.

All of the output signals from the photodiodes 21a - 21f are added by an adder 111, and all of the output signals from the photodiodes 22a - 22f are added by an adder 112. The connections between these photodiodes and adders are not illustrated in order to simplify the drawing. The difference between the outputs from the adders 111 and 112 is calculated by a subtractor 113 and serves as the read signal. The read signal is expressed by the following equation (here the photodiodes and their output signals are expressed by the same reference characters):

$$(21a + 21b + 21c + 21d + 21e + 21f) - (22a + 22b + 22c + 22d + 22e + 22f) \qquad \text{Eq. 10}$$

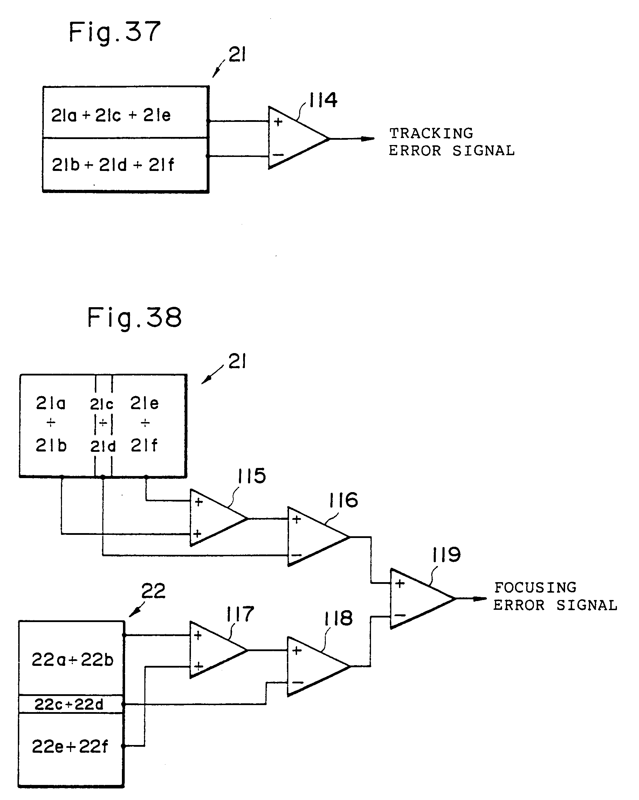

Fig. 37 shows the manner in which the tracking error signal is produced. The output signals from the photodiodes 21a, 21c and 21e are added $(21a + 21c + 21e)$ by an adder (not shown). Similarly, the output signals from the photodiodes 21b, 21d and 21f are added $(21b + 21d + 21f)$ by an adder (not shown). The difference between these two sums is calculated by a subtractor 114 and serves as the tracking error signal. The tracking error signal is expressed by the following equation:

$$(21a + 21c + 21e) - (21b + 21d + 21f) \qquad \text{Eq. 11}$$

It is possible to produce the tracking error signal in accordance with the following equation as well using the output signal from the photodetector 22:

$$(22a + 22c + 22e) - (22b + 22d + 22f) \qquad \text{Eq. 12}$$

Fig. 38 illustrates the manner in which the focusing error signal is produced by the double-beam size method. Here also, output signals added by adders (not shown) are shown in block form (e.g, $21a + 21b$, etc.), just as in Fig. 37.

The following arithmetic operation is performed by adders 115, 117, subtractors 116, 118, 119 and an adder (not shown) to produce the focusing error signal:

$$[(21a + 21b + 21e + 21f) - (21c + 21d)] - [(22a + 22b + 22e + 22f) - (22c + 22d)] \qquad \text{Eq. 13}$$

The focusing error signal can be obtained from the output signals of photodetector 21 or 22 using the beam size method. In such case, the focusing error signal is expressed by the following equation:

$$(21a + 21b + 21e + 21f) - (21c + 21d) \quad \text{or}$$
$$(22a + 22b + 22e + 22f) - (22c + 22d) \qquad \text{Eq. 14}$$

In Fig. 35, it may be so arranged that solely the reflected-light beams from the bottom surfaces of the glass plates 14 and 15 impinge upon the photodetectors 21 and 22, respectively.

Thus, in this embodiment, the photodetector is composes of photodiodes in six sections partitioned by two first partitioning lines perpendicular to the track direction and one second partitioning line extending in the track direction. The output signals of the photodiodes are added for each group partitioned by the first partitioning lines, and the focusing error signal is produced using the result of the addition operation. Accordingly, even if a tracking error should happen to occur, the focusing error signal will be absolutely unaffected by the tracking error, and focusing error can be detected stably and accurately at all times. This is accomplished through an approach the same as that of the fifth embodiment.

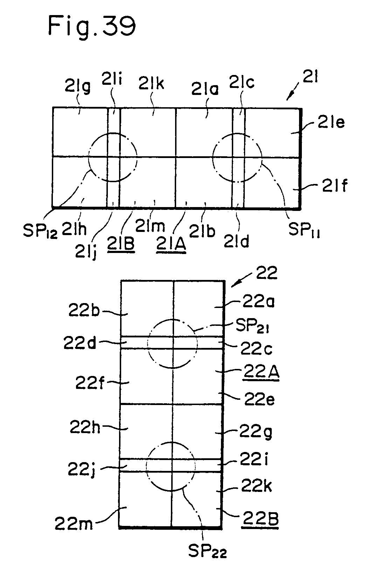

Fig. 39 illustrates a seventh embodiment of the present invention and represents solely the construction of a photodetector.

In the seventh embodiment, the optical system shown in Figs. 32 and 33 is applied as is.

The photodetector 21 has light-receiving areas 21A, 21B which respectively receive the spots $SP_{11}$, $SP_{12}$ of reflected light from the top and bottom surfaces of the glass plate 14. The light-receiving areas 21A, 21B each comprise photodiodes in six sections, just as in the photodetector illustrated in Fig. 36. The photodetector 22 also has a construction exactly the same as that of the photodetector 21.

The read signal is given by the following equation:

$$[(21a + 21b + 21c + 21d + 21e + 21f)$$
$$+ (21g + 21h + 21i + 21j + 21k + 21m)]$$
$$- [(22a + 22b + 22c + 22d + 22e + 22f)$$
$$+ (22g + 22h + 22i + 22j + 22k + 22m)] \qquad Eq. 15$$

The tracking error signal is expressed by the following equation:

$$[(21a + 21c + 21e) - (21b + 21d + 21f)]$$
$$+ [(21g + 21i + 21k) - [(21h + 21j + 21m)] \qquad Eq. 16$$

or by the following equation:

$$[(22a + 22c + 22e) - (22b + 22d + 22f)]$$
$$+ [(22g + 22i + 22k) - [(22h + 22j + 22m)] \qquad Eq. 17$$

The focusing error signal is given by the following equation in accordance with the double-beam size method:

$$\{[(21a + 21b + 21e + 21f) - (21c + 21d)]$$
$$- [(22a + 22b + 22e + 22f) - (22c + 22d)]\}$$
$$+ \{[(21g + 21h + 21k + 21m) - (21i + 21j)]$$
$$- [(22g + 22h + 22k + 22m) - (22i + 22j)]\} \qquad Eq. 18$$

The focusing error signal is given by either of the following equations in accordance with the beam size method:

$$[(21a + 21b + 21e + 21f) - (21c + 21d)]$$
$$+ [(21g + 21h + 21k + 21m) - (21i + 21j)]$$
or
$$[(22a + 22b + 22e + 22f) - (22c + 22d)]$$
$$+ [(22g + 22h + 22k + 22m) - (22i + 22j)] \qquad Eq. 19$$

Thus, in accordance with the seventh embodiment, the magnitudes of the read signal, tracking error signal and focusing error signal are doubled over those of the sixth embodiment, as will be understood by comparing Eqs. 10 - 14 and Eqs. 15 - 19. As a result, signals having a high sensitivity and a high S/N ratio are obtained.

It goes without saying that the arrangements of the photodetectors in the fifth through seventh embodiments are applicable to the optical systems shown in Figs. 1 through 4, Fig. 8 and Fig. 9.

The optical system of Fig. 1 suited to an optical recording medium such as an optical disk or optical card will now be described in brief.

In Fig. 1, the glass plates 14 and 15 are so arranged as to render mutually parallel the line segments formed by intersection between a plane perpendicular to the optic axis and these glass plates 14 and 15. The front faces of the photodetectors 21, 22 do not require analyzers.

In an optical pick-up apparatus for the optical recording medium 20, the read signals expressed by Eqs. 9, 10 and 15 are simplified as indicated by the following respective expressions:

$$21a + 21b + 21c + 21d + 21e \text{ or}$$
$$22a + 22b + 22c + 22d + 22e \text{ or}$$
the sum of these values $\qquad Eq. 20$

$$21a + 21b + 21c + 21d + 21e + 21f \text{ or}$$
$$22a + 22b + 22c + 22d + 22e + 22f \text{ or}$$
the sum of these values $\qquad Eq. 21$

$$(21a + 21b + 21c + 21d + 21e + 21f)$$
$$+ (21g + 21h + 21i + 21j + 21k + 21m) \text{ or}$$

(22a + 22b + 22c + 22d + 22e + 22f)
 + (22g + 22h + 22i + 22j + 22k + 22m) or
the sum of these values      Eq. 22

The focusing error signal and the tracking error signal can be obtained by the arithmetic operations set forth above.

The light emitted from a semiconductor laser (laser diode) has different angles of spread in the two directions perpendicular to the optic axis, and therefore the beam pattern (the pattern whose cross section is perpendicular to the optic axis) is an ellipse. In a case where the divergent light emitted by such a semiconductor laser is collimated using a lens, the intensity distribution of the collimated light in a cross section perpendicular to the optic axis is non-uniform, particularly on concentric circles centered on the optic axis. Accordingly, even if the collimated light is converged by a lens, the converged spot will be elliptical and not circular. Accordingly, it is unsuitable to use such a converged spot for recording/playback of an optical recording medium.

A beam-shaping prism is used in order to shape divergent light, which has an elliptical cross section whose angle of spread differs depending upon direction, as in the manner of light emitted from a semiconductor laser, into light having a circular cross section. Since an optical pick-up apparatus for recording/playback of an optical recording medium is required to be as small in size and light in weight as possible, use of a beam-shaping prism is not always desirable.

An arrangement in which a suitable circular beam can be obtained without using a beam-shaping prism will now be described. This arrangement can be applied to the optical systems in all of the foregoing embodiments.

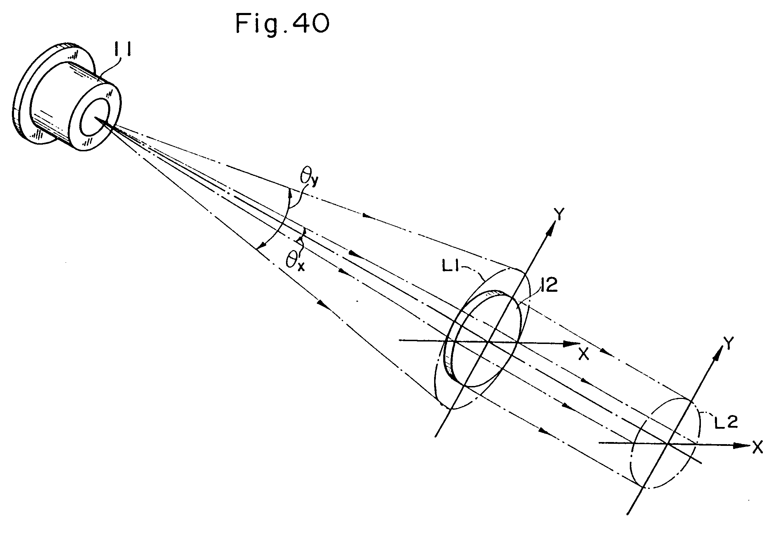

Fig. 40 illustrates the manner in which projected light emitted by the semiconductor laser 11 spreads. As is well known, the light emitted by the semiconductor laser 11 has different angles of spread in two directions perpendicular to the optic axis (these two directions also are mutually perpendicular as shall be referred to as the X and Y directions). Accordingly, the cross section of the emitted light from the semiconductor laser 11 perpendicular to the optic axis is elliptical in shape (the cross section is indicated at L1). Let the direction of the major axis of the ellipse be the Y direction, and let the direction of the minor axis of the ellipse be the X direction. Further, Let $\theta x$ and $\theta y$ represent the angles of spread in the Y and X directions, respectively (both are angles at positions where the light intensity is $1/e^2$ of the maximum value). Such divergent light is substantially collimated by the collimating lens 12 so as to be rendered into light having a circular cross section (this cross section is indicated at $L_2$).

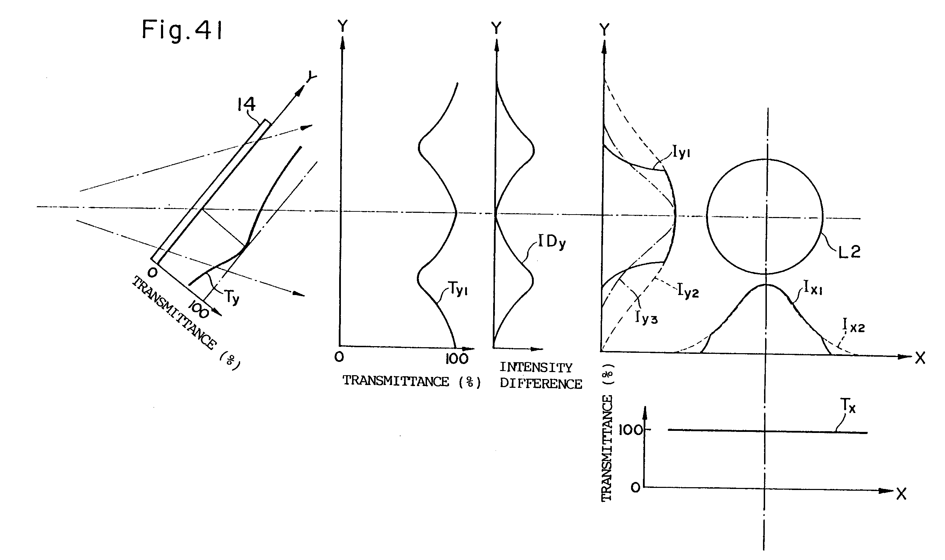

The intensity distributions of the collimated light L2 in the X and Y directions are indicated by the solid lines in Fig. 41 as $I_{x1}$, $I_{y1}$. Thus, the intensity distribution in the circular cross section of the light L2 is non-uniform. There is no uniformity especially on concentric circles-centered on the optic axis.

When the collimated light having different intensity distributions in the X and Y directions is condensed on the objective lens 13, the condensed spot becomes elliptical in shape. When a beam spot having an elliptical shape is formed on the optical disk 20 or photomagnetic disk 30, there are cases where a read signal, focusing error signal and tracking error signal bearing correct information are not obtained.

In Fig. 41, a distribution indicated by the dashed line $I_{x2}$ is an intensity distribution of the laser light in the X direction immediately before the light impinges upon the collimating lens 12. A distribution indicated by the dashed line $I_{y2}$ is an intensity distribution of the laser light in the Y direction immediately before the light impinges upon the collimating lens 12. Owing to the difference in the spread angles $\theta_x$, $\theta_y$ described above, there is a difference in the intensity distributions in the X and Y directions of the light which diverges in this manner. If it is arranged so that the intensity distribution which prevails in the Y direction before the light impinges upon the collimating lens 12 is made the same as that of the intensity distribution $I_{x2}$ in the X direction, as indicated by the phantom line $I_{y3}$, then the light L2 collimated by the collimating lens 12 will have the same intensity distribution in the X and Y directions. More specifically, the collimated light obtained will have a substantially uniform intensity distribution on the concentric circles centered on the optic axis.

The intensity differential between the intensity distributions $I_{y2}$ and $I_{y3}$ is indicated by $ID_y$. The transmittance distribution of the light which produces this intensity differential $ID_y$ is indicated by $T_{y1}$. More specifically, if a glass plate perpendicular to the optic axis is disposed on the front face (on the side of the semiconductor laser 11) of the collimating lens and the design is such that the transmittance distribution $T_{y1}$ of the glass plate in the Y direction is indicated by $T_{y1}$, then the intensity distribution in the Y direction of the laser light incident upon the collimating lens will be as indicated by $I_{y3}$.

For example, since the two glass plates 14 and 15 are disposed in the optical system shown in Fig. 1, it will suffice to utilize at least one of these glass plates 14, 15 instead of the aforesaid glass plate that is perpendicular to the optic axis. If it is assumed that a transmittance distribution equivalent to the transmittance distribution $T_{y1}$ of the glass plate perpendicular to the optic axis has been formed on the glass plate 14 disposed obliquely with respect to the optic axis, this distribution will be indicated by $T_y$. In other words, the intensity distribution $I_{y2}$ of the laser light in the Y direction thereof can be converted to $I_{y3}$ by the glass plate 14 having the transmittance distribution indicated by $T_y$. The transmittance distribution of the glass plate 14 in the X direction thereof is constant, as indicated by $T_x$.

By providing the glass plate 14 with the transmittance distributions $T_x$, $T_y$ in the X and Y directions, collimated light having intensity distributions that are the same in the X and Y directions can be obtained by the lens 12.

Transmittance distributions equivalent to the transmittance distributions $T_x$, $T_y$ can be obtained by the glass plate 15 as well, and they can also be obtained by both of the glass plates 14 and 15.

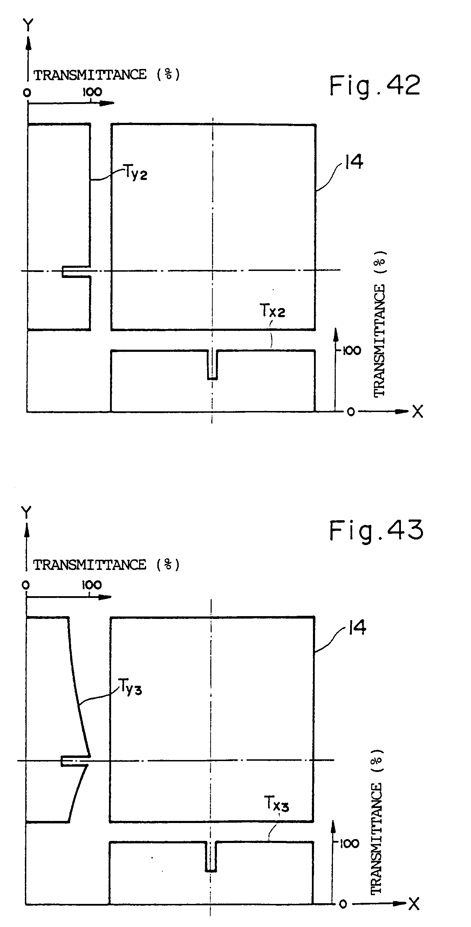

Fig. 42 illustrates examples of other transmittance distributions. Transmittance distributions $T_{x2}$, $T_{y2}$ in which the transmittance has a value smaller on the optic axis than at the periphery (transmittance may be 0 in the extreme) in both the X and Y directions are formed on the glass plate 14.

In accordance with such transmittance distributions, light intensity on the optic axis becomes small, super-resolution is produced, and a beam spot whose spot diameter is less than the diffraction limit is obtained when the laser light is condensed.

Such a transmittance distribution may be realized by utilizing the glass plate 15.

Fig. 43 illustrates transmittance distributions $T_{x3}$, $T_{y3}$ obtained by superimposing (i.e., by a MIN operation) the transmittance distributions $T_x$, $T_y$ shown in Fig. 41 and the transmittance distributions $T_{x2}$, $T_{y2}$ shown in Fig. 42 along the X and Y directions, respectively. By virtue of transmittance distributions of this kind, it is possible to obtain a very small condensed light spot having a circular cross section.

Distributions equivalent to the transmittance distributions $T_{x3}$, $T_{y3}$ can also be realized on the glass plate 15 rather than the glass plate 14. Further, the transmittance distributions $T_x$, $T_y$ shown in Fig. 41 can be realized on the glass plate 14 (or 15), distributions equivalent to the transmittance distributions shown in Fig. 42 can be realized on the glass plate 15 (or 14), and, as a result, distributions equivalent to the transmittance distributions shown in Fig. 43 can be achieved.

Transmittance distributions equivalent to the above-described transmittance distributions $T_x$, $T_y$, $T_{x2}$, $T_{y2}$, $T_{x3}$, $Ty_3$ can be realized by lens 12 or 13 or a combination thereof instead of the glass plates 14, 15.

In either case, it is possible to realize such transmittance distributions by well-known techniques, such as by applying coatings or coloring to the glass plates or lenses or by mixing impurities with the glass plates or lenses.

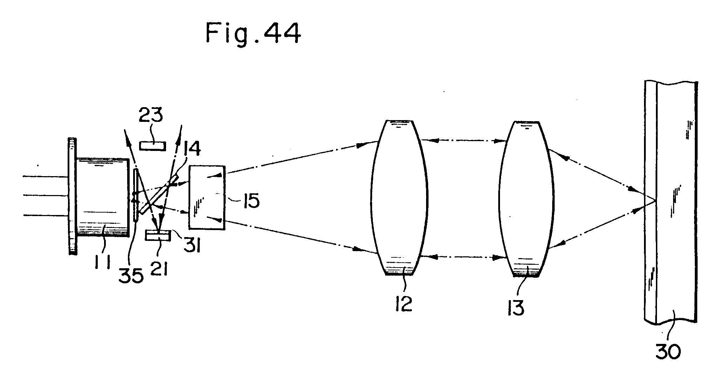

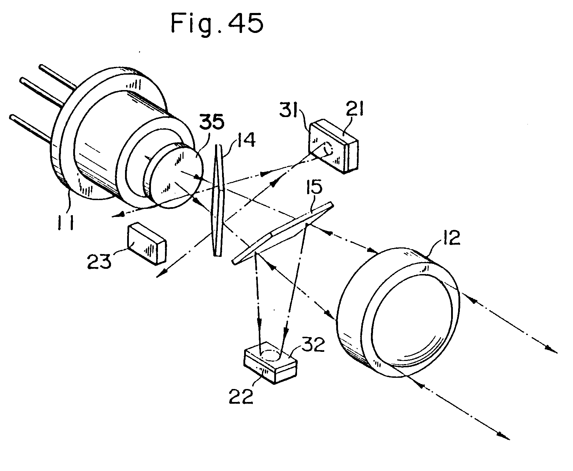

Figs. 44 and 45 illustrate an eighth embodiment of the present invention.

A half-wave plate (optical rotatory element) or polarizing plate 35 is provided in front of the semiconductor laser 11, i.e., between the semiconductor laser 11 and the glass plate 14 which is near the semiconductor laser 11.

Divergent light emitted by the semiconductor laser 11 passes through the half-wave plate or polarizing plate 35 and the two glass plates 14 and 15 and is concentrated on the photomagnetic disk 30 by the condensing optical system. Some of the divergent light from the semiconductor laser 11 is reflected by the glass plate 14 to be received by the photodetector 23. The intensity of the emitted light from the semiconductor laser 11 is controlled based upon the light-reception signal from the photodetector 23.

Other components in Figs. 44 and 45 are the same as those shown in Figs. 5 and 6.

The half-wave plate or polarizing plate 35 is used in order to perform an adjustment in such a manner that the direction of polarization of the linearly polarized light that is emitted by the semiconductor laser 11 and projected upon the photomagnetic disk 30 by the condensing optical system upon passing through the half-wave plate or polarizing plate 35 will form an angle of 45° with both of the directions of polarization (which are mutually perpendicular) of the light beams passing through the analyzers 31, 32.

Since the light emitted by the semiconductor laser 11 is linearly polarized light, it is possible to adopt a set-up in which the direction of polarization of this light forms an angle of 45° with both of the aforementioned mutually perpendicular directions of polarization even if the half-wave plate or polarizing plate 35 is not used. However, in actual assembly of an optical system, the semiconductor laser 11 and the condensing optical system must be positionally adjusted in such a manner that the emitted light from the semiconductor laser 11 forms a spot on the photomagnetic disk 30 correctly. It is difficult to correctly adjust also the direction of polarization of the emitted light from the semiconductor laser 11 in this positional adjustment.

Accordingly, the direction of polarization of the emitted light from the semiconductor laser 11 is determined roughly in advance, then its positional adjustment along with that of the condensing optical system is carried out. If the direction of polarization of the projected light is subsequently adjusted by rotating the half-wave plate or polarizing plate 35, then, in the adjustment of the direction of polarization, it will be possible to correctly set solely the direction of polarization without requiring that the position of the semiconductor laser 11 or condensing optical system be adjusted.

The half-wave plate or polarizing plate 35 can be used in order to adjust the levels of the output signals from the photodetectors 21 and 22 as well. It is desired that the transmittances or reflectivities of the glass plates 14 and 15 be adjusted beforehand in such a manner that the amount of light which impinges upon the photodetector 21 is equal to that which impinges upon the photodetector 22. However, the amounts of light incident upon the photodetectors 21 and 22 will not necessarily always be the same, and the analyzers 31, 32 are provided in front of the photodetectors 21, 22 as necessary. As a result, it is difficult to strictly set the levels of the output signals from the photodetector 21 and 22 in advance.

Accordingly, a mirror rather than the photomagnetic disk 30 is placed at the position of the disk. The light reflected from this mirror is received by the photodetectors 21 and 22. The plane of polarization of the reflected light from the mirror is not rotated. Accordingly, it will suffice to effect an adjustment by rotating the half-wave plate or polarizing plate 35 so as to equalize the levels of the output signals from the photodetectors 21 and 22. It is possible to adopt an arrangement in which the photomagnetic disk 30 is left in place and no mirror is provided, and an adjustment is performed so as to equalize the center levels of the signals obtained from the two photodetectors 21 and 22.

By virtue of the above-described arrangement, a change in the rotational angle of the plane of polarization caused by the information recorded on the photomagnetic disk 30 is detected correctly in accordance with the difference between the output signals from the two photodetectors 21 and 22.

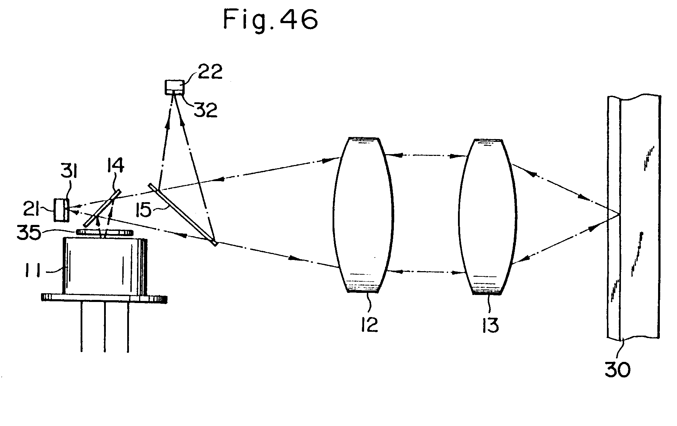

Fig. 46 illustrates a modification. This corresponds to the optical system shown in Fig. 8. Here the half-wave place or polarizing place 35 is provided between the semiconductor laser 11 and the half-mirror 14.

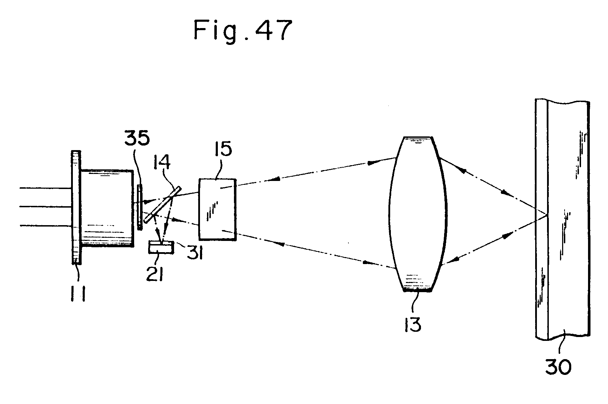

Fig. 47 illustrates another modification. This corresponds to the optical system illustrated in Fig. 9.

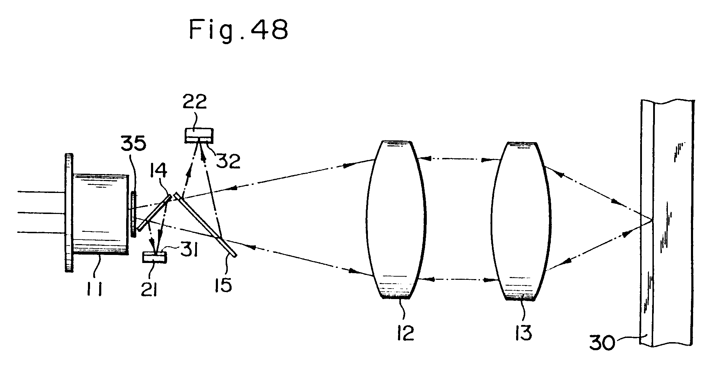

Fig. 48 shows yet another embodiment. This corresponds to the optical system illustrated in Fig. 2.

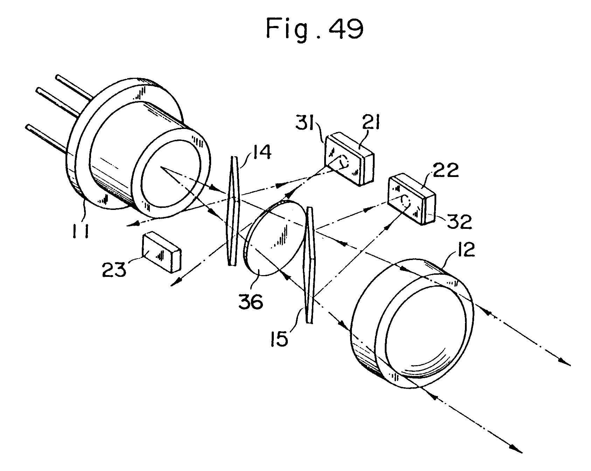

Fig. 49, which illustrates a ninth embodiment of the invention, is a perspective view of an optical system corresponding to that of Fig. 6. This optical system differs from that in Fig. 6 in that the glass plate 15 is arranged to be substantially parallel to the glass plate 14. Further, a half-wave plate 36 is disposed between the two glass plates 14 and 15.

In this embodiment, the orientation of the principal axis of the half-wave plate 36 is so decided that the direction of polarization of the light which has passed through the glass plate 15 upon being reflected by the photomagnetic disk 30 is rotated approximately 90° by the half-wave plate 36. Accordingly, in this embodiment also, the direction of polarization of the light which impinges upon the photodetector 22 upon being reflected by the glass plate 15 and the direction of polarization of the light which impinges upon the photodetector 21 upon being reflected by the glass plate 14 are rendered approximately perpendicular.

By arranging the two glass plates 14 and 15 in such a manner that they are substantially parallel to each other, it is possible to arranged the two photodetectors 21 and 22 on the same side in relation to the optic axis of the condensing optical system. As a result, the optical pick-up apparatus can be made much more compact, as will be understood by comparing Fig. 49 with Fig. 6.

Other components in this embodiment are the same as those in the second embodiment.

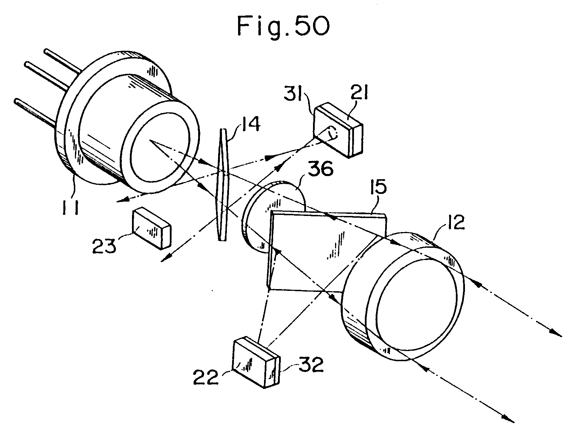

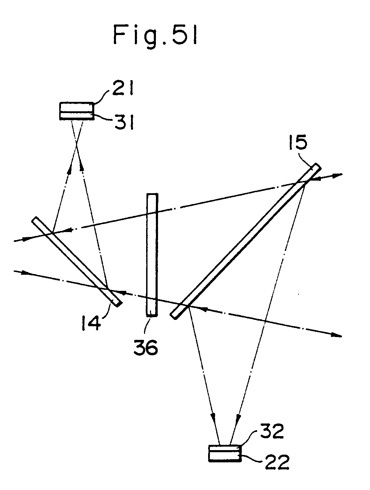

Figs. 50 and 51 illustrate a modification.

In this modification, the two glass plates 14 and 15 are arranged substantially symmetrically with respect to a plane (in which the half-wave plate 36 is disposed) perpendicular to the optic axis of the condensing optical system and situated midway between the two glass plates 14 and 15 (see Fig. 51 in particular).

In general, aberration is produced when light passes through a glass plate arranged obliquely with respect to the optic axis. Since the two glass plates 14 and 15 are so arranged as to produce aberrations that are oppositely directed, these aberrations substantially cancel each other out. Accordingly, this embodiment is so contrived as to reduce the overall aberration produced by the glass plates 14 and 15.

The orientation of the principal axis of half-wave plate 36 preferably is set in such a manner that the directions of polarization of reflected light from the glass plates 14 and 15 will be substantially perpendicular.

The half-wave plate 36 may be rotated to adjust the orientation of its principal axis in such a manner that the levels of the output signals from the photodetector 21 and 22 (e.g., the levels of the signals outputted in a case where a mirror is set in place in place of the photomagnetic disk) are rendered substantially equal. In such case, there is the danger that it will not be possible to maintain the relationship in which the direction of polarization of reflected light from the glass plate 14 and the direction of polarization of the reflected light from the glass plate 15 are substantially perpendicular. However, no impediments are encountered since the analyzers 31, 32 are disposed in front of the photodetectors 21, 22 and the analyzers 31, 32 are arranged so as to detect mutually perpendicular polarized components.

Generally, a photomagnetic disk is formed of a material exhibiting a complex index of refraction. Therefore, when light reflected from the disk is influenced by the characteristic of this complex index of refraction, a signal having a high S/N ratio cannot be obtained. In accordance with JIS (Japanese Industrial Standards), when the linear direction of polarization possessed by the projected light from a semiconductor laser coincides with a direction parallel or perpendicular to the tracks of the photomagnetic disk, the influence of the characteristic of the complex index of refraction possessed by the photomagnetic disk can be eliminated or reduced.

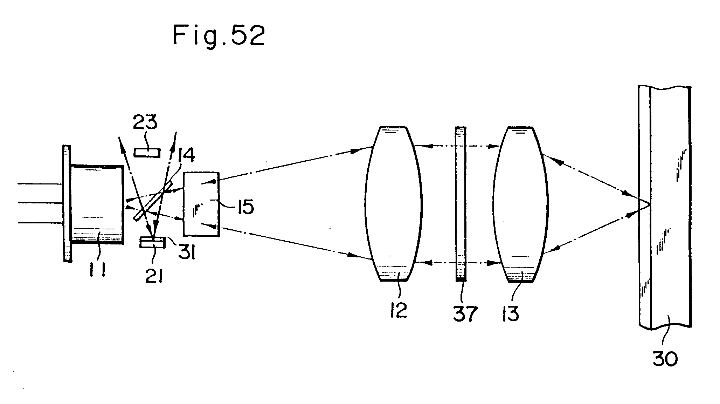

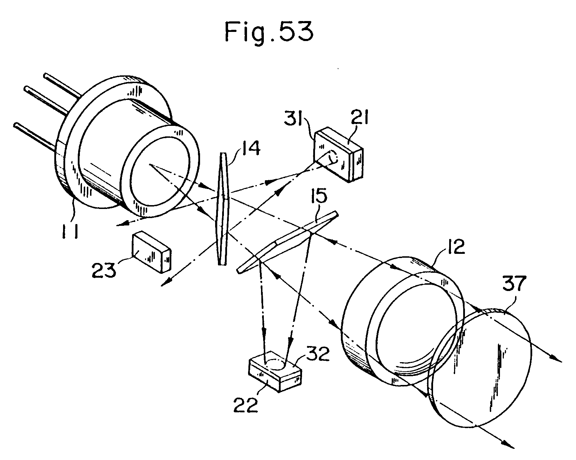

Figs. 52 and 53 illustrate a tenth embodiment of the present invention. This embodiment corresponds to the second embodiment shown in Figs. 5 and 6. Identical portions are designated by like reference characters and need not be described again in order to avoid prolixity.

Here a half-wave plate (or optical rotatory element) 37 is disposed between the lenses 12 and 13.

The direction of polarization of the linearly polarized light emitted by the semiconductor laser 11 is rotated through an angle $\phi$ by the half-wave plate 37 provided in the condensing optical system. The rotational angle $\phi$ can be adjusted by the angular position of the half-wave plate 37 (in which the angular position has as its reference the orientation of the principal axis obtained when the optic axis and the center of the half-wave plate 37 are made to coincide and the half-wave plate 37 is positioned by being rotated).

In this embodiment, it is assumed that the half-wave plate 37 has been adjusted in such a manner that the direction of polarization, which has been rotated by the half-wave plate 37, becomes parallel or perpendicular to the direction of the tracks on the photomagnetic disk 30.

By passing the reflected light from the photomagnetic disk 30 through the half-wave plate 37 again, the direction of polarization of the reflected light is rotated through an angle $-\phi$. Accordingly, when the condensing optical system is viewed from the position of the glass plate 15, it is just as though the half-wave plate 37 were non-existent. Thus, the only effect of the half-wave plate 37 is to align the direction of polarization of the light projected toward the photomagnetic disk 30 in a specific direction (e.g., a direction parallel or perpendicular to the direction of the tracks, as set forth earlier); the optical relationship among the photomagnetic disk 30, the glass plates 14, 15, the analyzers 31, 32 and the photodetectors 21, 22 is not affected in any way.

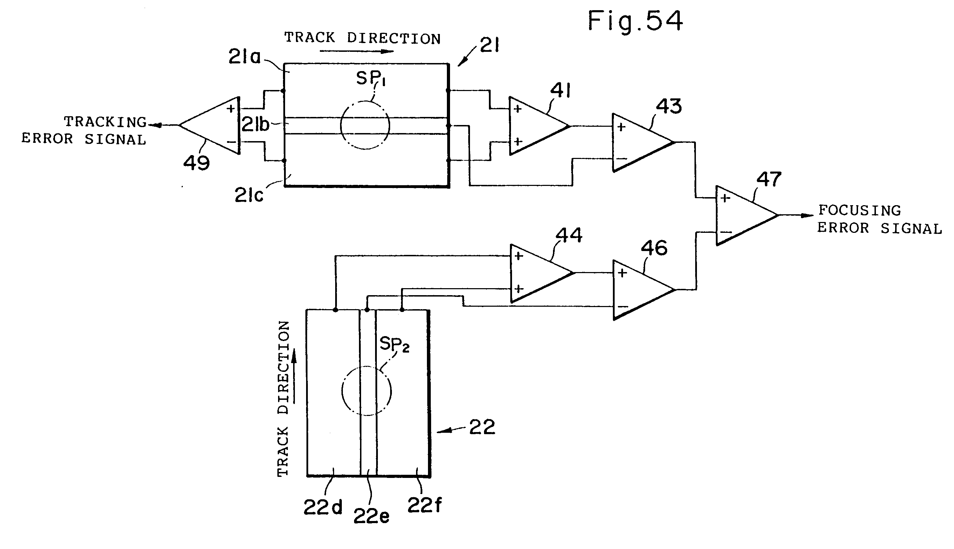

The photodetector 21 shown in Fig. 54 is equipped with photodiodes 21a, 21b, 21c that are partitioned into three sections and electrically isolated from one another. The width of the centrally located photodiode 21b is comparatively small. The partitioning lines (boundary lines) of the three photodiodes 21a, 21b, 21c extend in the direction of the tracks on the photomagnetic disk 30. The track direction of the photomagnetic disk 30 refers to the direction of the track images formed on the light-receiving surface of the photodetector 21 by the reflected light from the photomagnetic disk 30.

Similarly, the photodetector 22 also is equipped with photodiodes 22d, 22e, 22f that are partitioned into three sections and electrically isolated from one another. The width of the centrally located photodiode 22e is comparatively small. The partitioning lines (boundary lines) of the three photodiodes 22d, 22e, 22f extend in the direction of the tracks on the photomagnetic disk 30.

The construction of these photodetectors 21, 22 is the same as that shown in Fig. 11. The tracking error signal, focusing error signal and read signal are formed in exactly the same way as in the case described in connection with Fig. 11.

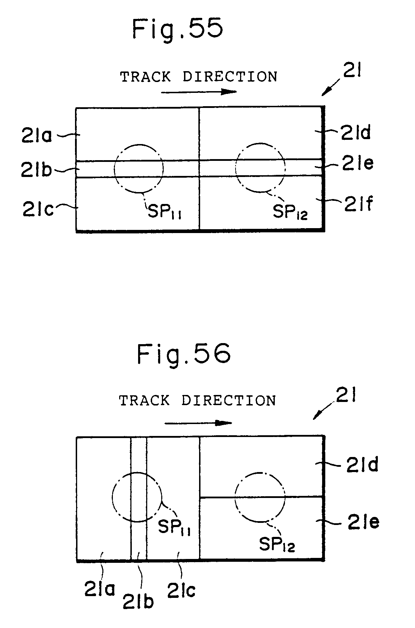

Fig. 55 illustrates another example of the construction of the photodetector 21. Here the photodetector is constituted by six mutually independent photodiodes 21a - 21f. Reflected light $SP_{11}$ from the top surface of the glass plate 14 is received by the photodiodes 21a - 21c, and reflected light $SP_{12}$ from the bottom surface of the glass plate 14 is received by the photodiodes 21d - 21f. The photodetector 22 is identically constructed.

In this arrangement, the tracking error signal, focusing error signal and read signal are obtained by taking the sums of the signals formed by the light reflected from the top surface of the glass plate and the corresponding signals formed by the light reflected from the bottom surface of the glass plate. As a result, the levels of the signals obtained are enlarged and the S/N ratio is improved.

Fig. 56 illustrates still another example of the photodetector 21. Here the photodetector 21 is constituted by a total of five photodiodes, namely two photodiodes 21d, 21e partitioned by partitioning lines along the track direction, and three photodiodes 21a, 21b, 21c partitioned by partitioning lines perpendicular to the track direction.

The tracking error signal is obtained by the arithmetic operation 21d-21e. The photodetector 22 is identically constructed, and the focusing error signal is detected by the above-described double-beam size method. The read signal is obtained as the difference between the sum of the output signals from all of the photodiodes of photodetector 21 and the sum of the output signals from all of the photodiodes of photodetector 22. This is exactly the same as the arrangement described earlier with reference to Fig. 34.

In Figs. 54, 55 and 56, the same reference characters 21 and 21a - 21f are used but are not mutually related.

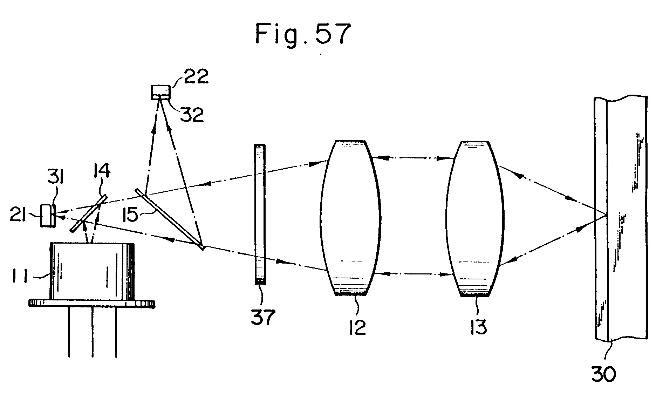

Fig. 57 illustrates a modification. This corresponds to the arrangement shown in Fig. 8. Here the half-wave plate 37 is disposed between the glass plate 15 and the collimating lens 12.

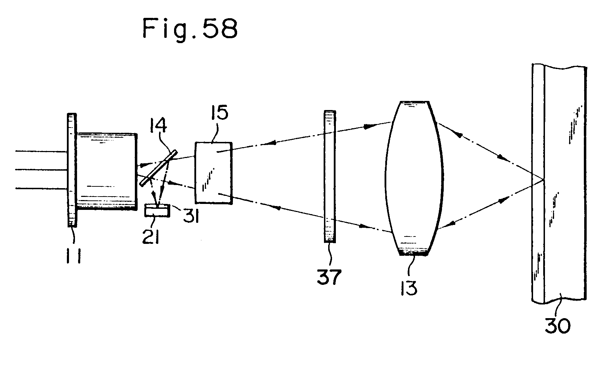

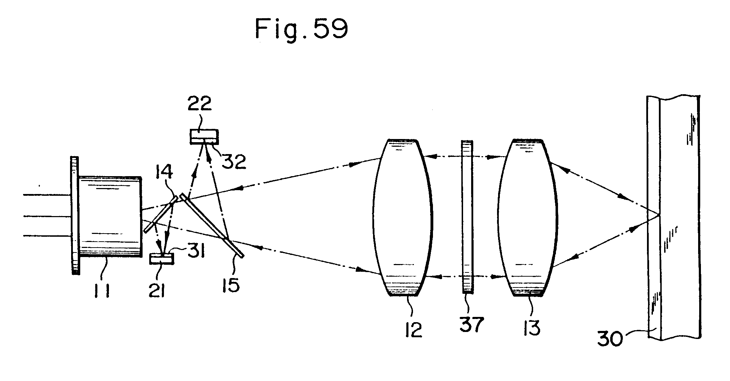

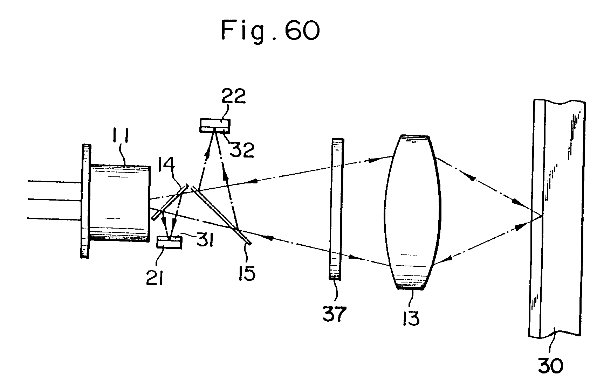

Figs. 58, 59 and 60 illustrate other modifications, which correspond to the arrangements shown in Figs. 9, 2 and 4, respectively.

Embodiments regarding arrangements which are not readily affected by the characteristic of the complex index of refraction possessed by a photomagnetic disk will continue.

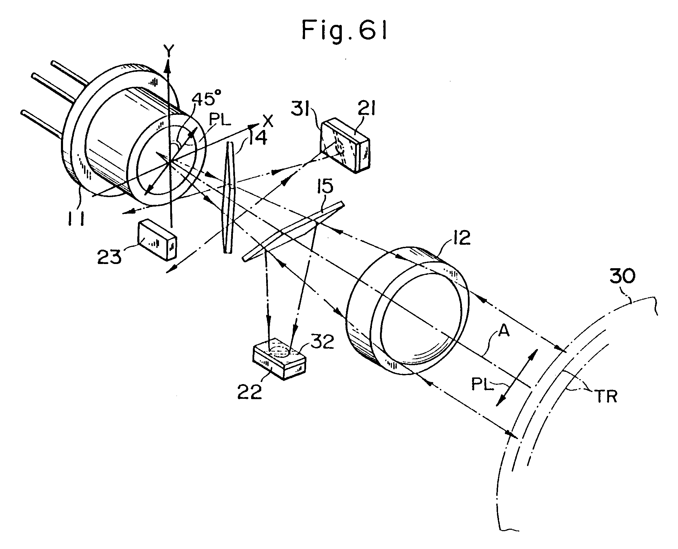

Fig. 61 illustrates an 11th embodiment of the invention. The optical system here is basically the same as that shown in Fig. 6, but its disposition relative to the photomagnetic disk 30 and the arrangement of the photodetectors 21, 22 differ.

The direction of polarization of the linearly polarized light emitted by the semiconductor laser 11 forms an angle of 45° with both of the directions of polarization (which are mutually perpendicular) of the light beams which pass through the analyzers 31, 32.

Consider two axes, namely the X and Y axes, that each form an angle of 45° with the direction of polarization PL of the light emitted by the semiconductor laser 11. The axes X and Y are mutually perpendicular and are perpendicular also to the optic axis A of the optical system.

Let the reference plane which contains the optic axis A and the X axis be the X plane, and let the reference plane which contains the optic axis A and the Y axis be the Y plane.

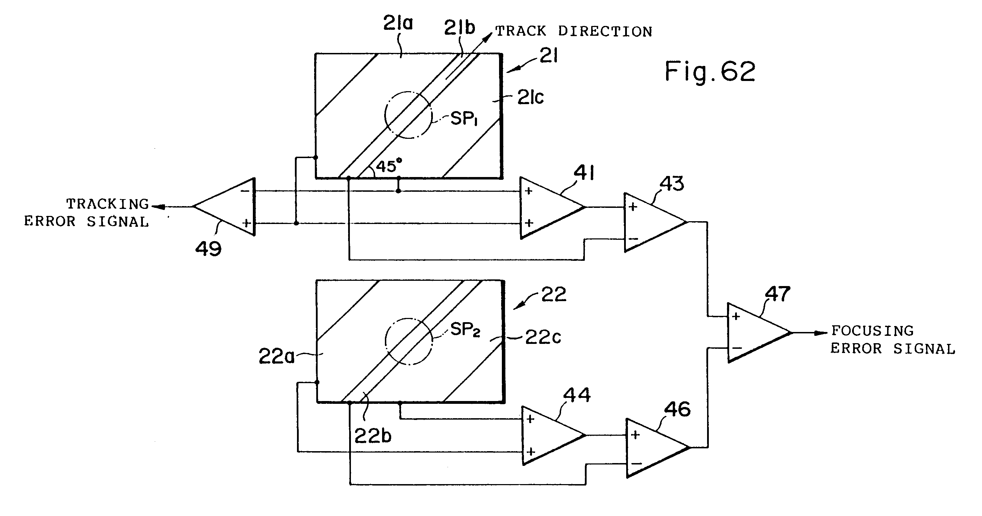

As shown in Fig. 62, the photodetector 21 is equipped with photodiodes 21a, 21b, 21c that are partitioned into three sections and electrically isolated from one another. The width of the centrally located photodiode 21b is comparatively small. The photodetector 21 has a rectangular light-receiving surface that is perpendicular to the X plane. The sides of the light-receiving surface in the longitudinal direction thereof lie parallel to the X plane. The partitioning lines (boundary lines) of the three photodiodes 21a, 21b, 21c are inclined at an angle of 45° with respect to the aforementioned longitudinal sides.

Similarly, the photodetector 22 is equipped with photodiodes 22a, 22b, 22c that are partitioned into three sections and electrically isolated from one another. The width of the centrally located photodiode 22b is comparatively small. The photodetector 22 also has a rectangular light-receiving surface, but this surface is perpendicular to the Y plane and its sides in the longitudinal direction lie parallel to the Y plane. The partitioning lines (boundary lines) of the three photodiodes 22a - 22c are inclined at an angle of 45° with respect to the aforementioned longitudinal sides.

The positional relationship between the optical pick-up apparatus and the photomagnetic disk 30 is set in such a manner that the direction of polarization PL of the emitted light from the semiconductor laser 11 and the direction of tracks TR (the direction of the tangent thereto) of the photomagnetic disk 30 become parallel. In this positional relationship, the image of the tracks TR which the reflected light from the photomagnetic disk 30 projects upon the light-receiving surface of the photodetector 21 is rendered parallel to the aforementioned partitioning lines. That is, the partitioning lines of the photodetector 21 become parallel to the direction of the tracks TR. The same is true in the photodetector 22.

The output signals from the photodiodes 21a, 21b, 21c, 22a, 22b, 22c are represented using the same reference numerals 21a, 21b, 21c, 22a, 22b, 22c, respectively. The light spots formed on the photodetectors 21, 22 by the reflected light from the glass plates 14, 15 are represented by $SP_1$, $SP_2$, respectively.

Formation of the tracking error signal will be described first. The tracking error signal is produced by the arithmetic operation 21a - 21c, which is performed by the subtractor 49 using the output signals from the photodiodes 21a and 21c of the photodetector 21. (This is the push-pull method.) The tracking error signal can be produced also by the arithmetic operation 22a-22c using the output signals from the photodiodes 22a and 22c of the photodetector 22.

Next, the formation of the focusing error signal will be described.

As shown in Fig. 61, the photodetector 21 is so arranged that its light-receiving surface is situated slightly in back of the focal point of the light reflected from the glass plate 14 when correct focusing is being carried out. The photodetector 22 is so arranged that its light-receiving surface is situated slightly in front of the focal point of the light reflected from the glass plate 15 when correct focusing is being carried out. It is preferred that the the transmittances or reflectivities of the glass plates 14, 15 be adjusted in such a manner that the light intensities of the beam spots $SP_1$, $SP_2$ of the photodetectors 21, 22 are substantially equalized.

By using adders 41, 44 and subtractors 43, 46, 47, the following arithmetic operation is performed to produce the focusing error signal (by the double-beam size method):

[(21a + 21c)-21b)] - [(22a + 22c)-22b)]     Eq. 23

The read signal is produced by the following arithmetic operation, which is performed by arithmetic units that are not shown:

(21a + 21b + 21c) - (22a + 22b + 22c)     Eq. 24

An effect the same as that described above can be obtained also by setting the positional relationship between the optical pick-up apparatus and the photomagnetic disk 30 in such a manner that the direction of polarization PL of the light emission from the semiconductor laser 11 perpendicularly intersects the direction of the tracks TR of the photomagnetic disk 30.

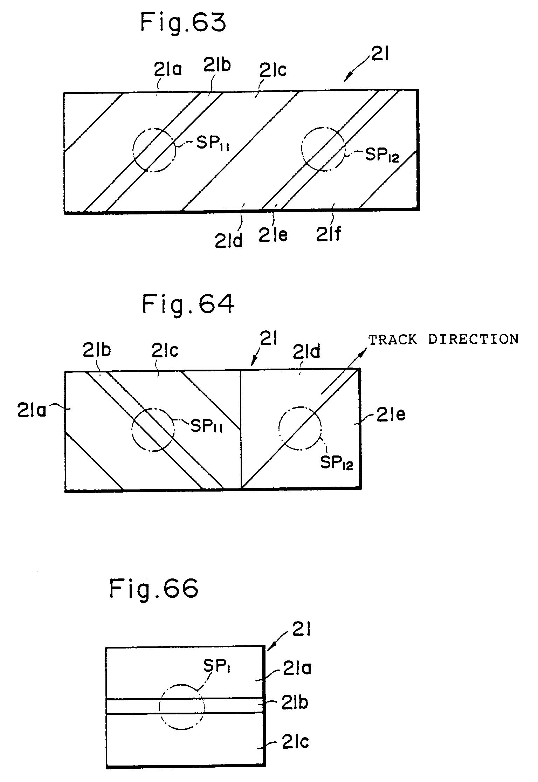

Fig. 63 illustrates another example of the construction of photodetector 21. Here the photodetector 21 is composed of six mutually independent photodiodes 21a - 21f partitioned by partitioning lines inclined at an angle of 45° with respect to the longitudinal sides of the photodetector 21. Reflected light $SP_{11}$ from the top surface of the glass plate 14 is received by the photodiodes 21a - 21c, and reflected light $SP_{12}$ from the bottom surface of the glass plate 15 is received by the photodiodes 21d - 21f. The photodetector 22 is identically constructed.

In this arrangement, the tracking error signal, focusing error signal and read signal are obtained by taking the sums of the signals formed by the light reflected from the top surface of the glass plate and the corresponding signals formed by the light reflected from the bottom surface of the glass plate. As a result, the levels of the signals obtained are enlarged and the S/N ratio is improved.

Fig. 64 illustrates still another example of the photodetector 21. Here the photodetector 21 is constituted by a total of five photodiodes, namely two photodiodes 21d, 21e partitioned by partitioning lines along the track direction, and three photodiodes 21a, 21b, 21c partitioned by partitioning lines perpendicular to the track direction.

The tracking error signal is obtained by the arithmetic operation 21d-21e. The photodetector 22 is identically constructed, and the focusing error signal is detected by the above-described double-beam size method. The read signal is obtained as the difference between the sum of the output signals from all of the photodiodes of photodetector 21 and the sum of the output signals from all of the photodiodes of photodetector 22.

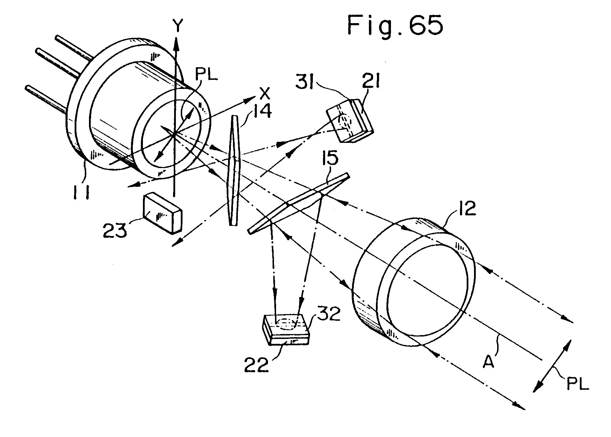

Fig. 65 illustrates a 12th embodiment of the present invention. The aspects of this embodiment that differ from the arrangement of Fig. 61 will now be described.

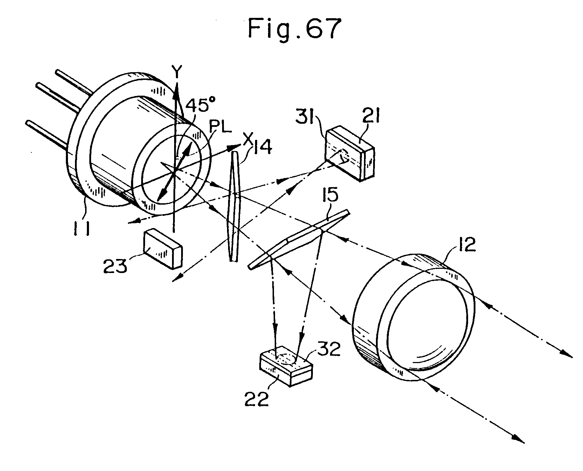

As shown in Fig. 66, the photodetector 21 is constituted by three electrically independent photodiodes 21a, 21b and 21c formed by partitioning the rectangular light-receiving surface into three sections by partitioning lines that are parallel to the longitudinal sides of the light-receiving surface. The photodetector 22 is identically constructed.

In Figs. 62, 63, 64 and 66, the same reference characters 21 and 21a - 21f are used but are not mutually related.

The photodetector 21 is so arranged that its light-receiving surface lies perpendicular to the X plane while the longitudinal sides thereof are inclined at an angle of 45° with respect to the X plane. The photodetector 22 is so arranged that its light-receiving surface lies perpendicular to the Y plane while the longitudinal sides thereof are inclined at an angle of 45° with respect to the Y plane. The tracking error signal, focusing error signal and read signal are formed in the same manner as set forth in connection with the embodiment shown in Fig. 62.

It goes without saying that the foregoing approach is applicable also to the optical system shown in Figs. 2, 3, 4, 8 and 9.

A 13th embodiment of the present invention will now be described.

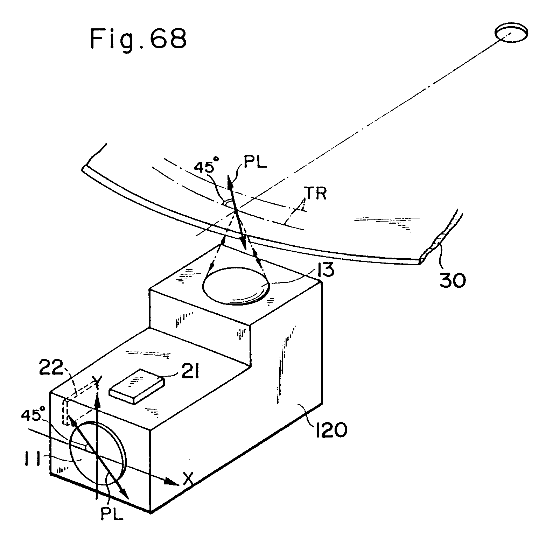

Before describing this embodiment, the construction and arrangement of a more general optical system will be discussed with reference to Figs. 67 and 68.

Fig. 67 illustrates the optical system shown in Fig. 6. In Fig. 67, the direction of polarization of the light emission from the semiconductor laser 11 is indicated by PL.

In actual practice, such an optical system is used in a configuration wherein the direction of polarization PL of the light projected toward the photomagnetic disk 30 is tilted at an angle of 45° with respect to the direction of the tangent to the tracks TR of the disk 30, as illustrated in Fig. 68. As a result, the system is readily influenced by the characteristic of the complex index of refraction of the disk 30.

In Fig. 68, light emitted from the collimating lens is polarized upwardly by an uprighting mirror (not shown), passes through the objective lens 13 and is projected upon the photomagnetic disk 30 while being condensed. The specific construction of an optical head case 120 will be described later. Further, though Fig. 68 is drawn with components rotated 90° about the optic axis in comparison with Fig. 67, this is not essential. The optic axis of the semiconductor laser 11 in the optical system within the case 120 is arranged so as to be parallel to the radial direction of the photomagnetic disk 30. The optical head case 120 is supported so as to move freely radially of the photomagnetic disk 30.

The 13th embodiment proposes a configuration so contrived that the direction of polarization of the light projected toward the photomagnetic disk 30 is rendered parallel or perpendicular to the track direction by changing the arrangement of the optical pick-up apparatus.

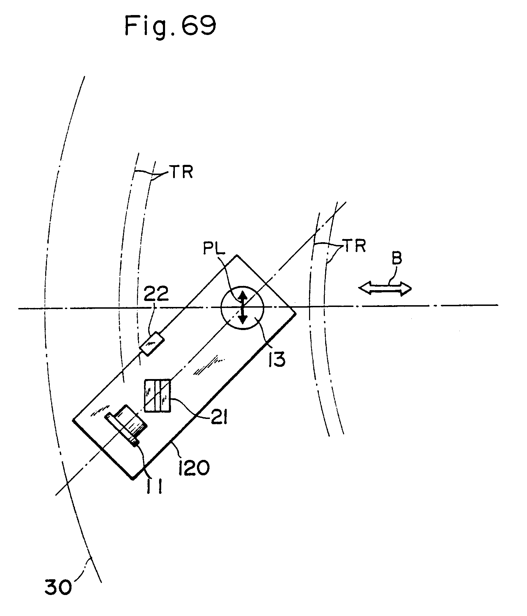

Fig. 69 illustrates the 13th embodiment. The optical head case 120 is disposed in such a manner that the optic axis of the light emission from the semiconductor laser 11 forms an angle of 45° with the radial direction (indicated by arrow B) of the photomagnetic disk 30 as viewed from a plane, or in other words, in such a manner that the optic axis of the light emission from the semiconductor laser 11 forms an angle of 45° (at the position where the light from the objective lens 13 is projected upon the photomagnetic disk 30) with the direction of the tangent to the tracks TR of the photomagnetic disk 30. The entire case 120 is supported so as to be free to move in the radial direction (the direction of arrow B) of the photomagnetic disk 30.

By virtue of an arrangement and construction of this kind, the direction of polarization PL of the light which passes through the objective lens 13 and is projected toward the photomagnetic disk 30 while being condensed becomes parallel to the direction of the tangent to the tracks TR. Of the two photodetectors 21 and 22, at least the one adapted to output a light-reception signal for forming the tracking error signal includes photodiodes partitioned into two or three sections by partitioning lines that are parallel to the track direction of the track images projected upon the photodetector owing to the reflected light from the photomagnetic disk 30.

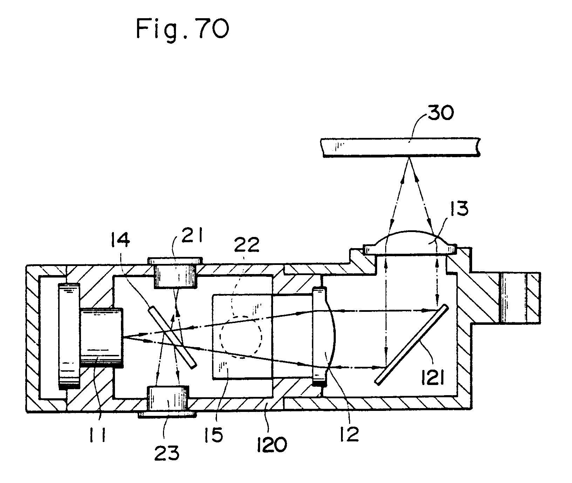

In Fig. 69, the optical system such as the glass plates is not shown but the interior of the optical head case 120 has a construction of the kind shown in Fig. 70.

In Fig. 70, that part of the emitted light from the semiconductor laser 11 that has passed through the glass plates 14, 15 is collimated by the collimating lens 12 and has its direction of propagation changed 90° by an uprighting mirror 121 so as to impinge upon the objective lens 13. The light incident upon the objective lens 13 is condensed by the lens 13 and is then projected upon the photomagnetic disk 30. The light reflected from the photomagnetic disk 30 is rendered parallel by the objective lens 13, deflected at right angles by the uprighting mirror 121 and then condensed by the collimating lens 12. In the process of being condensed, the light is reflected by the glass plates 15, 14 so as to impinge upon the photodetectors 22, 21. The semiconductor laser 11, glass plates 14, 15, lenses 12, 13, uprighting mirror 121 and photodetectors 21, 22, 23 are secured to the case 120. The analyzers 31, 32 are not shown. The analyzers 31, 32 can be incorporated within the photodetectors 21, 22, respectively.

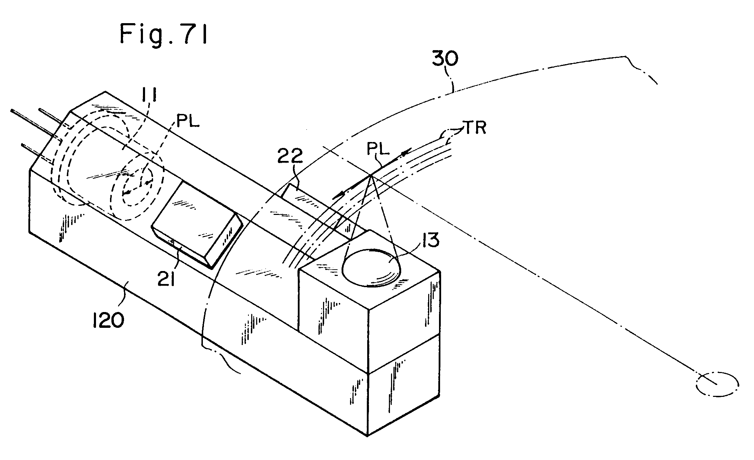

Fig. 71 illustrates a 14th embodiment of the invention. The case 120 is so disposed that the optic axis of the emitted light from the semiconductor laser 11 is rendered parallel to the radial direction of the photomagnetic disk 30. In addition, the case is moved in the aforementioned radial direction. In comparison with Fig. 68, the semiconductor laser 11 is mounted upon being rotated 45° about its optic axis. In this arrangement also, the direction of polarization PL of the light projected toward the photomagnetic disk 30 from the objective lens 13 becomes parallel to the direction of the tangent to the tracks on the photomagnetic disk 30. The photodetectors 21, 22 also are disposed at positions obtained upon rotating these detectors 45° about above optic axis. The photodiodes of at least one of these photodetectors are partitioned into two or three sections by partitioning lines extending in the tangential direction of the track images. The interior of the case 120 is substantially the same as that shown in Fig. 70.

The embodiments shwon in Figs. 69 and 71 are deemed to be arrangements obtained by putting the embodiments of Figs. 61 and 65 into more concrete form.

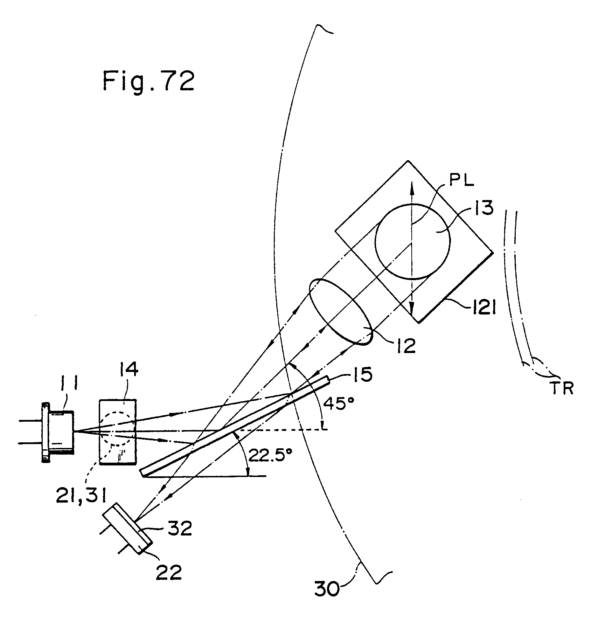

Fig. 72 illustrates a 15th embodiment.

In this embodiment, the glass plate 15 is arranged so as to be inclined at an angle of 22.5° with respect to the optic axis of the semiconductor laser 11. The glass plate 15 acts as a beam splitter. Accordingly, the emitted light from the semiconductor laser 11 is deflected by 45° by means of the glass plate 15. The deflected projected light beam is collimated by the collimating lens 12 and is then deflected 90° vertically upward by the uprighting mirror 121. The light beam is then condensed by the objective lens 13 so as to be projected upon the photomagnetic disk 30. The light reflected from the photomagnetic disk 30 is acted upon by the objective lens 12, the uprighting mirror 121 and the collimating lens 12, and some of this light passes through the glass plate 15 so as to impinge upon the photodetector 22; the rest of the light is reflected by the glass plate 15 and is then reflected by the glass plate 14 so as to impinge upon the photodetector 21.

This optical system also is accommodated in the case 120 and therefore is supported so as to be free to move radially of the photomagnetic disk 30. The direction of polarization PL of the emitted light from the semiconductor laser 11 is the same as shown in Fig. 68. By deflecting this emitted light through an angle of 45° by means of the glass plate 15, the direction of polarization PL of the light projected upon the photomagnetic disk 30 is made to coincide with the direction of the tangent to the tracks TR.

Thus, in accordance with each of the 13th through 15 embodiments of the present invention, the direction of polarization of the light projected upon the photomagnetic disk is rendered parallel to the tangential direction of the tracks, and a high S/N ratio can be obtained since there is no influence from the characteristic of the complex index of refraction of the disk.

It goes without saying that it is possible to adopt an arrangement construction in which the direction of polarization of the light projected upon the photomagnetic disk is rendered perpendicular to the track direction.

Next, holding means for holding the glass plates, lenses, photodetectors, etc., will be described in specific terms.

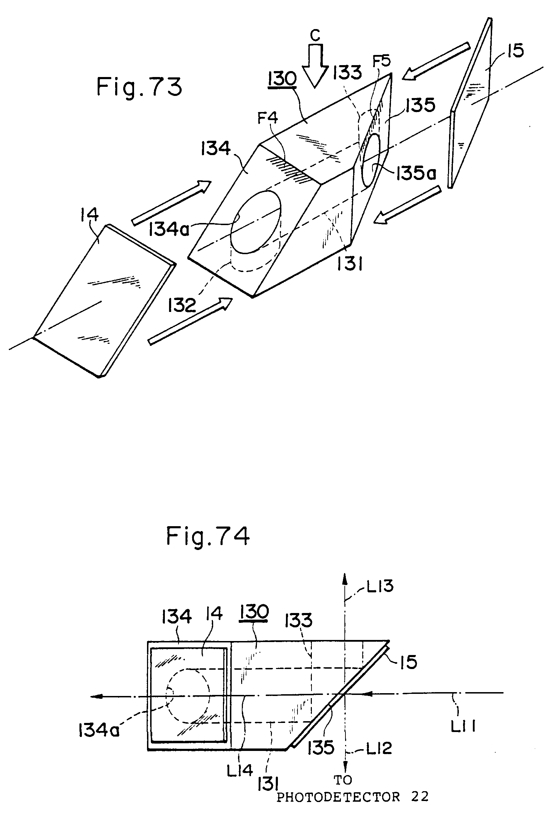

Figs. 73 and 74 illustrate an example of a holding device for holding the glass plates 14 and 15 used in the optical pick-up apparatus in accordance with the second embodiment shown in Figs. 5 and 6. Fig. 73 is a perspective view, in which the direction from which the arrangement is viewed differs slightly from that in Fig. 6. Fig. 74 is a plan view as seen from the direction of arrow C in Fig. 73.

The holding device has a holding block 130. The latter has the shape of a rectangular prism the end faces of which are cut off obliquely to match the angles of inclination of the glass plates 14, 15. The longitudinal direction of the holding block 130 coincides with the direction of the optic axis of the optical system shown in Figs. 5 and 6. Preferably, the holding block 130 is made of a material whose coefficient of thermal expansion is substantially equal to or the same as that of the glass plates 14, 15.

The glass plates 14, 15 are affixed, as by a bonding agent, to respective inclined end faces (holding faces) 134, 135 to which the holding block 130 has been cut. The holding faces 134, 135 are formed in such a manner that line segments, which are formed by intersection between a plane perpendicular to the optic axis and these holding faces 134, 135, are rendered mutually perpendicular.

Preferably, the glass plates 14, 15 are affixed to the holding faces 134, 135 only partially (at one location or one point). Examples of locations at which the glass plates 134, 135 are affixed are indicated by the hatched portions F4, F5, respectively. By thus affixing the glass plates 14, 15 solely at one location for each, deformation (flexure) of the glass plates 14, 15 can be prevented even if the coefficient of thermal expansion of the holding block 130 differs from that of the glass plates 14, 15, and even if there is a change in the ambient temperature.

The holding block 130 has a first longitudinally extending through-hole 131 passing through the center thereof. The through-hole 131 has openings 134a, 135a at both its ends. These openings 134a, 135a are located in the holding faces 134, 135, respectively. The emitted light beam from the semiconductor laser 11 and the reflected light beam from the photomagnetic disk 30 condensed by the condensing optical system pass through the first through-hole 131.

The holding block 130 is further provided with through-holes 132, 133 extending in directions which perpendicularly intersect the first through-hole 131. These through-holes 132, 133 also have openings in the holding faces 134, 135, respectively.

Light L11, which is reflected light from the photomagnetic disk 30 in the process of being condensed by the condensing optical system impinges upon the glass plate 15 as described above. A part L12 of this incident light is reflected by the glass plate 15 so as to be directed toward the photodetector 22. A remaining part L14 of the incident light is transmitted by the glass plate 15 and impinges upon the glass plate 14 upon passing through the first through-hole 131. Of the reflected light from the glass plate 15, that light (referred to as "stray light") L13 directed diametrically away from the photodetector 22 is led to the outside through the second through-hole 133. If the second through-hole 133 were absent, the stray light L13 would be reflected by the inner wall surface of the first through-hole 131 and some of this reflected light would impinge upon the photodetector 22 through the glass plate 15, thereby forming a source of noise. Providing the second through-hole 133 prevents the occurrence of such noise before it occurs.

Some of the light L14 directed toward the glass plate 14 through the first through-hole 131 is reflected by the glass plate 14, and this reflected light is directed toward the photodetector 21 through the second through-hole 132.

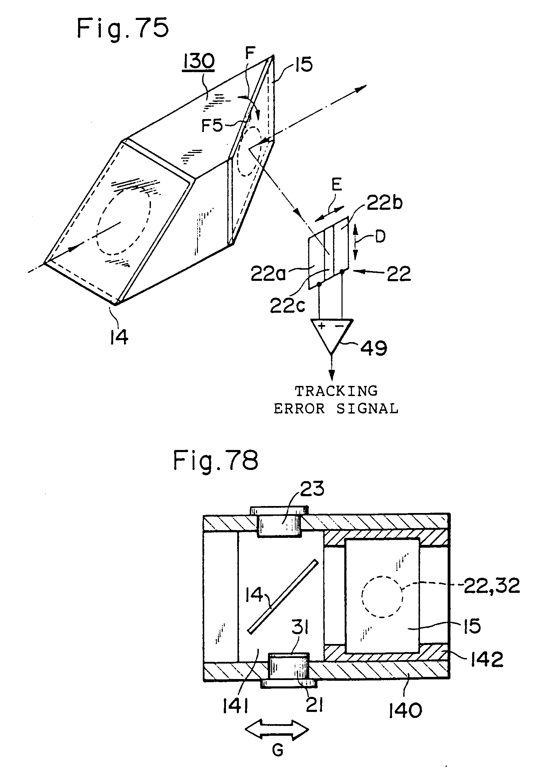

Preferably, the locations F4, F5 at which the glass plates 14, 15 are affixed by the bonding agent are determined upon taking into consideration the points set forth below. Reference will be had to Fig. 75 to discuss this in connection with the affixing point F5 of glass plate 15.

As mentioned earlier, some of the reflected light from the photomagnetic disk 30 is reflected by the glass plate 15 and impinges upon the photodetector 22. The latter comprises, by way of example, photodiodes 22a, 22b, 22c partitioned into three sections. As described, the difference between the output signals from the photodiodes 22a, 22c is calculated by the subtractor 49, whereby the tracking error signal is produced.

The direction of the partitioning lines of the photodiodes 22a - 22c in the three sections coincides with the track direction of the photomagnetic disk 30. Accordingly, when a tracking error occurs, the spot of the reflected light on the light-receiving surfaces of these photodiodes moves in a direction (indicated by arrow E) perpendicular to the partitioning lines.

The glass plate 15 is affixed at point F5 to the holding surface 135 of the holding block 130 by a bonding agent. The bonding agent also undergoes thermal expansion and contraction due to changes in ambient temperature. As a result of such thermal expansion and contraction of the bonding agent, the glass plate 15 is displaced toward or away from the holding face 135 about the bonding point F5. As a consequence of such displacement of the glass plate 15, the spot of reflected light on the light-receiving surfaces of the photodiodes 22a - 22c of photodetector 22 also moves.

The boding point F5 is decided in such a manner that the direction (as indicated by an arrow D) of displacement of the reflected-light spot, which is caused by displacement of the glass plate 15 arising from the thermal expansion and contraction of the bonding agent, will coincide with the direction of the partitioning lines of the photodiodes 22a - 22c. By so doing, the tracking error signal will be completely unaffected even if the spot of reflected light should be displaced in the direction of arrow D, so long as the displacement is within the limits of the light-receiving surfaces of the photodiodes 22a - 22c. The affixing point F4 of the photodetector 14 should be decided in the same manner.

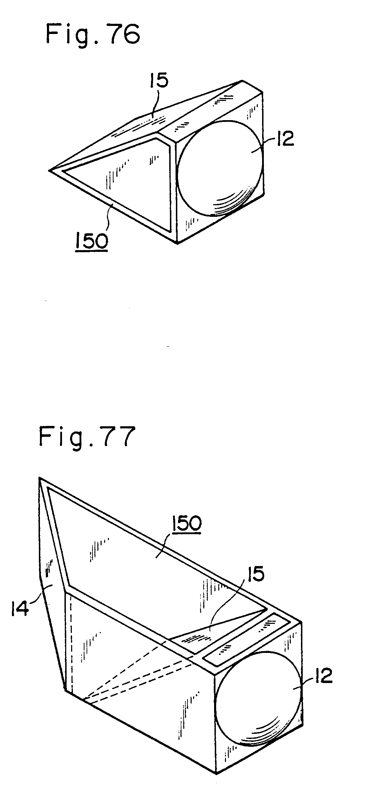

Fig. 76 illustrates another embodiment of the holding device.

In this embodiment, a transparent plate (which corresponds to the glass plate) 15 and the collimating lens 12 are formed as integral parts of the holding device. More specifically, the transparent plate 15 and the lens 12 are formed as integral parts of a frame 150 of the holding device. A holding device of this type can be fabricated using plastic, by way of example.

Fig. 77 illustrates yet another example of the holding device. Here two transparent plates 14, 15 and the lens 12 are formed as integral parts of the end faces or partitioning plate of the frame 150 constituting the holding device.

When a holding device of this kind is used, the positional relationship among the transparent plates and lenses, etc., fixed. This means that it will suffice to merely position the holding device relative to the semiconductor laser 11, and therefore assembly and adjustment are facilitated. In addition, since there is little mutual shifting or displacement of these components as caused by changes in temperature, the system excels in terms of withstanding the environment.

If the portion of lens 12 is eliminated in Fig. 77, a holding device in which the two transparent plates 14 and 15 are integrated is realized. It is permissible in Figs. 76, 77 to make the portion provided with the lens 12 flat and affix a separately manufactured lens 12 to this flat surface.

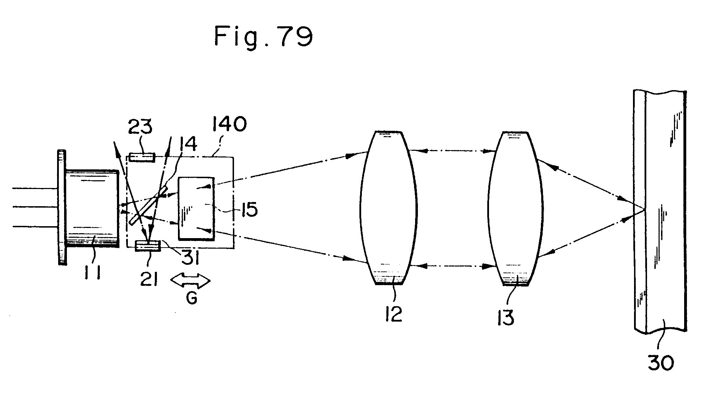

Fig. 78 illustrates still another embodiment of the holding block.

Here a holding block 140 has the shape of a circular or rectangular cylinder in the interior of which the glass plates 14, 15 are held via mounting members 141, 142, respectively. The photodetectors 21, 22 and 23 are secured to the peripheral surface of the holding block 140. The analyzers 31, 32 are attached to the front faces of the photodetectors 21, 22, respectively. The holding block 140 is supported so as to be free to move axially of the optical system, as illustrated by the arrow G in Fig. 79.

In the holding block 140, the glass plates 14, 15 and the photodetectors 21 - 23 are secured upon first being positionally adjusted. It will suffice to positionally adjust the holding block 140 while moving it in the direction of the optic axis in the optical system shown in Fig. 79.

In detection of the focusing error signal by the (double) beam-size method, the photodetectors 21 and 22 are disposed at positions in front and in back of the focal point of the reflected light in a case where focusing has been performed correctly. To this end, it is required that the photodetectors 21 and 22 be positionally adjusted separately in directions perpendicular to the optic axis.

If the holding block 140 is used, positional adjustment of the photodetectors 21 and 22 in directions perpendicular to the direction of the optic axis can be carried out at a stroke by moving the entire holding block 140 solely along the optic axis.

In a specific mode of an optical pick-up apparatus, an uprighting mirror is used, as illustrated in Fig. 16. A diverging light emission from a light source such as a semiconductor laser is converted into collimated light by a collimating lens or the like. The collimated light travels in a direction parallel to the surface of the optical recording medium. In order to project condensed light perpendicularly upon the surface of the optical recording medium, it is necessary that the direction in which the collimated light propagates be deflected at right angles and that the light be condensed. The uprighting mirror is employed for the purpose of deflecting the collimated light, and an objective lens is used for the purpose of condensing the collimated light. Since the uprighting mirror and the objective lens are arrayed in an optical head in a direction which perpendicularly intersects the plane of the optical recording medium, the optical head has considerable thickness in this direction.

On the other hand, from another point of view, the optical pick-up apparatus may be of two types for the purpose of track access. In a first type (as shown, for example, in Fig. 16), the entirety of the optical pick-up apparatus is moved or displaced. In the second type (as shown, for example, in Fig. 19), part of the optical pick-up apparatus, such as only the objective lens or only the objective lens and uprighting mirror, is moved or displaced.

The first type is disadvantageous in that a high-speed seeking operation is difficult since the entire optical pick-up apparatus is moved, but an advantage is that shifting of the optic axis does not readily occur and the optical system is stable as a result.

The second type makes possible a high-speed seeking operation but shifting of the optic axis tends to occur because only part of the optical system moves.

Described next will be an embodiment relating to an optical pick-up apparatus in which the thickness of the optical head portion can be minimized.

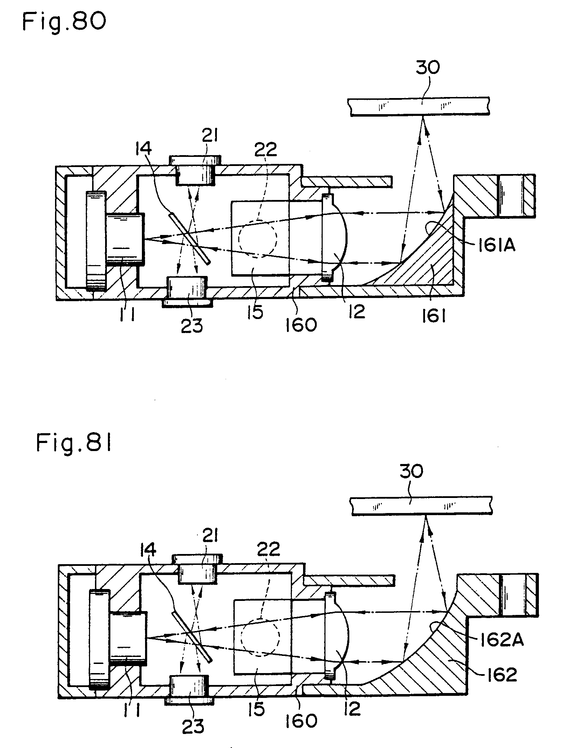

Fig. 80 illustrates a 16th embodiment of the present invention. Here the entirety of the optical system shown in Figs. 5 and 6 is housed in a case. The optical pick-up apparatus is of the aforementioned first type, in which the entirety of the case containing the optical system is moved in order to perform track access.

In Fig. 80, the semiconductor laser 11, the transparent plates 14, 15, the photodetectors 21, 22, 23 and the collimating lens 12 are disposed in a case 160 and secured by suitable fixing members. A concave mirror 161 is provided within the case 160. The concave mirror 161 deflects the incident light at right angles and functions to condense collimated light or collimate divergent light. In Fig. 80, the analyzers 31, 32 are deleted from the drawing. The analyzers 31, 32 can be included in the respective photodetectors 21, 22.

The diffused light emitted by the semiconductor laser 11 passes through the glass plates 14, 15 and is collimated by the collimating lens 12. The collimated light is reflected by a concave reflecting surface 161A of the concave mirror 161, whereby the direction of propagation is deflected at right angles, and the light is condensed as well. The resulting light is projected upon the photomagnetic disk 30. The diffused reflected light from the photomagnetic disk 30 impinges upon the reflecting surface 161A of the concave mirror 161 and is reflected thereby, as a result of which the light is deflected in the direction of the collimating lens 12 and collimated. The collimated light is condensed by the lens 12, during which time some of the light is reflected by the glass plates 14, 15 so as to impinge upon the photodetectors 21, 22, respectively.

In order to perform fine track access, tracking control and focusing control, the concave mirror 161 may be displaced by an actuator or a glass plate or lens may be disposed above the concave mirror 161 and moved finely. Of course, each of the aforementioned control operations may be performed by finely moving the entire case 160.

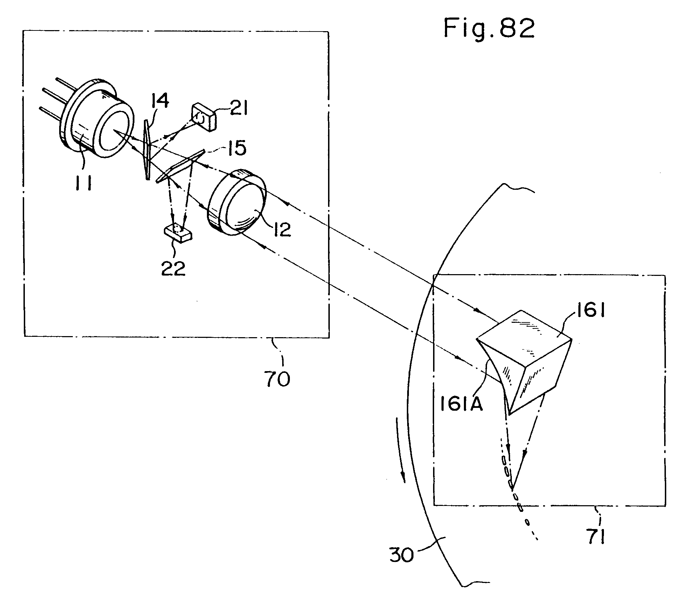

Fig. 81 shows a modification in which a reflecting body 162 having a concave reflecting surface 162A is formed integral with the case 160 at a portion thereof. The reflecting surface 162A can be fabricated by coating a reflecting film.

Thus, in the 16th embodiment, the thickness of the optical pick-up apparatus (the dimension thereof in the direction perpendicular to the surface of the photomagnetic disk) can be reduced.

Fig. 82 illustrates a 17th embodiment relating to an optical pick-up apparatus of the second type, namely of the separated-head type. The construction of the stationary portion 70 is the same as that shown in Fig. 19. In the movable portion 71, the concave mirror 161 is provided instead of the uprighting mirror 72 and objective lens 13 shown in Fig. 19. The movable portion containing the concave mirror 161 is moved in order to perform track access. In order to carry out fine track access, tracking control and focusing control, the movable portion 71 or concave mirror 161 is moved finely and adjusted by an actuator.

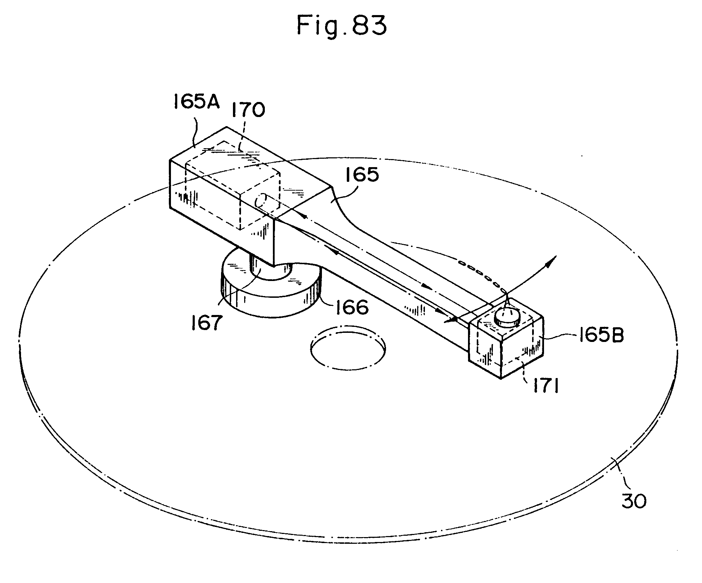

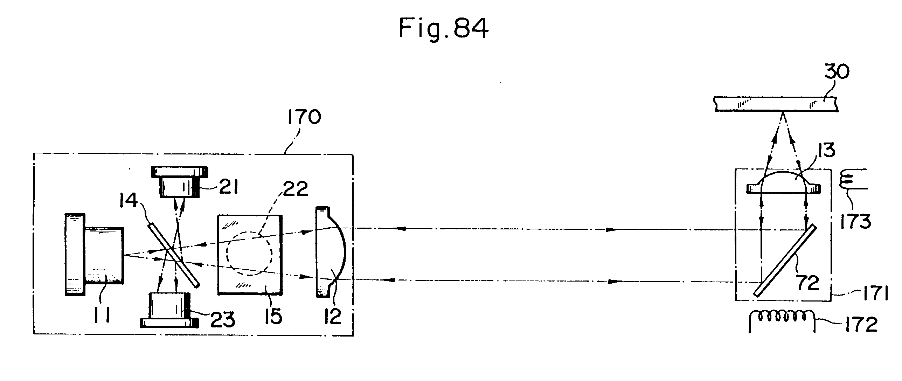

Figs. 83 and 84 illustrate an 18th embodiment of the present invention. This embodiment relates to an optical pick-up apparatus of the separated-head type (the second type mentioned above). Fig. 84 depicts the construction of the interior of an arm 165 shown in Fig. 83.

The optical system of the optical pick-up apparatus is constituted by a stationary portion 170 and a movable portion 171. The optical pick-up apparatus includes the arm 165, which is supported on a rotary shaft 167. The latter is perpendicular to the surface of the photomagnetic disk 30 and is rotatively driven by a drive unit 166 containing a motor.

The stationary portion 170 and the movable portion 171 are disposed within and secured to a base end 165A and a distal end 165B, respectively, of the arm 165. The rotary shaft 167 is located at a position which is the exact center of gravity of the arm 165. Accordingly, it is unnecessary to provide the arm 165 with a balance weight. Consequently, the arm 165 is made light in weight and moves in a stable manner, as a result of which a high-speed seeking operation is made possible.

Owing to rotation of the arm 165 about the rotary shaft 167, the movable portion 171 moves diametrically of the photomagnetic disk 30 to perform the seeking operation (track access). The meanings of the terms "stationary portion" and "movable portion" differ in certain aspects from the meanings set forth in the 16th and 17th embodiments. Here the stationary portion 170 is stationary in the sense that it is fixed to the arm 165, though it moves together with the arm. The movable portion 171 is movable in the sense that all or a part of it is finely driven by actuators in order to perform focusing control, tracking control and fine track access.

The stationary portion 170 contains the semiconductor laser 11, the glass plates 14, 15, the photodetectors 21, 22, 23 (the photodetectors 21, 22 include respective analyzers), and the collimating lens 12. The movable portion 171 contains the uprighting mirror 72 and the objective lens 13. The concave mirror 161 may be provided in place of the uprighting mirror 72 and objecting lens 13. An actuator 172 is for fine track access and tracking control, and an actuator 173 is for focusing control. The entirety of the movable portion 171 or the objective lens 13 is driven by the actuators 172, 173. Collimated light travels from the stationary portion 170 to the movable portion 171 or in the opposite direction through the interior of the arm 165 in the longitudinal direction thereof.

The optical pick-up apparatus basically is so adapted that light emitted from a light source is condensed and projected upon an optical recording medium, the reflected light from the optical recording medium is split into at least two light beams using a beam splitter or the like, the light beams are condensed and the condensed light beams are received by respective ones of the two photodetectors. A tracking error signal and a focusing error signal are produced based upon the output signals from the photodetectors. In case of playback, a read signal is produced based upon an output signal or signals from one or both of the two photodetectors. It is possible also to write information on (or erase it from) a photomagnetic recording medium. In this case, the light source generally is driven so as to increase the intensity of the light emission.

The beam-size method or the astigmatism method may be used in order to detect focusing error. An arrangement will be described in which the focusing error signal is produced based upon output signals from the two photodetectors, as in the double-beam size method.

It is necessary that the quantities of light incident upon the two photodetectors be balanced. When the optical system of the optical pick-up apparatus is accommodated within a case, the reflected light from the inner wall surface of the case impinges upon the photodetectors in the form of stray light. The problem that arises is an imbalance in the quantities of incident light. The intensity of the light emission from the light source is increased in the modes for writing and erasing information, as set forth above. Therefore, if the quantities of stray light which impinge upon the two photodetectors differ even slightly, the difference between the quantities of incident stray light becomes quite pronounced and the focusing error signal develops a conspicuous offset.

Described next will be an embodiment in which the offset which appears in a signal, such as the focusing error signal, produced based upon the output signals from the two photodetectors can be minimized even if there is a change in the intensity of the light emission from the light source brought about when the operating mode is changed, as between modes for recording and playing back information, or even if there is a fluctuation in the quantity of the light emission from the light source due to a change in temperature.

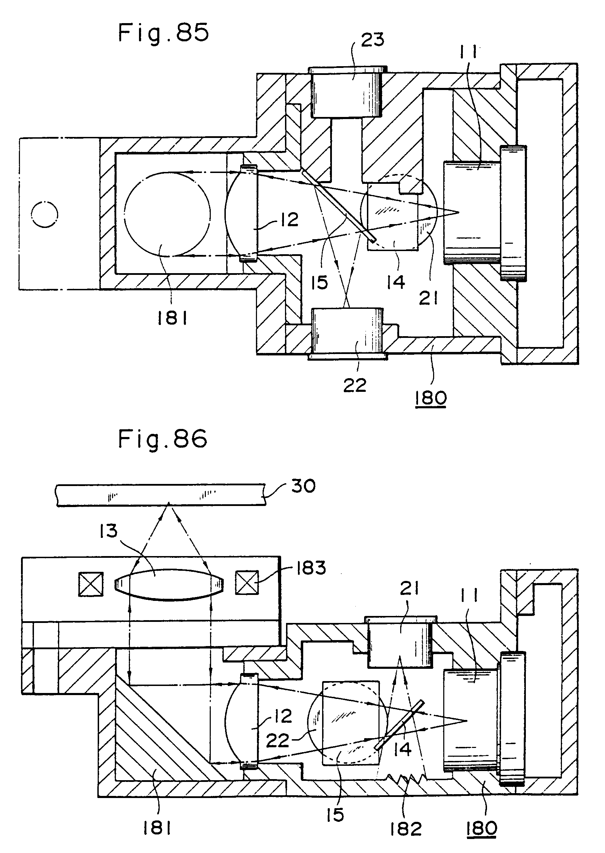

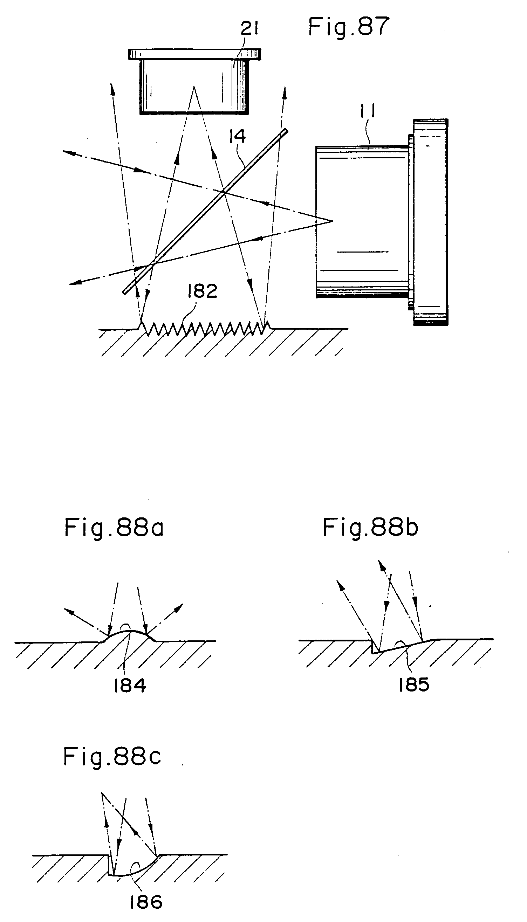

Figs. 85 through 87 illustrate a 19th embodiment of the present invention. In Figs. 85 and 86, basically the optical system shown in Figs. 5 and 6 is housed in a case. Fig. 87 depicts a part of Fig. 86 in enlarged form.

The optical system illustrated in Figs. 85 and 86 basically is the same as that shown in Figs. 5 and 6, and the function thereof is exactly the same. The optical system shown in Figs. 85 and 86 is drawn with the left and right sides thereof reversed from views of Figs. 5 and 6. The photodetector 23 for controlling the quantity of light emitted by the semiconductor laser is provided at a position opposing the photodetector 22. The photodetector 21 is disposed in front of the focal point of the reflected light from the glass plate 14, and the photodetector 22 is disposed in back of the focal point of the reflected light from the glass plate 15. The analyzers 31, 32 are deleted from the drawing. These can be included in the respective photodetectors 21, 22.

Light emitted by the semiconductor laser 11, transmitted by the glass plates 14, 15 and collimated by the collimating lens 12 is deflected at right angles by an uprighting mirror 181 so as to be directed toward the photomagnetic disk 30. The collimated light is condensed by the objective lens 13 and then projected upon the photomagnetic disk 30. The light reflected from the photomagnetic disk 30 is collimated by the objective lens 13 and is then deflected at right angles by the uprighting mirror 181. This collimated light, while being condensed by the collimating lens 12, is reflected by each of the glass plates 15, 14 so as to impinge upon the photodetectors 22, 21, respectively. The objective lens 13 is moved finely by an actuator coil 183 in order that focusing control (and tracking control) may be performed.

These elements of the optical system, namely the semiconductor laser 11, the collimating lens 12, the glass plates 14, 15, the photodetectors 21, 22, 23 and the uprighting mirror 181 are arranged in a case 180 and secured by suitable fixing means.

In the interior of the case 180, reflected light and scattered light from the glass plates 14, 15 is reflected by the inner wall surface of the case 180, and the reflected light impinges upon the photodetectors 21, 22, 23 as stray light. A black body is formed on the inner wall surface of the case 180, as by painting it in the color black or coating it with a black film, in order to minimize the reflection of the light at the inner wall of the case 180. However, even this expedient does not make it possible to reduce the reflected light from the inner wall surface of the case 180 to zero.

Some of the light emitted by the semiconductor laser 11 is reflected by the glass plate 14 on the side of the semiconductor laser. While diffusing, this light travels toward the inner wall surface of the case 180, where it is reflected so as to pass through the glass plate 14 and impinge upon the photodetector 21 as stray light. Stray light impinges upon the photodetector 22 in the same manner.

Since the photodetector 21 is situated nearer to the semiconductor laser 11 than is the photodetector 22, the quantity of stray light incident upon the photodetector 21 is greater. Accordingly, a stray-light attenuating portion (a portion for adjusting or blocking stray light) 182 is formed on the inner wall surface of the case confronting the photodetector 21.

As depicted in Fig. 87, the stray-light attenuating portion 182 in this embodiment is composed of fine irregularities having the form of a grating. By virtue of the stray-light attenuating portion 182, the light is scattered or is reflected in directions which miss the photodetector 21, as a result of which the stray light incident upon the photodetector 21 is reduced. Preferably, the stray-light attenuating portion 182 is adjusted at formation so as to equalize the quantity of stray light incident upon the photodetector 21 and the quantity of stray light incident upon the photodetector 22.

Figs. 88a - 88c illustrate various examples of the stray-light attenuating portion. Fig. 88a illustrates a stray-light attenuating portion 184 having a convex curved surface, Fig. 88b a stray-light attenuating portion 185 which is a recess whose floor is inclined, and Fig. 88c a stray-light attenuating portion 186 which is a recess whose floor is formed by an offset curved surface. All of these stray-light attenuating portions 184 -186 act to change the direction of reflected light to prevent the reflected light from impinging upon the photodetector 21.

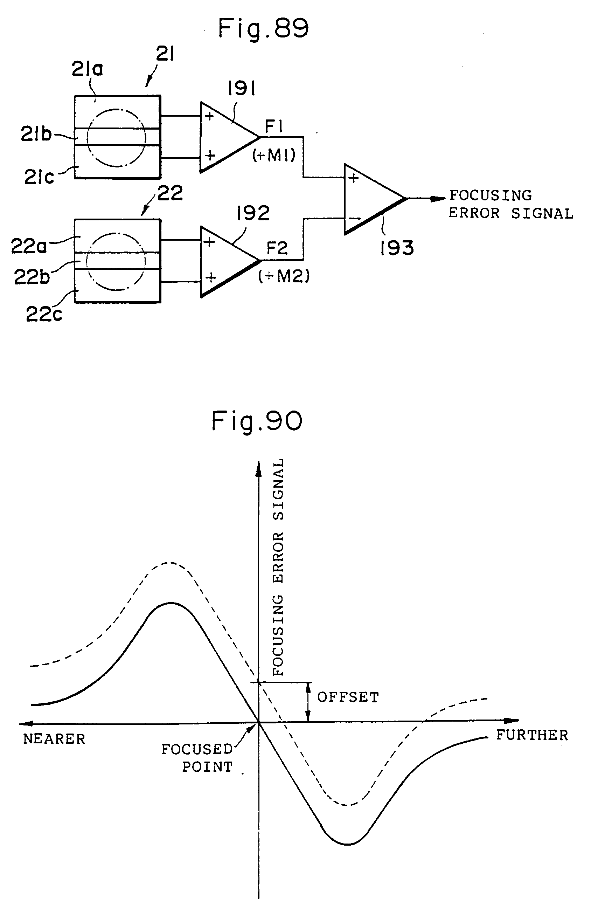

Fig. 89 illustrates an example of a circuit for producing a focusing error signal. Here the focusing error signal is produced by the double-beam size method.

Each of the photodiodes 21, 22 is composed of photodiodes in three sections. Let 21a, 21b, 21c represent the three photodiodes constituting the photodetector 21, and let 22a, 22b, 22c represent the three photodiodes constituting the photodetector 22.

The output signals from the photodiodes 21a, 21c on both sides of the photodetector 21 are added by an adder 191. The output signal of the adder 191 includes a signal component, represented by F1, which is devoid of a stray-light component, and a stray-light component that is represented by M1. Similarly, the output signals from the photodiodes 22a, 22c on both sides of the photodetector 22 are added by an adder 192. The output signal of the adder 192 includes a signal component, represented by F2, which is devoid of a stray-light component, and a stray-light component that is represented by M2. A subtractor 193 subtracts the output signal of the adder 192 from the output signal of the adder 191, thereby producing a focusing error signal F.

The focusing error signal F is given by the following equation:

$$F = (F1+M1) - (F2+M2)$$

$$= (F1-F2) + (M1-M2) \quad \ldots \text{ Eq. } 25$$

If we write M2 = kM1, then the stray-line component M = M1-M2 will be given by the following:

$$M = M1 - kM1$$

$$= M1(1-k) \qquad \ldots \text{Eq. 26}$$

If the quantities of stray light incident upon the photodetectors 21 and 22 are not equal, the coefficient k will be a value other than 1. In such case, the stray-light component M will not be 0, as indicated by Eq. 26, and the focusing error signal F will develop an offset as a result. Accordingly, this offset also will change in conformity with the operating mode, such as the recording (erasure)/playback mode, or when the quantity of emitted light from the semiconductor laser 11 varies due to a change in ambient temperature, and therefore a correct focusing error signal will not be obtained.

Thus, as described above, the quantities of stray light incident upon the photodetectors 21 and 22 are adjusted by the action of the stray-light attenuating portion 182 so as to become approximately equal. As a result, the coefficient k becomes approximately 1; i.e., the stray-light component M in Eq. 26 becomes approximately zero. Accordingly, from Eq. 25, the focusing error signal F becomes

$$F = F1 - F2 \qquad \text{Eq. 27}$$

and no offset is produced. Of course, the focusing error signal is unaffected by any change in the light-emission output of the semiconductor laser 11.

The foregoing embodiment is adapted to eliminate the influence of stray light by providing the inner wall surface of the case with the stray-light attenuating portion. Next, an embodiment will be described in which the influence on the focusing error signal is eliminated by means of electrical circuitry.

The solid line in Fig. 90 indicates the focusing error signal in a case where there is no stray light. The distance between the objective lens and the photomagnetic disk is plotted along the horizontal axis, and the level of the focusing error signal is plotted along the vertical axis. When there is a difference between quantities of stray light incident upon the two photodetectors 21 and 22, as set forth above, an offset is produced as indicated by the dashed line. The amount of this offset varies approximately in proportion to the intensity of the light emission from the semiconductor laser 11.

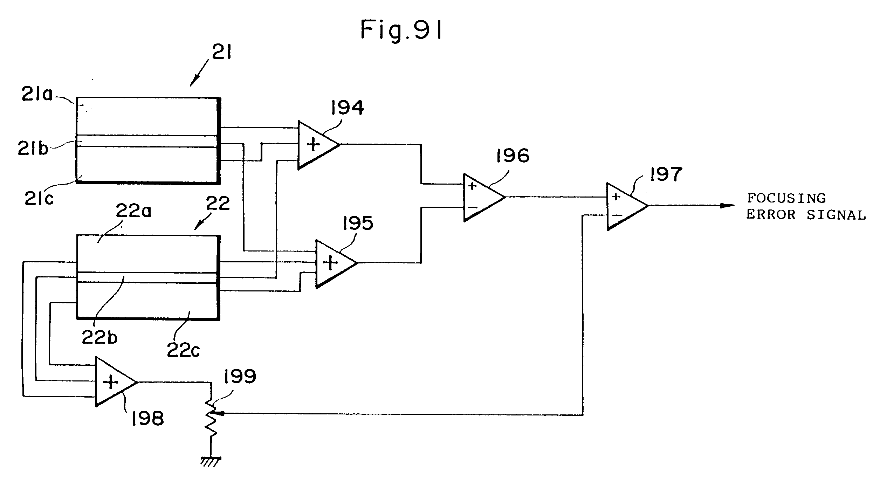

Fig. 91 illustrates a 20th embodiment of the invention. The focusing error signal is produced by the double-beam size method, but the arithmetic circuitry differs slightly from that shown in Fig 89. This embodiment is applicable also to the arithmetic circuitry of Fig. 89 as a matter of course.

In a case where no consideration is given to the influence of stray light, the focusing error signal is produced by evaluating the following equation using adders 194, 195 and a subtractor 196:

$$(21a + 21c + 22b) - (22a + 22c + 21b) \qquad \text{Eq. 28}$$

In Eq. 28, the output signals from the photodiodes 21a - 22c are expressed using the same reference numbers assigned to the photodiodes.

The operation

$$22a + 22b + 22c \qquad \text{Eq. 29}$$

is performed by the adder 198. Eq. 29 represents the total amount of light received by the photodetector 22. This is proportional to the intensity of the light emitted by the semiconductor laser 11. The output of the adder 198 is reduced by an attenuator 199 using a suitable coefficient smaller than 1.

The output of the attenuator 199 is subtracted from the output of the subtractor 196 by a subtractor 197, whereby the final focusing error signal is obtained.

The output of the attenuator 199 is adjusted in advance so as to represent the offset produced by stray light. If it is assumed that the output signal of the subtractor 196 will follow the curve indicated by the dashed line in Fig. 90 owing to the influence of stray light, then subtracting the offset from this will provide the focusing error signal that is devoid of an offset, as indicated by the solid line. This focusing error signal is the output of the subtractor 197.

The output of the attenuator 199 is proportional to the intensity of the light emission from the semiconductor laser 11. Therefore, even if the intensity of the light emission from the semiconductor laser 11 fluctuates or changes, the offset is compensated for at all times so that a focusing error signal free of offset is obtained.

If the offset appears in the negative direction, the subtractor 197 need only be replaced by an adder.

Offset can be compensated for even more accurately by combining the 19th and 20th embodiments.

A 21st embodiment relates to a method and device for performing focusing forcibly in an optical pick-up apparatus for recording/playback of information on a optical recording medium.

In an optical pick-up apparatus, focusing control is required for adjusting the distance between the objective lens and the optical recording medium in such a manner that the projected light to be condensed will be focused correctly on the surface of the optical recording medium. Focusing control basically is executed based upon the focusing error signal. Since the dynamic range of the focusing error signal is comparatively narrow, it is required that the objective lens be moved forcibly in such a manner that the optical recording medium falls within this dynamic range prior to execution of focusing control based upon the focusing error signal. This operation is referred to as forcible focusing.

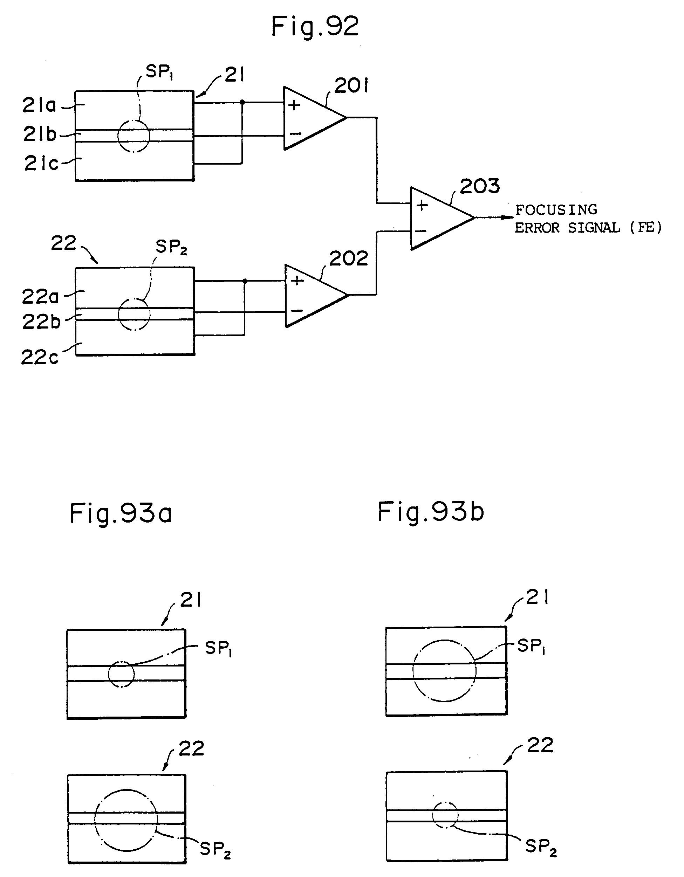

This will be described in greater detail with reference to Figs. 92 through 94.

Assume that the photodetectors 21, 22 are situated at positions in front of and in back of the focal points of the reflected light, which is to be condensed, when the light projected upon the photomagnetic disk has been correctly focused (for example, see the arrangement of Figs. 85 and 86).

In order to produce the focusing error signal, the double-beam size method, for example, is used. The electrical circuitry for this purpose is shown in Fig. 92. The arithmetic operation in accordance with Eq. 30 below is performed by subtractors 201, 202 and 203 to produce the focusing error signal. Here the output signals from the photodiodes are represented using the reference numerals assigned to these photodiodes. The arithmetic operation is as follows:

$$FE = (21a + 21c - 21b) - (22a + 22c - 22b) \qquad Eq. 30$$

The focusing error signal FE may be produced also in accordance with the following equation, with the central photodiode being excluded:

$$FE = (21a + 21c) - (22a + 22c) \qquad Eq. 31$$

When the objective lens 13 moves away from the photomagnetic disk 30, the beam spot $SP_1$ on the photodetector 21 becomes smaller and the beam spot $SP_2$ on the photodetector 22 becomes larger, as depicted in Fig. 93a. Conversely, when the objective lens 13 approaches the photomagnetic disk 30, the beam spot $SP_1$ on the photodetector 21 becomes larger and the beam spot $SP_2$ on the photodetector 22 becomes smaller, as depicted in Fig. 93b.

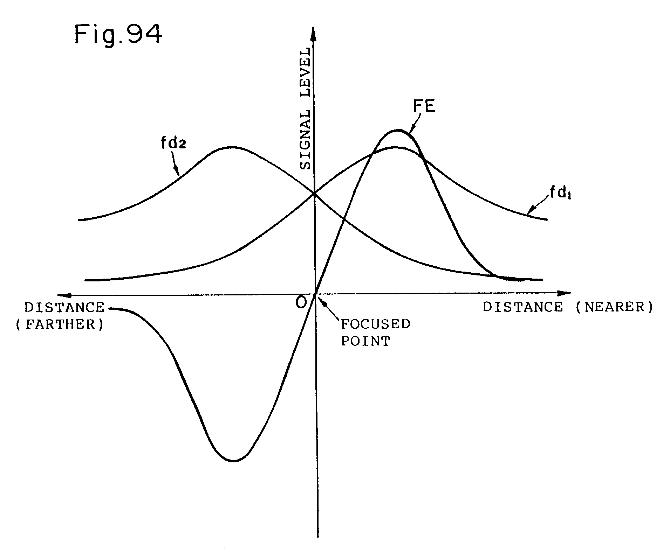

The focusing error signal FE represented by Eq. 30 or 31 describes a so-called S-curve if, as shown in Fig. 94, the distance between the objective lens and the photomagnetic disk is plotted along the horizontal axis and the signal level is plotted along the vertical axis. Focusing control based upon this focusing error signal (which control entails moving the objective lens in such a manner that the position thereof relative to the photomagnetic disk attains the point at which focusing is achieved) is possible solely between the minimum peak and maximum peak of the S-curve. Accordingly, if the objective lens draws too close to or moves too far away from the photomagnetic disk, it becomes necessary to carry out forcible (or "pull-in") focusing, in which the objective lens is forcibly moved to a position at which focusing control is possible, and a so-called "pull-in" signal is required in order to achieve this forcible focusing.

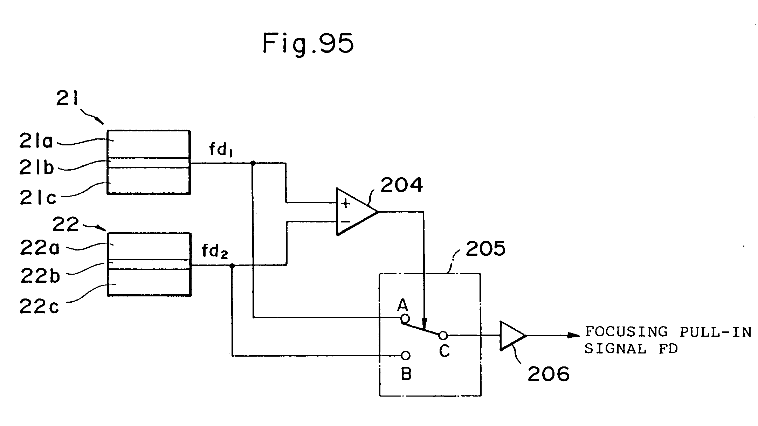

Fig. 95 illustrates a circuit for generating this focusing pull-in signal.

The levels of output signals $fd_1$, $fd_2$ from the centrally located photodiodes 21b, 22b of the respective photodiodes 21, 22 are compared by a comparator 204. These output signals $fd_1$, $fd_2$ also enter a changeover switching circuit 205. The changeover operation of the switching circuit 205 is controlled by the output of the comparator 204.

The output signals $fd_1$, $fd_2$ of the photodiodes 21b, 22b are drawn along with the focusing error signal FE in Fig. 94.

The levels of the two signals $fd_1$, $fd_2$ are compared by the comparator 204, and the circuit 205 is controlled in dependence upon the result of the comparison operation so as to select and output the signal having the lower level. For example, if the output of the comparator 204 is positive, then the changeover switching circuit 205 is connected to an input B so that the signal $fd_2$ is selected. If the output of the comparator 204 is negative, then the changeover switching circuit 205 is connected to an input A so that the signal $fd_1$ is selected. The output signal $fd_1$ or $fd_2$ of the switching circuit 205 is amplified by an amplifier 206, after which it is outputted as a focusing pull-in signal FD.

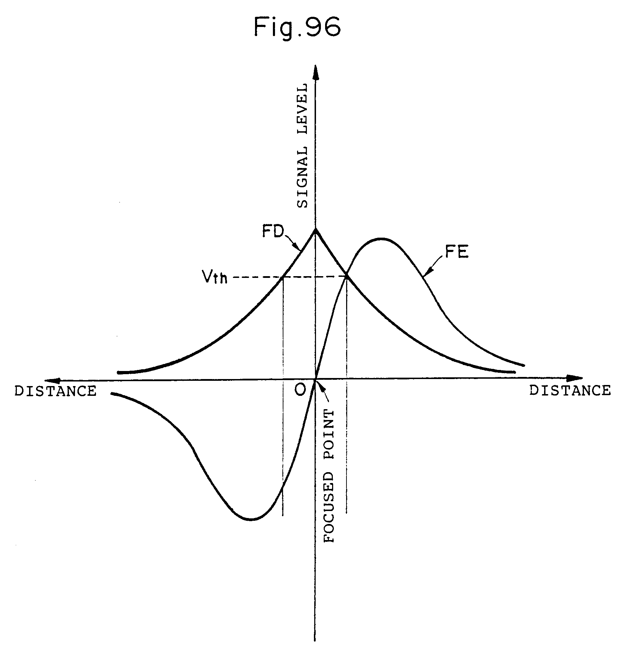

The focusing pull-in signal FD thus produced is illustrated along with the focusing error signal FE in Fig. 96. The focusing pull-in signal FD is such that the signal level gradually increases as the focused position is approached from both sides. This means that forcible focusing is possible in two directions. The distances at which the signal FD crosses a suitable threshold level Vth are points where a transition is made to focusing control using the focusing error signal FE.

The method and device for forcible focusing described above are applicable not only to the optical pick-up apparatus of the foregoing embodiment but also to all of the optical pick-up apparatus having two photodetectors each of which possesses a light-receiving surface partitioned into three sections.

A 22nd embodiment of the present invention relates to a photodetector for detecting tracking error, a device and method for detecting tracking error, a device and method for detecting focusing error, and an optical head for photomagnetic recording/playback. These are suited to an optical head, and to the structural components thereof, for recording/playback of a photomagnetic recording medium such as a photomagnetic disk or photomagnetic card having a guide track groove for tracking control.

A tracking error detecting device which utilizes the push-pull method, and which is provided in a recording/playback head applied to a photomagnetic disk having a guide track groove for tracking control, is available in the art.

The photodetector of this tracking error detecting device utilizing the push-pull method employs photodiodes divided into two or three sections. Of these, the photodiodes in three sections are suitable also for performing detection of focusing error.

In a tracking error detecting device which relies upon the push-pull method and uses the photodetector constituted by photodiodes in two or three sections, a problem which arises is that a DC offset appears in the tracking error signal owing to tilting of the photomagnetic disk in the radial direction and movement of the objective lens in the track direction for some unknown reason.

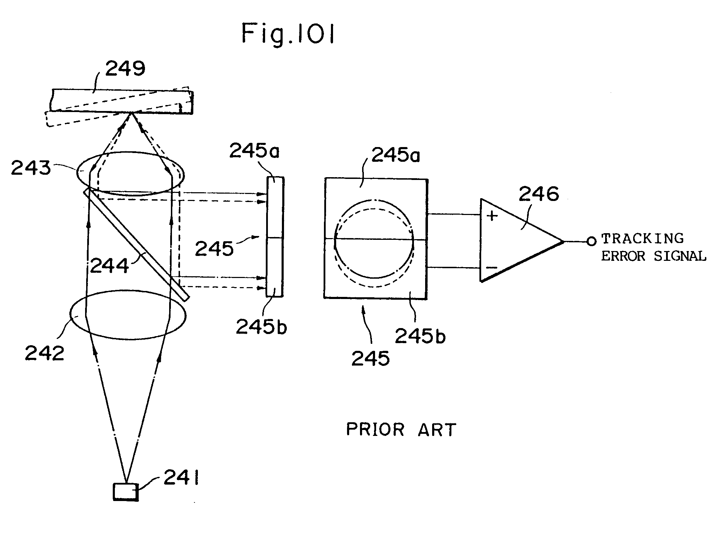

This problem will be described in greater detail with reference to Figs. 101 through 103b.

Fig. 101 illustrates only the optical system, which has been extracted from the optical head, for tracking error detection.

Divergent light emitted by a semiconductor laser 241 is collimated by a collimating lens 242, the collimated light is transmitted by a beam splitter 244, and the resulting light is condensed by an objective lens 243 so as to be focused upon a photomagnetic disk 249.

The reflected light from the photomagnetic disk 249 is collimated by the objective lens 243 and then deflected by the beam splitter 244 so as to impinge upon a photodetector 245. The photodetector 245 includes two photodiodes 245a and 245b partitioned in a direction perpendicular to the track direction of the photomagnetic disk 249. The difference between the output signals from the photodiodes 245a and 245b is calculated by a subtracting circuit 246 and is outputted as the tracking error signal.

When the projected light from the semiconductor laser 241 is being correctly tracked on the photomagnetic disk 249, the quantities of light received by the two photodiodes 245a, 245b are equal, as indicated by the circle in the form of the chain line. When the projected light shifts and strays off the track, a difference develops between the quantities of light received by the photodiodes 245a, 245b. This difference depends upon the amount of shift and represents tracking error.

When the photomagnetic disk 249 is tilted in the radial direction, as indicated by the dashed lines, a difference develops between the quantities of light received by the photodiodes 245a, 245b, as indicated by the circle in the form of the dashed line, even if tracking is being performed correctly. This difference represents the amount of offset.

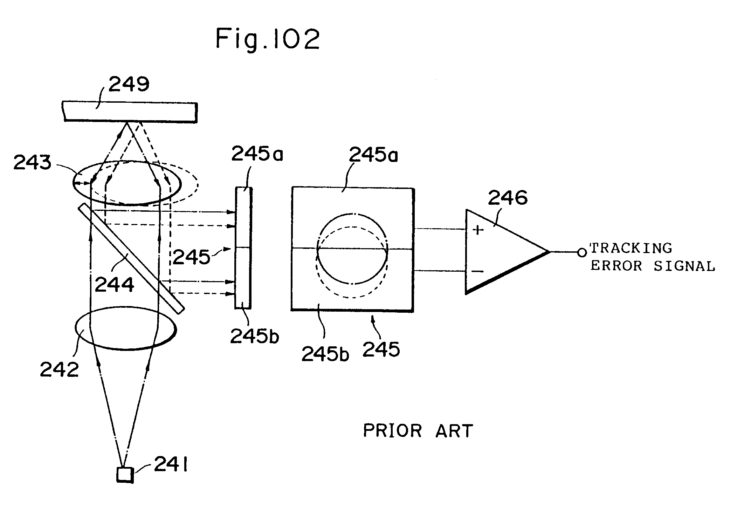

Fig. 102 also illustrates an optical system the same as that shown in Fig. 101. A difference similarly develops between the quantities of light received by the photodiodes 245a, 245b, and a tracking offset develops, also when the objective lens 243 moves in the track direction for some unknown reason.

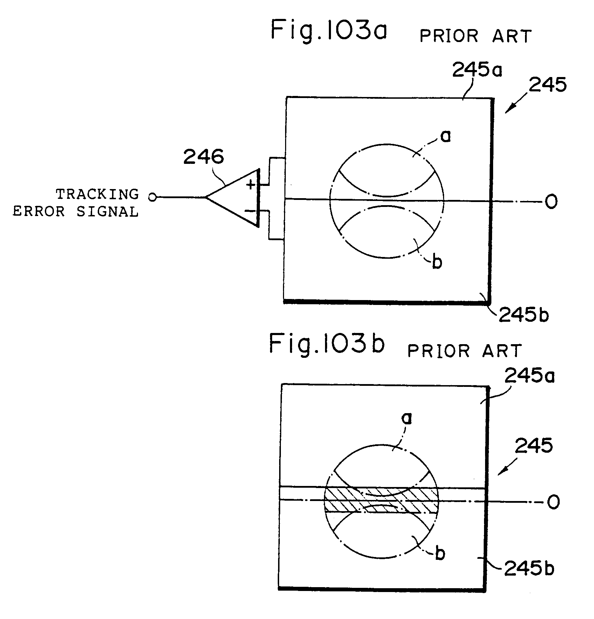

Figs. 103a and 103b illustrate images of reflected light imaged on the photodiodes 245a, 245b of the photodetector 245.

Fig. 103a illustrates a state in which tracking is being performed correctly and the center 0 of the reflected light is situated correctly on the boundary between the two photodiodes 245a, 245b. The image of the reflected light is circular, as indicated by the chain line. The circle contains areas a and b which appear bright owing to the superposition of diffracted light produced by track grooves on both sides of a track.

Fig. 103b illustrates a state in which the photomagnetic disk is tilted and the center 0 of the reflected light is offset from the boundary between the two photodiodes 245a, 245b as a result of, say, movement of the objective lens. Since the position of the spot of reflected light is offset toward the side of the photodiode 245b as a consequence of the foregoing, the quantity of light incident upon the photodiode 245b increases and that incident upon the photodiode 245a decreases. The quantity of light incident upon the area indicated by the hatched portion in Fig. 103b appears in the tracking error signal as an offset.

A 22nd embodiment of the invention seeks to reduce this offset caused when the tracking error signal is produced by the push-pull method.

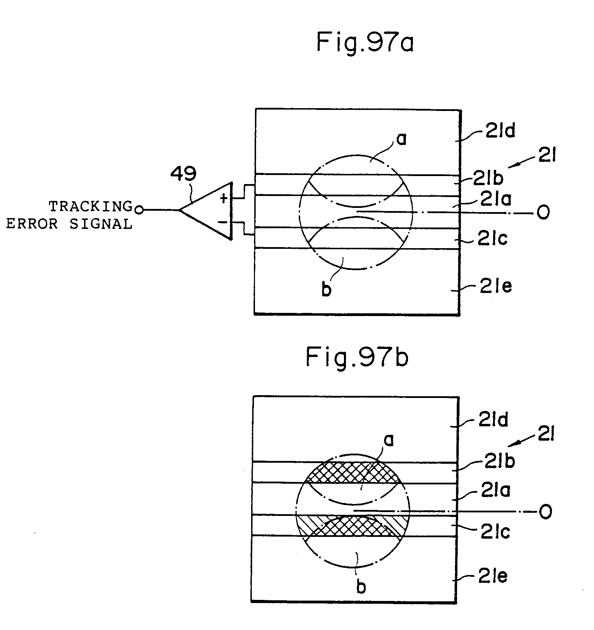

In Fig. 97a, the photodetector 21 is constituted by diodes in five sections. More specifically, the photodiode 21 is constituted by the centrally located photodiode 21a having a rectangular light-receiving surface, rectangular photodiodes 21b, 21d on one side, and rectangular photodiodes 21c, 21e on the other side. The widths of the photodiodes 21b, 21c situated on both sides of the central photodiode 21a are set to be equal. Further, the widths of the photodiodes 21d, 21e situated on the outermost sides also are set to be equal.

Here also reference numerals (21, 21a - 21e, etc.) the same as those in the foregoing embodiments are used as the reference numerals identifying the photodetector and the photodiodes constituting this photodetector. However, the numerals are not mutually related.

In the optical head for recording/playback of a photomagnetic disk, the photodetector 21 is arranged in such a manner that the direction in which the photodiodes are partitioned is perpendicular to the direction of the tracks on the photomagnetic disk.

The output signals from the photodiodes 21b and 21c situated on either side of the central photodiode 21a are applied to the subtractor 49, which calculates the difference between these output signals and outputs the difference as the tracking error signal.

In a case where the light projected from the optical head to the photomagnetic disk forms a spot on the center of a track on the photomagnetic disk, the light is reflected from the photomagnetic disk and impinges upon the photodetector 21 through the optical system of the optical head. This incident light forms a circular beam spot in such a manner that the center 0 of the light beam is situated at the center of the central photodiode 21a. When the light projected upon the photomagnetic disk from the optical head deviates from the track, the beam spot on the photodetector 21 also deviates correspondingly, and a tracking error signal whose signal level conforms to this amount of deviation is obtained.

The center 0 of the beam spot projected upon the photodetector 21 deviates from the center of the centrally located photodiode 21a, as shown in Fig. 97b, owing to tilting of the photomagnetic disk in the radial direction or movement of the objective lens of the optical head in the track direction. If the center of the beam spot shifts in the direction of the photodiodes 21c, 21e, the area (indicated by the hatched portion) of the photodiode 21c on which the light impinges increases and the area of the photodiode 21b on which the light impinges decreases. However, the bright portion (the cross-hatched portion) on the photodiode 21b, namely the portion which includes the diffracted light ascribable to the track groove of the photomagnetic disk, grows in size. Accordingly, the difference (which is the DC offset) between the output signals from the photodiodes 21b, 21c becomes smaller, and the amount of offset can be greatly reduced in comparison with the prior art. Though the amplitude of the tracking error signal also becomes smaller, no problems arise because the signal can be amplified using an AC amplifier circuit.

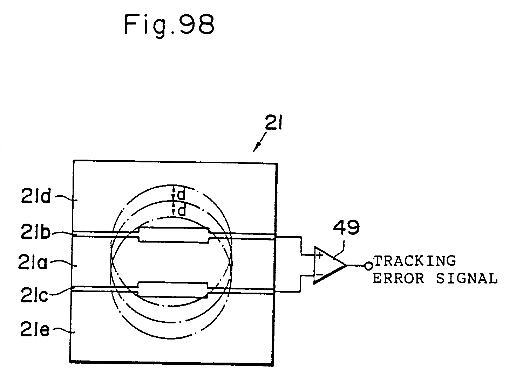

Fig. 98 illustrates a modification of the photodetector.

The shape of the light-receiving surfaces of the photodiodes 21b and 21c differ from those shown in Fig. 97a. Here only the middle portions are large in width, with both end portions being slender. The amount of offset becomes substantially zero for an amount of movement of the beam spot that is within a range of ±d up or down.

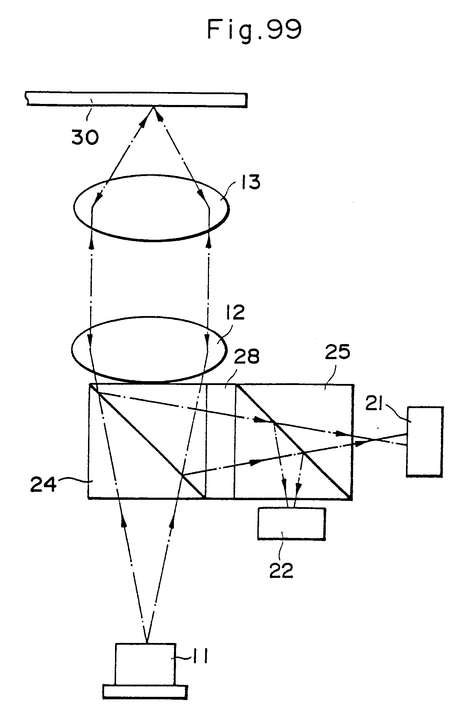

Fig. 99 illustrates an example of the construction of an optical head, which is for recording/playback of a photomagnetic disk, using the above-described photodetector. Here use is made of the photodetector 21 and a photodetector 22 having the same construction.

Linearly polarized divergent light is emitted by the semiconductor laser 11, the light is transmitted by a polarization beam splitter 24 (which transmits approximately 80% of the light), the transmitted light is collimated by the collimating lens 12, and the collimated light is condensed by the objective lens 13 so as to form a focal point on the photomagnetic disk 30.

If necessary, a beam-shaping optical system is provided for converting the light, which has an elliptical cross section, emitted by the semiconductor laser 11 into light having a circular cross section. Preferably, some of the emitted light from the semiconductor laser 11 should be received and fed back to the drive circuit of the semiconductor laser 11 to stabilize the intensity of light emission from the laser.

The linearly polarized light projected upon the photomagnetic disk 30 is reflected upon having its plane of polarization rotated in conformity with the information (the direction of magnetization) recorded on the photomagnetic disk 30. This is the Kerr effect.

This reflected light is collimated by the objective lens 13 and impinges upon the polarization beam splitter 24 while being condensed by the collimating lens 12. The polarization beam splitter 24 reflects all of the light whose direction of polarization differs by 90° from the direction of polarization of the light emitted from the semiconductor laser 11, and reflects some (20%, for example) of the light whose direction of polarization is the same as that of the light emitted from the semiconductor laser 11. As a result, the rotational angle of the plane of polarization developed by the reflected light owing to the information recorded on the photomagnetic disk 30 is amplified.

The light reflected by the polarization beam splitter 24 has its plane of polarization rotated by a suitable angle (42 - 43°) by a half-wave plate 28. That is, the emitted light from the half-wave plate 28 has its plane of polarization rotated by 45° with respect to light emitted by the semiconductor laser 11.

The emitted light from the half-wave plate 28 is incident upon a polarization beam splitter 24, by which the light is split into polarized light components whose directions of polarization differ from each other by 90°. One polarized light component is transmitted by the polarization beam splitter 25 so as to impinge upon the photodetector 21, and the other polarized light component is reflected by the polarization beam splitter 25 so as to impinge upon the photodetector 22.

In a case where the light projected upon the photomagnetic disk 30 is being correctly focused, the photodetector 21 is placed at a position remote from the focal point of the reflected light from the photomagnetic disk 30 condensed by the collimating lens 12, and the photodetector 22 is placed at a position near the focal point.

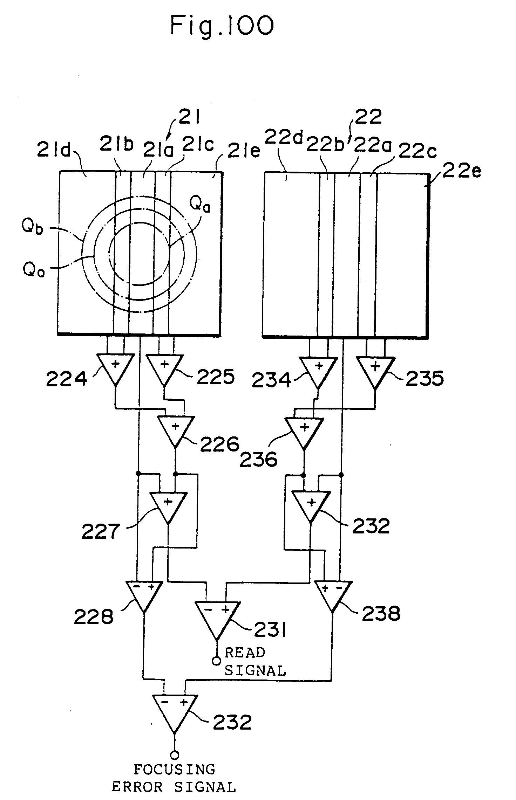

The construction of the photodetectors 21, 22 and the circuitry for processing their output signals are shown in Fig. 100.

Though not shown in Fig. 100, the tracking error signal is produced as the difference between the output signals from the photodiodes 21b, 21c of the photodetector 21 (or the difference between the output signals from the photodiodes 22b, 22c of the photodetector 22), as described above.

The focusing error signal is produced in accordance with the beam-size method. In Fig. 100, the beam spot produced on the light-receiving surface of the photodetector 21 at focusing is indicated at $Q_0$. If the light projected upon the photomagnetic disk is not correctly focused on the surface of the disk and deviation of the focal point occurs, then, depending upon the direction in which the focal point is shifted, the light reflected from the disk forms a beam spot smaller or larger than the spot $Q_0$, as indicated by reference characters $Q_a$ or $Q_b$, on the light-receiving surface of the photodetector 21. Though not shown in the drawing, a beam spot whose size depends upon the direction of focal-point shift when focusing is not achieved is formed also upon the light-receiving surface of the photodetector 22 in the same manner. According to the beam-size method, the absence or presence of focal-point shift and the direction of the shift are determined by comparing the sizes of the beam spots formed on the two photodetectors 21 and 22.

The sum of the output signals from all of the photodiodes 21b - 21e with the exception of the central photodiode 21a of photodetector 21 is calculated by adding circuits 224, 225, 226. The difference between the signal indicative of the sum and the output signal from the photodiode 21a is calculated by a subtracting circuit 228. The output signal of the subtracting circuit 228 represents the size of the beam spot formed on the photodetector 21.

Similarly, the difference between the output signal from the central photodiode 22a of photodetector 22 and the sum of the output signals from all of the other photodiodes 22b - 22e is calculated by adding circuits 234 - 236 and a subtracting circuit 238. The output signal of the subtracting circuit 238 represents the size of the beam spot formed on the photodetector 22.

The difference between the output signals from these subtracting circuits 228, 238 is calculated by a subtracting circuit 232 and is outputted as the focusing error signal.

The sum of the output signals from all of the photodiodes 21a - 21e of photodetector 21 is calculated by adding circuits 224 - 227. The sum of the output signals from all of the photodiodes 22a - 22e of photodetector 22 is calculated by adding circuits 234 - 237. The difference between these signals indicative of the calculated sums is calculated by a subtracting circuit 231, and the difference serves as a read signal of the information recorded on the photomagnetic disk 30.

Thus, in accordance with this embodiment, DC offset is reduced.

Furthermore, Since the photodetector for detecting tracking error can be used also to detect focusing error by the beam-size method, the optical head can be reduced in size and weight.

It goes without saying that this embodiment is applicable also to the optical pick-up apparatus having the optical system shown in Figs. 1 - 6, etc.

As many apparently widely different embodiments of the present invention can be made without departing from the spirit and scope thereof, it is to be understood that the invention is not limited to the specific embodiments thereof except as defined in the appended claims.

## Claims

1. An optical pick-up device having a light-emitting element and a condensing optical system for condensing divergent light, which is emitted by the light-emitting element, on an optical recording

EP 0 492 515 A2

medium and condensing reflected light from the optical recording medium, comprising:

at least two transparent plates, which are disposed on an optical path of the divergent light between said light-emitting element and said condensing optical system at an inclination with respect to an optic axis of said condensing optical system, for transmitting some and reflecting some of the light incident thereon; and

at least two photodetectors for receiving light that has been transmitted or reflected by said transparent plates, the received light being part of the light that has been reflected by said optical recording medium and condensed by said condensing optical system.

2. The device according to claim 1, further comprising means for producing a tracking error signal and a focusing error signal using output signals from said photodetectors.

3. The device according to claim 1, further comprising means for producing a read signal using output signals from said photodetectors.

4. The device according to claim 1, further comprising a photodetector for receiving the light that has been emitted by said light-emitting element and reflected by said transparent plate and outputting a signal for controlling intensity of the emitted light from said light-emitting element.

5. The device according to claim 1, wherein analyzers are disposed between said photodetectors and corresponding ones of said transparent plates.

6. The device according to claim 1, wherein said photodetector comprise a case, a light-receiving element arranged within said case, and an analyzer covering an upper surface of said case.

7. The device according to claim 1, wherein at least one surface of said transparent plate is provided with a coating for adjusting reflectivity.

8. The device according to claim 1, wherein each of said photodetectors includes light-receiving elements partitioned into at least two sections by a straight line and is so arranged that a spot produced by reflected light from a top surface and a spot produced by reflected light from a bottom surface of a corresponding one of said transparent plates will line up along the straight line partitioning said light-receiving elements.

9. The device according to claim 8, wherein said photodetector includes light-receiving elements partitioned into three sections, and a tracking error signal, a focusing error signal and a read signal are produced based upon output signals from these light-receiving elements.

10. The device according to claim 1, wherein the device is used in a drive unit of an optical disk or photomagnetic disk.

11. The device according to claim 1, wherein the device is used in a drive unit of an optical card or photomagnetic card.

12. The device according to claim 1, comprising:

a stationary portion constituted by said light-emitting element, said photodetectors, said transparent plates and a collimating lens contained in said condensing optical system; and

a moving portion, which includes an objective lens contained in said condensing optical system, driven by an actuator to perform track access, tracking control and focusing control.

13. An optical pick-up device having a light-emitting element and a condensing optical system for condensing divergent light, which is emitted by the light-emitting element, on a photomagnetic recording medium and condensing reflected light from the photomagnetic recording medium, comprising:

one set of at least two transparent plates, which are disposed on an optical path of the divergent light between said light-emitting element and said condensing optical system at an inclination with respect to an optic axis of said condensing optical system, for transmitting some and reflecting some of the light incident thereon; and

57

at least two photodetectors for receiving light that has been reflected by respective ones of said transparent plates, the received light being part of the light that has been reflected by said photomagnetic recording medium and condensed by said condensing optical system;

wherein the transparent plates of said one set are inclined in a such a direction that line segments, which are produced by intersection between a plane perpendicular to the optic axis and said transparent plates, will be substantially perpendicular to each other.

14. The device according to claim 13, wherein said transparent plates are arranged at such an angle that an angle of incidence of reflected light from the photomagnetic recording medium will be equal to the Brewster angle.

15. The device according to claim 13, wherein said light-emitting element is accommodated within a package having a window in a front face thereof, a second transparent plate inclined with respect to the optic axis of said light-emitting element is provided so as to cover said window, and said package is arranged in such a manner that said second transparent plate will reduce aberration produced by at least one of the two transparent plates of said one set.

16. The device according to claim 13, further comprising a holder for holding said light-emitting element and lenses contained in said condensing optical system, wherein said light-emitting element and said lenses are held at positions where optic axes thereof are offset by an amount corresponding to an offset of the optic axes caused by refraction of light in the two transparent plates of said one said.

17. An optical pick-up device having a light-emitting element and a condensing optical system for condensing divergent light, which is emitted by the light-emitting element, on an photomagnetic recording medium and condensing reflected light from the photomagnetic recording medium, comprising:

one set of at least two transparent plates, which are disposed on an optical path of the divergent light between said light-emitting element and said condensing optical system at an inclination with respect to an optic axis of said condensing optical system, for transmitting some and reflecting some of the light incident thereon; and

a photodetector for receiving light that has been reflected by one of said transparent plates, and a photodetector for receiving light that has been transmitted by the other of said transparent plates, the received light being part of the light that has been reflected by said photomagnetic recording medium and condensed by said condensing optical system;

wherein the transparent plates of said one set are inclined in a such a direction that line segments, which are produced by intersection between a plane perpendicular to the optic axis and said transparent plates, will be substantially parallel to each other.

18. The device according to claim 1, wherein each of said photodetectors includes light-receiving elements partitioned into at least three sections by straight lines and is so arranged that a spot produced by reflected light from a top surface and a spot produced by reflected light from a bottom surface of a corresponding one of said transparent plates will line up along the straight lines partitioning said light-receiving elements; and

said transparent plate has a thickness set in a range such that the spot produced by reflected light from the top surface thereof and the spot produced by reflected light from the bottom surface thereof do not overlap on the light-receiving surfaces of the light-receiving elements and the diameter of the smaller of the two spots produced by the reflected light is larger than the width of a centrally located one of said light-receiving elements.

19. The device according to claim 13, wherein each of said photodetectors includes light-receiving elements partitioned into at least three sections by straight lines and is so arranged that a spot produced by reflected light from a top surface and a spot produced by reflected light from a bottom surface of a corresponding one of said transparent plates will line up along the straight lines partitioning said light-receiving elements; and

said transparent plate has a thickness set in a range such that the spot produced by reflected light from the top surface thereof and the spot produced by reflected light from the bottom surface thereof do not overlap on the light-receiving surfaces of the light-receiving elements and the diameter of the smaller of the two spots produced by the reflected light is larger than the width of a centrally located one of said light-receiving elements.

20. The device according to claim 28, wherein each of said photodetectors includes light-receiving elements partitioned into at least three sections by straight lines and is so arranged that a spot produced by reflected light from a top surface and a spot produced by reflected light from a bottom surface of a corresponding one of said transparent plates will line up along the straight lines partitioning said light-receiving elements; and

said transparent plate has a thickness set in a range such that the spot produced by reflected light from the top surface thereof and the spot produced by reflected light from the bottom surface thereof do not overlap on the light-receiving surfaces of the light-receiving elements and the diameter of the smaller of the two spots produced by the reflected light is larger than the width of a centrally located one of said light-receiving elements.

21. A photodetecting optical system comprising:

a transparent plate disposed on an optical path of convergent light at an inclination with respect to an optic axis of the optical path; and

a photodetector for receiving reflected light from said transparent plate;

wherein said photodetector includes light-receiving elements partitioned into at least three sections by straight lines and is so arranged that a spot produced by reflected light from a top surface and a spot produced by reflected light from a bottom surface of said transparent plate will line up along the straight lines partitioning said light-receiving elements; and

said transparent plate has a thickness set in a range such that the spot produced by reflected light from the top surface thereof and the spot produced by reflected light from the bottom surface thereof do not overlap on the light-receiving surfaces of the light-receiving elements and the diameter of the smaller of the two spots produced by the reflected light is larger than the width of a centrally located one of said light-receiving elements.

22. The device according to claim 13, further comprising two analyzers disposed between respective ones of said transparent plates and the photodetectors corresponding thereto for transmitting beams of light having directions of polarization which are mutually perpendicular and each of which forms an angle of 45° with a direction of polarization of the light projected upon said photomagnetic recording medium;

wherein said transparent plates are provided with coatings having reflectivities and transmittances decided for respective ones of the two perpendicular directions of polarization in such a manner that an angle of rotation of a plane of polarization of light, which has been reflected or transmitted by the respective transparent plate to impinge upon the respective photodetector, with respect to the light projected upon the photomagnetic recording medium becomes larger than an angle of rotation of a plane of polarization of light reflected from the photomagnetic recording medium, that intensities of the two beams of light which impinge upon the respective photodetectors are rendered substantially equal, and that angles of rotation of the planes of polarization of these two light beams are rendered substantially equal.

23. The device according to claim 28, further comprising two analyzers disposed between respective ones of said transparent plates and the photodetectors corresponding thereto for transmitting beams of light having directions of polarization which are mutually perpendicular and each of which forms an angle of 45° with a direction of polarization of the light projected upon said photomagnetic recording medium;

wherein said transparent plates are provided with coatings having reflectivities and transmittances decided for respective ones of the two perpendicular directions of polarization in such a manner that an angle of rotation of a plane of polarization of light, which has been reflected or transmitted by the respective transparent plate to impinge upon the respective photodetector, with respect to the light projected upon the photomagnetic recording medium becomes larger than an angle of rotation of a plane of polarization of light reflected from the photomagnetic recording medium, that intensities of the two beams or light which impinge upon the respective photodetectors are rendered substantially equal, and that angles of rotation of the planes of polarization of these two light beams are rendered substantially equal.

24. An optical pick-up device having a light-emitting element and a condensing optical system for condensing divergent light, which is emitted by the light-emitting element, on a photomagnetic recording medium and condensing reflected light from the photomagnetic recording medium, compris-

EP 0 492 515 A2

ing:

one set of at least two transparent plates disposed on an optical path of the divergent light between said light-emitting element and said condensing optical system at an inclination with respect to an optic axis of said condensing optical system;

at least two photodetectors for receiving light that has been reflected or transmitted by respective ones of said transparent plates, the received light being part of the light that has been reflected by said photomagnetic recording medium and condensed by said condensing optical system; and

two analyzers disposed between respective ones of said transparent plates and the photodetectors corresponding thereto for transmitting beams of light having directions of polarization which are mutually perpendicular and each of which forms an angle of 45° with a direction of polarization of the light projected upon said photomagnetic recording medium;

wherein said transparent plates are provided with coatings having reflectivities and transmittances decided for respective ones of the two perpendicular directions of polarization in such a manner that an angle of rotation of a plane of polarization of light, which has been reflected or transmitted by the respective transparent plate to impinge upon the respective photodetector, with respect to the light projected upon the photomagnetic recording medium becomes larger than an angle of rotation of a plane of polarization of light reflected from the photomagnetic recording medium, that intensities of the two beams of light which impinge upon the respective photodetectors are rendered substantially equal, and that angles of rotation of the planes of polarization of these two light beams are rendered substantially equal.

25. An optical pick-up device having a light-emitting element and a condensing optical system for condensing divergent light, which is emitted by the light-emitting element, on an optical recording medium and condensing reflected light from the optical recording medium, comprising:

at least one transparent plate disposed on an optical path of the divergent light between said light-emitting element and said condensing optical system at an inclination with respect to an optic axis of said condensing optical system; and

photodetecting means having at least two light-receiving surfaces for separately receiving respective beams of light that have been been reflected by top and bottom surfaces, respectively, of said transparent plate, the received light being part of the light that has been reflected by said optical recording medium and condensed by said condensing optical system.

26. The device according to claim 55, wherein the top surface of said transparent plate is provided with a coating which, of two light components having perpendicular directions of polarization, transmits the entirety of a light component having one of the directions of polarization and reflects part of the light component having the other of the directions of polarization, and there is provided an analyzer, which is for transmitting the light component having said one of the directions of polarization, to correspond to at least the light-receiving surface, of the light-receiving surfaces of said photodetecting means, which receives the reflected light from the bottom surface of said transparent plate.

27. The device according to claim 55, wherein the two light-receiving surfaces of said photodetecting means are disposed so as to be situated respectively in front and in back of focal points of reflected light from the top and bottom surfaces of said transparent plate.

28. The device according to claim 55, wherein the two light-receiving surfaces of said photodetecting means are both disposed so as to be situated in front of or in back of focal points of reflected light from the top and bottom surfaces of said transparent plate.

29. The device according to claim 55, wherein the two-light receiving surfaces of said photodetecting means are each partitioned into three sections.

30. The device according to claim 55, wherein said transparent plate is affixed to one surface of a prism which shapes the emitted light from said light-emitting element.

31. The device according to claim 55, wherein the top and bottom surfaces of said transparent plate are provided with coatings having reflectivities and transmittances decided for respective ones of two perpendicular directions of polarization in such a manner that angles of rotation of planes of polarization of light, which has been reflected by the top and bottom surfaces of said transparent plate to impinge

60

upon respective ones of the two light-receiving surfaces of said photodetecting means, with respect to the light projected upon the optical recording medium become larger than an angle of rotation of a plane of polarization of light reflected from the optical recording medium, that intensities of the two beams of light which impinge upon the respective ones of the light-receiving surfaces are rendered substantially equal, and that angles of rotation of the planes of polarization of these two light beams are rendered substantially equal; and

analyzers are disposed in front of the two light-receiving surfaces of said light-receiving means for transmitting beams of light having directions of polarization which are mutually perpendicular and each of which forms an angle of 45° with a direction of polarization of the light projected upon said optical recording medium.

32. An optical pick-up device having a light-emitting element and a condensing optical system for condensing divergent light, which is emitted by the light-emitting element, on an optical recording medium and condensing reflected light from the optical recording medium, comprising:

at least one transparent plate disposed on an optical path of the divergent light between said light-emitting element and said condensing optical system at an inclination with respect to an optic axis of said condensing optical system;

photodetecting means having at least two light-receiving surfaces for separately receiving respective beams of light that have been been reflected by top and bottom surfaces, respectively, of said transparent plate, the received light being part of the light that has been reflected by said optical recording medium and condensed by said condensing optical system; and

two analyzers disposed between respective ones of the light-receiving surfaces of said photodetecting means and respective ones of the top and bottom surfaces of said transparent plate for transmitting beams of light having directions of polarization which are mutually perpendicular and each of which forms an angle of 45° with a direction of polarization of the light projected upon said optical recording medium;

wherein the top and bottom surfaces of said transparent plate are provided with coatings having reflectivities and transmittances decided for respective ones of two perpendicular directions of polarization in such a manner that angles of rotation of planes of polarization of light, which has been reflected by the top and bottom surfaces of said transparent plate to impinge upon respective ones of the two light-receiving surfaces of said photodetecting means, with respect to the light projected upon the optical recording medium become larger than an angle of rotation of a plane of polarization of light reflected from the optical recording medium, that intensities of the two beams of light which impinge upon the respective ones of the light-receiving surfaces are rendered substantially equal, and that angles of rotation of the planes of polarization of these two light beams are rendered substantially equal.

33. The device according to claim 55, wherein said light-emitting element is accommodated within a package having a window in a front face thereof, a second transparent plate inclined with respect to the optic axis of said light-emitting element is provided so as to cover said window, and said package is arranged in such a manner that said second transparent plate will reduce aberration produced by the first-mentioned transparent plate.

34. In an optical pick-up device having a light-emitting element and a condensing optical system for condensing divergent light, which is emitted by the light-emitting element, on an optical recording medium and condensing reflected light from the optical recording medium, a unit for amplifying an angle of rotation of polarized light comprising:

at least one transparent plate disposed on an optical path of the divergent light between said light-emitting element and said condensing optical system at an inclination with respect to an optic axis of said condensing optical system;

one surface of said transparent plate, which is either a top surface or a bottom surface, being provided with a coating having reflectivity and transmittance decided for respective ones of two perpendicular directions of polarization in such a manner that an angle of rotation of a plane of polarization of light, which has been reflected by said one surface of said transparent plate, with respect to the light projected upon the optical recording medium becomes larger than an angle of rotation of a plane of polarization of light reflected from the optical recording medium.

35. The unit according to claim 69, further comprising:

two analyzers disposed for transmitting beams of light having directions of polarization which are mutually perpendicular and each of which forms an angle of 45° with a direction of polarization of the light projected upon said optical recording medium; and

two photodetectors for receiving the light transmitted by respective ones of said analyzers;

the reflected light from said transparent plate being split into two beams and then introduced to said photodetectors through respective ones of said analyzers.

36. The device according to claim 1, wherein at least one of said photodetectors has first and second mutually independent light-receiving areas for receiving light reflected by respective ones of top and bottom surfaces of a corresponding one of said transparent plates;

said first light-receiving area is partitioned into at least three mutually independent comparatively small zones by partitioning lines extending in a direction perpendicular to tracks of said optical recording medium; and

said second light-receiving area is partitioned into at least two mutually independent comparatively small zones by partitioning lines extending in the direction of the tracks of said optical recording medium.

37. The device according to claim 13, wherein at least one of said photodetectors has first and second mutually independent light-receiving areas for receiving light reflected by respective ones of top and bottom surfaces of a corresponding one of said transparent plates;

said first light-receiving area is partitioned into at least three mutually independent comparatively small zones by partitioning lines extending in a direction perpendicular to tracks of said photomagnetic recording medium; and

said second light-receiving area is partitioned into at least two mutually independent comparatively small zones by partitioning lines extending in the direction of the tracks of said photomagnetic recording medium.

38. The device according to claim 28, wherein at least one of said photodetectors has first and second mutually independent light-receiving areas for receiving light reflected by respective ones of top and bottom surfaces of a corresponding one of said transparent plates;

said first light-receiving area is partitioned into at least three mutually independent comparatively small zones by partitioning lines extending in a direction perpendicular to tracks of said photomagnetic recording medium; and

said second light-receiving area is partitioned into at least two mutually independent comparatively small zones by partitioning lines extending in the direction of the tracks of said photomagnetic recording medium.

39. An optical pick-up device having a light-emitting element and a condensing optical system for condensing divergent light, which is emitted by the light-emitting element, on an optical recording medium and condensing reflected light from the optical recording medium, comprising:

a transparent plate disposed on an optical path of the divergent light between said light-emitting element and said condensing optical system at an inclination with respect to an optic axis of said condensing optical system; and

photodetecting means for receiving light that has been been reflected by top and bottom surfaces of said transparent plate, the received light being part of the light that has been reflected by said optical recording medium and condensed by said condensing optical system;

said photodetecting means having first and second mutually independent light-receiving areas for receiving light reflected by respective ones of the top and bottom surfaces of said transparent plate;

said first light-receiving area is partitioned into at least three mutually independent comparatively small zones by partitioning lines extending in a direction perpendicular to tracks of said optical recording medium; and

said second light-receiving area is partitioned into at least two mutually independent comparatively small zones by partitioning lines extending in the direction of the tracks of said optical recording medium.

40. The device according to claim 74, further comprising means for producing a focusing error signal based upon light-reception signals obtained from said at least three comparatively small zones in said first light-receiving area.

**41.** The device according to claim 74, further comprising means for producing a tracking error signal based upon light-reception signals obtained from said at least two comparatively small zones in said second light-receiving area.

**42.** The device according to claim 1, wherein at least one of said photodetectors has at least six mutually independent comparatively small zones partitioned by at least two partitioning lines extending in a direction perpendicular to tracks of the optical recording medium and at least one partitioning line extending in the direction of the tracks.

**43.** The device according to claim 13, wherein at least one of said photodetectors has at least six mutually independent comparatively small zones partitioned by at least two partitioning lines extending in a direction perpendicular to tracks of the photomagnetic recording medium and at least one partitioning line extending in the direction of the tracks.

**44.** The device according to claim 28, wherein at least one of said photodetectors has at least six mutually independent comparatively small zones partitioned by at least two partitioning lines extending in a direction perpendicular to tracks of the photomagnetic recording medium and at least one partitioning line extending in the direction of the tracks.

**45.** An optical pick-up device having a light-emitting element and a condensing optical system for condensing divergent light, which is emitted by the light-emitting element, on an optical recording medium and condensing reflected light from the optical recording medium, comprising:

a transparent plate disposed on an optical path of the divergent light between said light-emitting element and said condensing optical system at an inclination with respect to an optic axis of said condensing optical system; and

photodetecting means for receiving light that has been been reflected or transmitted by said transparent plate, the received light being part of the light that has been reflected by said optical recording medium and condensed by said condensing optical system;

said photodetecting means having at least six mutually independent comparatively small zones partitioned by at least two partitioning lines extending in a direction perpendicular to tracks of the optical recording medium and at least one partitioning line extending in the direction of the tracks.

**46.** The device according to claim 90, further comprising means for producing a focusing error signal based upon a light-reception signal obtained for each group of the comparatively small zones partitioned by the at least two partitioning lines extending in the direction perpendicular to the tracks of the optical recording medium.

**47.** The device according to claim 90, further comprising means for producing a tracking error signal based upon a light-reception signal obtained for each group of the comparatively small zones partitioned by the at least one partitioning line extending in the direction parallel to the tracks of the optical recording medium.

**48.** The device according to claim 1, wherein at least one of said photodetectors has two mutually independent light-receiving areas for receiving light reflected by respective ones of top and bottom surfaces of a corresponding one of said transparent plates; and

each light-receiving area is partitioned into at least six mutually independent comparatively small zones by at least two partitioning lines extending in a direction perpendicular to tracks of said optical recording medium and at least one partitioning line extending in the direction of the tracks.

**49.** The device according to claim 13, wherein at least one of said photodetectors has two mutually independent light-receiving areas for receiving light reflected by respective ones of top and bottom surfaces of a corresponding one of said transparent plates; and

each light-receiving area is partitioned into at least six mutually independent comparatively small zones by at least two partitioning lines extending in a direction perpendicular to tracks of said photomagnetic recording medium and at least one partitioning line extending in the direction of the tracks.

**50.** The device according to claim 28, wherein at least one of said photodetectors has two mutually independent light-receiving areas for receiving light reflected by respective ones of top and bottom surfaces of a corresponding one of said transparent plates; and

each light-receiving area is partitioned into at least sax mutually independent comparatively small zones by at least two partitioning lines extending in a direction perpendicular to tracks of said photomagnetic recording medium and at least one partitioning line extending in the direction of the tracks.

51. An optical pick-up device having a light-emitting element and a condensing optical system for condensing divergent light, which is emitted by the light-emitting element, on an optical recording medium and condensing reflected light from the optical recording medium, comprising:

a transparent plate disposed on an optical path of the divergent light between said light-emitting element and said condensing optical system at an inclination with respect to an optic axis of said condensing optical system; and

photodetecting means for receiving light that has been been reflected by top and bottom surfaces of said transparent plate, the received light being part of the light that has been reflected by said optical recording medium and condensed by said condensing optical system;

said photodetecting means having two mutually independent light-receiving areas for receiving light reflected by respective ones of the top and bottom surfaces of said transparent plate;

each light-receiving area being partitioned into at least six mutually independent comparatively small zones by at least two partitioning lines extending in a direction perpendicular to tracks of said optical recording medium and at least one partitioning line extending in the direction of the tracks.

52. The device according to claim 106, further comprising means for producing a focusing error signal based upon a light-reception signal obtained for each group of the comparatively small zones partitioned by the at least two partitioning lines extending in the direction perpendicular to the tracks of the optical recording medium.

53. The device according to claim 106, further comprising means for producing a tracking error signal based upon a light-reception signal obtained for each group of the comparatively small zones partitioned by the at least one partitioning line extending in the direction parallel to the tracks of the optical recording medium.

54. The device according to claim 74, wherein said light-emitting element is accommodated within a package having a window in a front face thereof, a second transparent plate inclined with respect to the optic axis of said light-emitting element is provided so as to cover said window, and said package is arranged in such a manner that said second transparent plate will reduce aberration produced by the first-mentioned transparent plate.

55. The device according to claim 90, wherein said light-emitting element is accommodated within a package having a window in a front face thereof, a second transparent plate inclined with respect to the optic axis of said light-emitting element is provided so as to cover said window, and said package is arranged in such a manner that said second transparent plate will reduce aberration produced by the first-mentioned transparent plate.

56. The device according to claim 106, wherein said light-emitting element is accommodated within a package having a window in a front face thereof, a second transparent plate inclined with respect to the optic axis of said light-emitting element is provided so as to cover said window, and said package is arranged in such a manner that said second transparent plate will reduce aberration produced by the first-mentioned transparent plate.

57. An optical device comprising:

a light-emitting element for emitting divergent light with angles of spread that differ in two directions perpendicular to an optic axis;

an optical system for collimating or condensing the divergent light emitted by said light-emitting element; and

a transparent plate disposed on an optical path of the divergent light between said light-emitting element and said optical system at an inclination with respect to the optic axis of said optical system;

64

said transparent plate having a transmittance distribution for controlling the intensity of transmitted light in such a manner that an intensity distribution in a cross section of the light collimated or condensed by said optical system is substantially uniform on concentric circles having the optic axis at the center thereof.

58. The device according to claim 137, wherein said transparent plate has a transmittance distribution for controlling the intensity of transmitted light in such a manner that an intensity distribution in a cross section of the light collimated or condensed by said optical system is smaller at a central portion of the cross section, which includes the optic axis, than at the periphery thereof.

59. The device according to claim 137, wherein said optical system includes a lens, and said transmittance distribution is formed on said lens instead of on said transparent plate.

60. An optical device comprising:
   a light-emitting element for emitting divergent light;
   an optical system for collimating or condensing the divergent light emitted by said light-emitting element;
   and
   a transparent plate disposed on an optical path of the divergent light between said light-emitting element and said optical system at an inclination with respect to the optic axis of said optical system;
   said transparent plate having a transmittance distribution for controlling the intensity of transmitted light in such a manner that an intensity distribution in a cross section of the light collimated or condensed by said optical system is smaller at a central portion of the cross section, which includes the optic axis, than at the periphery thereof.

61. The device according to claim 140, wherein said optical system includes a lens, and said transmittance distribution is formed on said lens instead of on said transparent plate.

62. An optical pick-up device comprising:
   a light-emitting element;
   a condensing optical system for condensing divergent light, which is emitted by the light-emitting element, on a photomagnetic recording medium and condensing reflected light from the photomagnetic recording medium;
   a transparent plate, which is disposed on an optical path of the divergent light between said light-emitting element and said condensing optical system at an inclination with respect to an optic axis of said condensing optical system;
   photodetecting means for receiving light that has been been reflected by said transparent plate, the received light being part of the light that has been reflected by said photomagnetic recording medium and condensed by said condensing optical system; and
   a half-wave plate or polarizing plate disposed between said light-emitting element and said transparent plate.

63. An optical pick-up device having a light-emitting element and a condensing optical system for condensing divergent light, which is emitted by the light-emitting element, on a photomagnetic recording medium and condensing reflected light from the photomagnetic recording medium, comprising:
   one set of at least two transparent plates, which are disposed on an optical path of the divergent light between said light-emitting element and said condensing optical system at an inclination with respect to an optic axis of said condensing optical system, for transmitting some and reflecting some of the light incident thereon;
   at least two photodetectors for receiving light that has been reflected or transmitted by respective ones of said transparent plates, the received light being part of the light that has been reflected by said photomagnetic recording medium and condensed by said condensing optical system; and
   a half-wave plate disposed between said two transparent plates.

64. An optical pick-up device comprising:
   a light-emitting element;
   a condensing optical system for condensing divergent light, which is emitted by the light-emitting element, on a photomagnetic recording medium and condensing reflected light from the photomagnetic recording medium;

a transparent plate, which is disposed on an optical path of the divergent light between said light-emitting element and said condensing optical system at an inclination with respect to an optic axis of said condensing optical system;

photodetecting means for receiving light that has been been reflected by said transparent plate, the received light being part of the light that has been reflected by said photomagnetic recording medium and condensed by said condensing optical system; and

a half-wave plate disposed in said condensing optical system.

65. The device according to claim 156, wherein the direction of polarization of light projected upon said photomagnetic recording medium is adjusted by said half-wave plate so as to become parallel or perpendicular to a track direction of the photomagnetic recording medium.

66. An optical pick-up device comprising:

a light source for emitting linearly polarized projected light;

an optical system for condensing the projected light from said light source on a photomagnetic recording medium, and condensing and guiding reflected light from the photomagnetic recording medium; and

light-receiving means for receiving some of the reflected light from the photomagnetic recording medium guided by said optical system and outputting a light-reception signal for producing at least a focusing error signal and a tracking error signal;

the direction of polarization of the projected light emitted by said light source and condensed by said optical system being inclined at an angle of 45° with respect to a track direction of the photomagnetic recording medium;

wherein the optical pick-up device is arranged at an inclination of 45° with respect to a radial direction of the photomagnetic recording medium.

67. The device according to claim 164, wherein the optical pick-up device is moved in the radial direction of the photomagnetic recording medium.

68. The device according to claim 164, wherein said optical system comprises:

a condensing optical system for condensing the projected light from said light source on the photomagnetic recording medium, and condensing the reflected light from the photomagnetic recording medium; and

one set of at least two transparent plates, which are disposed on an optical path of the divergent light between said light source and said condensing optical system at an inclination with respect to an optic axis of said condensing optical system, for transmitting some and reflecting some of the light incident thereon; and

said light-receiving means comprises at least two photodetectors for receiving light that has been reflected or transmitted by respective ones of said transparent plates, the received light being part of the light that has been reflected by said optical photomagnetic medium and condensed by said condensing optical system.

69. The device according to claim 166, wherein at least one of said two photodetectors includes a plurality of light-receiving elements partitioned by partitioning lines along the track direction of track images formed on a light-receiving surface of said photodetector by the reflected light from said photomagnetic recording medium.

70. An optical pick-up device comprising:

a light source for emitting linearly polarized projected light;

an optical system for condensing the projected light from said light source on a photomagnetic recording medium, and condensing and guiding reflected light from the photomagnetic recording medium; and

light-receiving means for receiving some of the reflected light from the photomagnetic recording medium guided by said optical system and outputting a light-reception signal for producing at least a focusing error signal and a tracking error signal;

66

the direction of polarization of the projected light emitted by said light source and condensed by said optical system being inclined at an angle of 45° with respect to a track direction of the photomagnetic recording medium characterized in that;

the light source is disposed upon being rotated by 45° so that the direction of polarization of the projected light upon the photomagnetic recording medium is rendered parallel or perpendicular to the track direction.

71. The device according to claim 168, wherein said optical system comprises:

a condensing optical system for condensing the projected light from said light source on the photomagnetic recording medium, and condensing the reflected light from the photomagnetic recording medium; and

one set of at least two transparent plates, which are disposed on an optical path of the divergent light between said light source and said condensing optical system at an inclination with respect to an optic axis of said condensing optical system, for transmitting some and reflecting some of the light incident thereon; and

said light-receiving means comprises at least two photodetectors for receiving light that has been reflected or transmitted by respective ones of said transparent plates, the received light being part of the light that has been reflected by said optical photomagnetic medium and condensed by said condensing optical system.

72. The device according to claim 169, wherein at least one of said two photodetectors includes a plurality of light-receiving elements partitioned by partitioning lines along the track direction of track images formed on a light-receiving surface of said photodetector by the reflected light from said photomagnetic recording medium.

73. An optical pick-up device comprising:

a light source for emitting linearly polarized projected light;

an optical system for condensing the projected light from said light source on a photomagnetic recording medium, and condensing and guiding reflected light from the photomagnetic recording medium; and

light-receiving means for receiving some of the reflected light from the photomagnetic recording medium guided by said optical system and outputting a light-reception signal for producing at least a focusing error signal and a tracking error signal;

the direction of polarization of the projected light emitted by said light source and condensed by said optical system being inclined at an angle of 45° with respect to a track direction of the photomagnetic recording medium;

wherein said optical system is provided with a beam splitter for inclining, by 45°, the optical path of the projected light emitted by said light source, the direction of polarization of the light projected upon the photomagnetic recording medium being made parallel or perpendicular to the track direction.

74. The device according to claim 171, wherein said optical system comprises:

a condensing optical system for condensing the projected light from said light source on the photomagnetic recording medium, and condensing the reflected light from the photomagnetic recording medium; and

one set of at least two transparent plates, which are disposed on an optical path of the divergent light between said light source and said condensing optical system at an inclination with respect to an optic axis of said condensing optical system, for transmitting some and reflecting some of the light incident thereon; and

said light-receiving means comprises at least two photodetectors for receiving light that has been reflected or transmitted by respective ones of said transparent plates, the received light being part of the light that has been reflected by said optical photomagnetic medium and condensed by said condensing optical system.

75. The device according to claim 172, wherein at least one of said transparent plates is said beam splitter.

76. The device according to claim 171, wherein at least one of said two photodetectors includes a plurality of light-receiving elements partitioned by partitioning lines along the track direction of track images

67

formed on a light-receiving surface of said photodetector by the reflected light from said photomagnetic recording medium.

77. An optical pick-up device having a light-emitting element and a condensing optical system for condensing divergent light, which is emitted by the light-emitting element, on an optical recording medium and condensing reflected light from the optical recording medium, comprising:

at least two transparent plates, which are disposed on an optical path of the divergent light between said light-emitting element and said condensing optical system at an inclination with respect to an optic axis of said condensing optical system, for transmitting some and reflecting some of the light incident thereon;

at least two photodetectors for receiving light that has been transmitted or reflected by said transparent plates, the received light being part of the light that has been reflected by said optical recording medium and condensed by said condensing optical system; and

a holder for holding said at least two transparent plates;

said holder being formed to include holding faces to which said transparent plates are affixed, a first through-hole which opens to said holding faces and through which the incident light is passed, and second through-holes which open at one end to respective ones of said holding faces and through which is passed reflected light from the transparent plates affixed to said holding faces.

78. The device according to claim 175, wherein said transparent plates are affixed by being bonded to the holding faces of said holder at only one location each using a bonding agent.

79. The device according to claim 176, wherein point at which said transparent plate is affixed is decided in such a manner that direction of movement of a beam spot, which is formed on light-receiving surface of said photodetector by the reflected light from said transparent plate caused by displacement of said transparent plate owing to expansion and contraction of said bonding agent, and direction of displacement of said beam spot caused by tracking error, are made perpendicular to each other on said light-receiving surfaces.

80. A holder for an optical pick-up device, said holder having a holding block;

said holding block having a first through-hole through which incident light is passed;

said holding block having two end faces each of which is formed to include a holding face inclined with respect to said first through-hole, said first through-hole opening at each end to a respective one of said holding faces;

said holding block having second through-holes each of which opens at one end to a respective one of said holding faces and through which is passed the reflected light from a transparent plate affixed to a respective one of said holding faces.

81. The holder according to claim 178, wherein said first through-hole is substantially perpendicular to each of said second through-holes.

82. The holder according to claim 178, wherein said transparent plate is affixed to said holding face at only one point using a bonding agent.

83. The device according to claim 180, wherein the point at which said transparent plate is affixed is decided in such a manner that direction of movement of a beam spot, which is formed on a light-receiving surface of a photodetector by the reflected light from said transparent plate, caused by displacement of said transparent plate owing to expansion and contraction of said bonding agent, and direction of displacement of said beam spot caused by tracking error, are made perpendicular to each other on said light-receiving surface.

84. An optical pick-up device having a light-emitting element and a condensing optical system for condensing divergent light, which is emitted by the light-emitting element, on an optical recording medium and condensing reflected light from the optical recording medium, comprising:

at least two transparent plates, which are disposed on an optical path of the divergent light between said light-emitting element and said condensing optical system at an inclination with respect to an optic axis of said condensing optical system, for transmitting some and reflecting some of the light incident

68

thereon;

at least two photodetectors for receiving light that has been transmitted or reflected by said transparent plates, the received light being part of the light that has been reflected by said optical recording medium and condensed by said condensing optical system; and

a holder for holding at least two elements from among said at least two transparent plates and a lens contained in said condensing optical system;

wherein said holder and said elements held on said holder are made of the same material or of materials having substantially equal coefficients of thermal expansion.

85. The device according to claim 182, wherein said holder and at least two elements from among said at least two transparent plates and said lens are integrally formed.

86. The device according to claim 182, wherein said holder is formed by a frame wherein said transparent plates or said lens serve as end faces or a partitioning wall.

87. The device according to claim 182, wherein said holder is formed to include holding face to which said transparent plate is affixed, a first through-hole which opens to said holding face and through which the incident light is passed, and second through-hole which open at one end to said holding face and through which is passed reflected light from the transparent plate affixed to said holding face.

88. A holder for an optical pick-up device wherein at least two elements from among at least two transparent plates and a lens are integrally formed with a frame which holds these elements.

89. The holder according to claim 186, wherein said transparent plates or said lens serve as end faces or a partitioning wall of said frame.

90. An optical pick-up device having a light-emitting element and a condensing optical system for condensing divergent light, which is emitted by the light-emitting element, on an optical recording medium and condensing reflected light from the optical recording medium, comprising:

at least two transparent plates, which are disposed on an optical path of the divergent light between said light-emitting element and said condensing optical system at an inclination with respect to an optic axis of said condensing optical system, for transmitting some and reflecting some of the light incident thereon;

at least two photodetectors for receiving light that has been transmitted or reflected by said transparent plates, the received light being part of the light that has been reflected by said optical recording medium and condensed by said condensing optical system; and

a holding block for holding at least said two transparent plates and said two photodetectors, said holding block being arranged so as to be free to move along the optic axis of said condensing optical system.

91. The device according to claim 188, wherein said holding block is provided with a photodetector for receiving the light that has been emitted by said light-emitting element and reflected by said transparent plate and outputting a signal for controlling intensity of the emitted light from said light-emitting element.

92. An optical pick-up device having a light source, an optical system for condensing projected light from the light source to project the light upon an optical recording medium, and guiding and condensing reflected light from the optical recording medium, and light-receiving means for receiving reflected light, from the optical recording medium, guided by the optical system;

said optical system being provided with deflecting means for deflecting optical paths of the projected light and reflected light substantially at right angles;

said deflecting means comprising a concave reflector for condensing and deflecting collimated light within said optical system to project the condensed light upon the optical recording medium, and deflecting and collimating the reflected light from the optical recording medium.

93. The device according to claim 190, wherein said optical system comprises:

a collimating lens for converting the projected light from said light source into collimated light, directing the collimated light toward said concave reflector and condensing reflected collimated light from said concave reflector; and

a transparent plate disposed between said light source and said collimating lens at an inclination with respect to the optic axis for transmitting some and reflecting some of the light incident thereon.

94. The device according to claim 191, wherein said light-receiving means includes a photodetector for receiving the light reflected or transmitted by said transparent plate;

a tracking error signal and a focusing error signal being produced based upon a light-reception signal from said photodetector.

95. The device according to claim 194, wherein said arm is supported by said rotary shaft in the proximity of the position of the center of gravity thereof.

96. The device according to claim 190, comprising:

a stationary portion including said light source, a portion of said optical system which includes said collimating lens, and said light-receiving means; and

a movable portion, which includes said concave reflector, driven by an actuator for performing track access, tracking control and focusing control.

97. The device according to claim 193, further comprising an arm freely rotatably supported on a rotary shaft;

said stationary portion being provided on one end portion of said arm, and said movable portion being provided on another end of said arm.

98. An optical pick-up device comprising:

an arm freely rotatably supported on a rotary shaft;

a stationary portion provided on one end portion of said arm; and

a movable portion provided on another end of said arm and driven by an actuator for performing track access, tracking control and focusing control;

said stationary portion including a light source, a first optical system for converting projected light from said light source into collimated light to apply the collimated light to said movable portion, and condensing reflected collimated light from said movable portion, and a photodetector for receiving reflected light condensed by said first optical system; and

said movable portion including a second optical system for condensing, and for deflecting substantially at right angles, the collimated light provided by said stationary portion to project the light upon an optical recording medium, and deflecting, substantially at right angles, reflected light from said optical recording medium, converting this light into collimated light and applying the collimated light to said stationary portion;

said arm being supported by said rotary shaft in the proximity of the position of the center of gravity thereof.

99. The device according to claim 196, wherein said second optical system has an uprighting mirror and an objective lens.

100. The device according to claim 196, wherein said second optical system has a concave reflector.

101. The device according to claim 196, wherein said first optical system includes:

a collimating-lens for converting the projected light from said light source into collimated light, directing the collimated light toward said movable portion and condensing reflected collimated light from said movable portion; and

a transparent plate disposed between said light source and said collimating lens at an inclination with respect to the optic axis for transmitting some and reflecting some of the light incident thereon.

102. The device according to claim 199, wherein said photodetector receives the light reflected or transmitted by said transparent plate, a tracking error signal and a focusing error signal being produced based upon a light-reception signal from said photodetector.

103. An optical pick-up device comprising:

a light-emitting element;

a condensing optical system for condensing divergent light, which is emitted by said light-emitting element, on an optical recording medium and condensing reflected light from the optical recording medium;

beam splitter means disposed in said condensing optical system for transmitting some and reflecting some of the light incident thereof;

at least two photodetectors for receiving the light transmitted or reflected by said beam splitter means, the received light being part of the light incident upon said condensing optical system following reflection by said optical recording medium;

a case for internally accommodating and holding said light-emitting element, said condensing optical system inclusive of said beam splitter means, and said photodetectors; and

stray-light adjusting means formed on an inner wall surface of said case confronting at least one of said photodetectors for adjusting a quantity of stray light incident upon said photodetector upon being reflected by said inner wall surface.

104. The device according to claim 201, wherein quantities of stray light incident upon said at least two photodetectors are adjusted by said stray-light adjusting means so as to become approximately equal.

105. The device according to claim 201, wherein said stray-light adjusting means is provided on an inner wall surface confronting whichever of said at least two photodetectors has a greater quantity of stray light incident thereon, the quantity of stray light incident upon this photodetector being reduced by said stray-light adjusting means.

106. The device according to claim 202, further comprising means for producing a focusing error signal based upon output signals from said two photodetectors.

107. A stray-light preventing device comprising:

a light source;

a beam splitter for reflecting some incident light impinging thereon;

a photodetector for receiving reflected light from said beam splitter;

a case in which said light source, said beam splitter and said photodetector are disposed; and

a stray-light obstructing portion provided on an inner wall surface of said case confronting said photodetector for reducing reflected light from the inner wall surface or preventing the reflected light from impinging upon said photodetector.

108. An optical pick-up device comprising:

a light-emitting element;

a condensing optical system for condensing divergent light, which is emitted by said light-emitting element, on an optical recording medium and condensing reflected light from the optical recording medium;

beam splitter means disposed in said condensing optical system for transmitting some and reflecting some of the light incident thereof;

at least two photodetectors for receiving the light transmitted or reflected by said beam splitter means, the received light being part of the light incident upon said condensing optical system following reflection by said optical recording medium;

means for producing a focusing error signal based upon output signals from said two photodetectors; and

offset correcting means for correcting an offset, which appears in the focusing error signal, using an output signal from at least one of said two photodetectors.

109. The device according to claim 206, wherein said offset correcting means adds or subtracts a signal relating to the output signal from said at least one of said two photodetectors to or from the focusing error signal.

110. An offset correcting device comprising:

two light-receiving means for receiving some reflected light from an optical recording medium and generating light-reception signals that are for producing a focusing error signal;

means for producing the focusing error signal based upon the light-reception signals from said two light-receiving means; and

means for correcting an offset quantity, which is included in the focusing error signal, using an output signal from either of said two light-receiving means.

111. A forcible focusing method in an optical pick-up device, said method comprising the steps of:

splitting reflected light from an optical recording medium into two light beams and condensing the light beams;

receiving the two beams of reflected light by respective ones of two photodetectors disposed in front of and in back of focal points of the split and condensed beams of reflected light when these beams of light are in a properly focused state, each of said photodetectors having a light-receiving surface partitioned into three sections;

mutually comparing light-reception signals from central sections of the light-receiving surfaces of said two photodetectors, thereby deciding which of the light-reception signals has the lower level; and

outputting the decided light-reception signal as a pull-in signal.

112. The method according to claim 209, wherein a focusing error signal is produced by calculating the difference between (a) the difference between the sum of light-reception signals from the sections of the light-receiving surface on both sides of one of said photodetectors and the light-reception signal from the central section of the light-receiving surface of said one photodetector, and (b) the difference between the sum of light-reception signals from the sections of the light-receiving surface on both sides of the other of said photodetectors and the light-reception signal from the central section of the light-receiving surface of said other photodetector.

113. The method according to claim 209, wherein a focusing error signal is produced by calculating the difference between the sum of light-reception signals from the sections of the light-receiving surface on both sides of one of said photodetectors and the sum of light-reception signals from the sections of the light-receiving surface on both sides of the other of said photodetectors.

114. A forcible focusing device in an optical pick-up device, said forcible focusing device comprising:

beam splitter means for splitting reflected light from an optical recording medium into two light beams;

two photodetectors, each of which has a light-receiving surface partitioned into three sections, disposed in front of and in back of focal points of the reflected light, split and condensed by said beam splitter means, when these beams of light are in a properly focused state;

comparing means for mutually comparing light-reception signals from central sections of the light-receiving surfaces of said two photodetectors, thereby deciding which of the light-reception signals has the lower level; and

switching means for selecting, and outputting as a pull-in signal, the signal decided by said comparing means.

115. The device according to claim 212, further comprising means for producing a focusing error signal by calculating the difference between (a) the difference between the sum of light-reception signals from the sections of the light-receiving surface on both sides of one of said photodetectors and the light-reception signal from the central section of the light-receiving surface of said one photodetector, and (b) the difference between the sum of light-reception signals from the sections of the light-receiving surface on both sides of the other of said photodetectors and the light-reception signal from the central section of the light-receiving surface of said other photodetector.

116. The device according to claim 212, further comprising means for producing a focusing error signal by calculating the difference between the sum of light-reception signals from the sections of the light-receiving surface on both sides of one of said photodetectors and the sum of light-reception signals from the sections of the light-receiving surface on both sides of the other of said photodetectors.

117. A photodetector for detecting tracking error, comprising five light-receiving elements arrayed in a prescribed direction.

118. A tracking-error detecting device comprising:

a photodetector disposed at a position which receives reflected light from a photomagnetic recording medium, said photodetector having at least five light-receiving elements arrayed in a direction corresponding to a track of the photomagnetic recording medium; and

an arithmetic circuit, to which output signals from light-receiving elements of said photodetector other than those situated at a central portion and at outermost sides are inputted, for outputting a tracking error signal which represents a difference between an output signal from the light-receiving element on a right side of the central portion and an output signal from the light-receiving element on a left side of the central portion.

119. A tracking-error detecting method comprising the steps of:

disposing a photodetector, which has at least five light-receiving elements arrayed in a direction corresponding to a track of a photomagnetic recording medium, at a position which receives reflected light from the optical recording medium;

accepting output signals from light-receiving elements of said photodetector other than those situated at a central portion and at outermost sides;

calculating a difference between an output signal from the light-receiving element on a right side of the central portion and an output signal from the light receiving element on a left side of the central portion; and

outputting a tracking error signal represented by this difference.

120. A focusing-error detecting device comprising:

an optical system, having a beam splitter and a condensing lens, for splitting reflected light from a photomagnetic recording medium into at least two light beams and condensing the light beams;

a first photodetector, which has at least five light-receiving elements, disposed at a position nearer to the photomagnetic recording medium than a point at which one of the split light beams converges;

a second photodetector, which has at least five light-receiving elements, disposed at a position farther from the photomagnetic recording medium than a point at which another one of the split light beams converges; and

an arithmetic circuit for comparing the difference between an output signal from a light-receiving element at a central portion of said first photodetector and the sum of output signals from light-receiving elements other than that at the central portion of said first photodetector, with the difference between an output signal from a light-receiving element at a central portion of said second photodetector and the sum of output signals from light-receiving elements other than that at the central portion of said second photodetector, and outputting the result of the comparison as a focusing error signal.

121. A focusing-error detecting method utilizing the beam-size method, comprising the steps of:

splitting reflected light from a photomagnetic recording medium into a least two light beams and condensing the light beams;

disposing two photodetectors, each of which has at least five light-receiving elements, in back of and in front of focal points of the two condensed beams of light;

comparing signals representing beam sizes obtained by output signals from respective ones of the photodetectors; and

obtaining a focusing error signal represented by results of the comparison.

122. An optical head for photomagnetic recording/playback, comprising:

a light source for emitting linearly polarized light;

a first condensing optical system for condensing the light emitted by said light source upon a photomagnetic recording medium;

a second condensing optical system for condensing reflected light from the photomagnetic recording medium;

a polarization light beam splitter for splitting the reflected light from the photomagnetic recording medium into two polarized light components whose directions of polarization are mutually perpendicular; and

two photodetectors disposed in the proximity of focal points of the two polarized light components split and condensed;

a photodetector having at least five light-receiving elements arrayed in a direction corresponding to a track of the photomagnetic recording medium being used as at least one of said two photodetectors.

**123.** The optical head according to claim 220, wherein said first condensing optical system is used also as said second condensing optical system.

**124.** The optical head according to claim 220, further comprising an arithmetic circuit, to which output signals from light-receiving elements of said photodetector, which has said at least five light-receiving element, other than those situated at a central portion and at outermost sides are inputted, for outputting a tracking error signal represented by a difference between an output signal from the light-receiving element on one side of the central portion and an output signal from the light-receiving element on the other side of the central portion.

**125.** The optical head according to claim 220, further comprising an arithmetic circuit for outputting a read signal represented by results of comparing the output signals from said two photodetectors.

**126.** The optical head according to claim 220, wherein one of said two photodetectors is constituted by a first photodetector, which has at least five light-receiving elements, disposed at a position nearer the photomagnetic medium than a focal point of one beam of light polarized, split and condensed, and the other of said two photodetectors is constituted by a second photodetector, which has at least five light-receiving elements, disposed at a position farther from the photomagnetic medium than a focal point of the other beam of light polarized, split and condensed;

and further comprising an arithmetic circuit for comparing the sum of an output signal from the light-receiving element at the central portion of said first photodetector and output signals from the light-receiving elements of said second photodetector other than at the central portion thereof, with the sum of an output signal from the light-receiving element at the central portion of said second photodetector and output signals from the light-receiving elements of said first photodetector other than at the central portion thereof, and outputting a focusing error signal represented by the results of comparison.

Fig. I

Fig. 2

Fig.3

Fig.4

EP 0 492 515 A2

Fig.5

Fig.6

Fig.7

Fig. 8

Fig.9

Fig.10

14

21

Fig.12

31

21A

21

25

# Fig.11

TRACKING
ERROR SIGNAL

FOCUSING
ERROR SIGNAL

READ SIGNAL

Fig.13

Fig.14

# Fig.15

# Fig.16

Fig.17

TO
HOST COMPUTER

# Fig. 18

Fig.19

Fig.20

Fig.21a

Fig.21b

Fig.21c

# Fig.22a

# Fig.22b

EP 0 492 515 A2

# Fig. 23

Fig.24

Fig. 25

Fig.26

# Fig. 27

READ SIGNAL

TRACKING ERROR SIGNAL

FOCUSING ERROR SIGNAL

82
83
81
87
84
86
85

21
21d SP1
21a
21b
SP2
21e
21f
21c
21B
21A

98

EP 0 492 515 A2

EP 0 492 515 A2

## Fig.28

FOCUSING
ERROR SIGNAL

Fig. 29

Fig. 30

# Fig.31

Fig.32

EP 0 492 515 A2

Fig.33

EP 0 492 515 A2

TRACK DIRECTION

Fig. 34

EP 0 492 515 A2

TRACKING
ERROR SIGNAL

46

21d   21c  21b  21a   21

SP₁₁

21A

SP₁₂   21e

21B

107

109

READ
SIGNAL

101

103

105

FOCUSING
ERROR SIGNAL

104

22a

SP₂₁

22b

22A

102

22c

TRACK
DIRECTION

SP₂₂

22

22d

22e

22B

108

Fig.35

Fig.36

TRACK DIRECTION

21

21c
21a
21b
21e
21f
21d
SP₁

22b
22a
TRACK DIRECTION
22c
22d
22e
22f
SP₂
22

111
112
113
+
+
+
−
READ SIGNAL

Fig.37

Fig.38

Fig.39

Fig.40

Fig.41

Fig.42

Fig.43

111

## Fig.44

Fig. 45

Fig.46

Fig. 47

Fig.48

Fig. 49

Fig.50

Fig.51

Fig.52

Fig.53

Fig.54

## Fig.55

TRACK DIRECTION

21

21a
21b
21c

21d
21e
21f

SP₁₁     SP₁₂

## Fig.56

TRACK DIRECTION

21

21d

21e

SP₁₁

SP₁₂

21a  21b  21c

Fig. 57

EP 0 492 515 A2

Fig.58

Fig.59

Fig. 60

Fig.61

EP 0 492 515 A2

Fig.62

EP 0 492 515 A2

## Fig.63

21a  21b  21c                    21

SP₁₁        SP₁₂

21d  21e  21f

## Fig.64

21b   21c    21    21d    TRACK DIRECTION

21a

SP₁₁              21e

SP₁₂

## Fig.66

21

SP₁      21a

21b

21c

Fig.65

Fig.67

Fig.68

## Fig.69

Fig. 70

Fig.71

EP 0 492 515 A2

Fig.72

Fig.73

Fig.74

TO
PHOTODETECTOR 22

Fig.75

130  F  15
F5

E
22b
D
22a  22
22c  49

TRACKING
ERROR SIGNAL

14

Fig.78

23

14  22,32
15
31  142
141  21  140

G

## Fig. 76

## Fig. 77

Fig. 79

Fig.80

Fig.81

Fig.82

EP 0 492 515 A2

# Fig.83

EP 0 492 515 A2

Fig.84

EP 0 492 515 A2

Fig.85

Fig.86

Fig.87

21

14

11

182

Fig.88a

184

Fig.88b

185

Fig.88c

186

## Fig.89

FOCUSING
ERROR SIGNAL

## Fig.90

# Fig.91

FOCUSING
ERROR SIGNAL

EP 0 492 515 A2

# Fig.92

# Fig.93a

# Fig.93b

Fig.94

Fig.95

FOCUSING PULL-IN
SIGNAL FD

EP 0 492 515 A2

# Fig.96

153

## Fig.97a

## Fig.97b

Fig.98

TRACKING
ERROR SIGNAL

## Fig.99

# Fig.100

READ
SIGNAL

FOCUSING
ERROR SIGNAL

# Fig.101

PRIOR ART

EP 0 492 515 A2

# Fig.102

PRIOR ART

EP 0 492 515 A2

## Fig.103a  PRIOR ART

TRACKING
ERROR SIGNAL

245a

245

246

O

a

b

245b

## Fig.103b  PRIOR ART

245a

245

O

a

b

245b